# EUROPEAN PATENT APPLICATION

(11) **EP 3 153 973 A1**
(43) Date of publication of application: **12.04.2017**
(21) Application number: 15803179.9
(22) Date of filing: 22.05.2015
(51) Int. Cl.: G06F 13/00, G06T 1/00, H04M 1/00, H04M 11/00

(54) **INFORMATION PROCESSING DEVICE AND METHOD, AND PROGRAM**

(30) Priority: 06.06.2014 JP 2014118201
(71) Applicant: Sony Corporation, Tokyo 108-0075 (JP)
(72) Inventor: KII Manabu, Tokyo 108-0075 (JP); HOSODA Yasuhide, Tokyo 108-0075 (JP)
(74) Representative: MFG Patentanwälte Meyer-Wildhagen Meggle-Freund Gerhard PartG mbB
(86) International application number: PCT/JP2015/064676
(87) International publication number: WO 2015/186534

(57) **Abstract**

The present disclosure relates to information processing device, method, and program for improving the power of expression in communication.

Both of a first indication of a history of communication between users via the information processing device and a second indication of a history of communication between one of the users and a virtual character configured to respond on behalf of another one of the users via the information processing device are, on a display unit of the information processing device, displayed with the first and second indications being arranged in the identical chronological order. The present disclosure is applicable to an information processing device, for example.

## Description

### TECHNICAL FIELD

The present disclosure relates to information processing device, method, and program. In particular, the present disclosure relates to information processing device, method, and program for improving the power of expression in communication.

### BACKGROUND ART

In addition to electronic mails and electronic bulletin boards, various systems and services such as social networking services (SNSs) and chatting systems have been recently in widespread use as tools for communication among individual users via a network such as the Internet.

A communication tool utilizing not only text data but also various types of data such as images and sound has been developed as communication means (see, e.g., Patent Document 1). For example, in a network system of Patent Document 1, a chatting system for exchanging both of a message and an image of an avatar reflecting an expression of a user is provided.

### CITATION LIST

### PATENT DOCUMENT

Patent Document 1: Japanese Patent Application Laid-Open No. 2013-9073

### SUMMARY OF THE INVENTION

### PROBLEMS TO BE SOLVED BY THE INVENTION

However, with improvement of an information processing technique, communication facilities, etc., the demand for the communication tool has been increased. The method described in Patent Document 1 is not enough as a communication method, and other methods have been demanded.

The present disclosure has been made in view of the above-described situation, and is intended to improve the power of expression in communication.

### SOLUTIONS TO PROBLEMS

One aspect of the present technology is an information processing device including: a display control unit configured to display, on a display unit, both of a first indication of a history of communication between users and a second indication of a history of communication between one of the users and a virtual character configured to respond on behalf of another one of the users, the first and second indications being arranged in an identical chronological order.

The history of communication between the users may include a history of communication between a first user as a predetermined user and other user than the first user, and the history of communication between the one of the users and the virtual character may include a history of communication between the first user and a virtual character corresponding to the other user, or a history of communication between a virtual character corresponding to the first user and the other user.

The first indication may include text information indicating a message sent from the first user to the other user or a message sent from the other user to the first user, and the second indication may include text information indicating a message sent from the first user to the virtual character corresponding to the other user or a message sent from the virtual character corresponding to the other user to the first user, or text information indicating a message sent from the virtual character corresponding to the first user to the other user or a message sent from the other user to the virtual character corresponding to the first user.

Each communication history may further include a third indication expressing a feeling assigned in exchange of each message, and the display control unit may display, on the display unit, each message and a feeling expression assigned in exchange of each message.

The feeling expression may include an expression of a facial image of a user or a virtual character as a message sender, and the display control unit may display, on the display unit, each message and the facial image of the user or the virtual character as the message sender, the facial image expressing the feeling corresponding to each message.

The feeling expression may include a staging image expressing the feeling corresponding to each message, and the display control unit may display, on the display unit, each message and the staging image expressing the feeling corresponding to each message.

The feeling expression may include a speech balloon in a shape expressing the feeling corresponding to each message, and the display control unit may display, on the display unit, each message and the speech balloon in the shape expressing the feeling corresponding to each message.

The feeling expression may be based on information obtained by sensing of the first user or the other user as a message sender in exchange of each message.

The display control unit may display, on the display unit, the message sent from the first user to the other user or the virtual character corresponding to the other user and the message sent from the virtual character corresponding to the first user to the other user such that these messages are distinguishable from each other, and may display, on the display unit, the message sent from the other user to the first user or the virtual character corresponding to the first user and the message sent from the virtual character corresponding to the other user to the first user such that these messages are distinguishable from each other.

A request receiving unit configured to receive a request for sorting each message may be further included, and when the request receiving unit receives the request for sorting each message, the display control unit may sort each message according to a message sorting condition received by the request receiving unit, and may display each message on the display unit.

A request receiving unit configured to receive a request for selecting one of the messages may be further included, and when the request receiving unit receives the request for selecting the one of the messages, the display control unit may select the one of the messages according to a message selection condition received by the request receiving unit, and may display the selected message on the display unit.

A communication processing unit configured to exchange each message by communication with other information processing device via a communication unit to realize communication between a user of the information processing device itself and a user of the other information processing device, communication between the user of the information processing device itself and a virtual character corresponding to the user of the other information processing device, and communication between a virtual character corresponding to the user of the information processing device itself and the user of the other information processing device unit may be further included, and the display control unit may display, on the display unit, both of the first indication of a history of communication between the user of the information processing device itself and the user of the other information processing device by the communication processing unit, and the second indication of a history of communication between the user of the information processing device itself and the virtual character corresponding to the user of the other information processing device or a history of communication between the virtual character corresponding to the user of the information processing device itself and the user of the other information processing device by the communication processing unit, the first and second indications being arranged in the identical chronological order.

The communication processing unit may realize the communication in a state in which a communication screen as a screen for the communication is displayed on the display unit, and the display control unit may display, on the display unit, a history display screen different from the communication screen, and displays both of the first and second indications on the history display screen with the first and second indications being arranged in the identical chronological order.

The communication processing unit may display, on the communication screen, a facial image of the user of the other information processing device or the virtual character corresponding to the user of the other information processing device as a communication partner, a single message sent from the user of the other information processing device or the virtual character corresponding to the user of the other information processing device, and a single message sent to the user of the other information processing device or the virtual character corresponding to the user of the other information processing device.

The communication processing unit may further display, on the communication screen, a feeling expression assigned to each message displayed on the communication screen.

On the communication screen, the communication processing unit may display, as the feeling expression assigned to the message sent from the user of the other information processing device or the virtual character corresponding to the user of the other information processing device, a facial image of the user of the other information processing device or the virtual character corresponding to the user of the other information processing device, the facial image expressing the feeling corresponding to the message.

At an optional position on the communication screen, the communication processing unit may display, as the feeling expression assigned to the message sent from the user of the other information processing device or the virtual character corresponding to the user of the other information processing device, a staging image expressing the feeling corresponding to the message.

In a region of the communication screen where the facial image of the user of the other information processing device or the virtual character corresponding to the user of the other information processing device is displayed, the communication processing unit may display, as the feeling expression assigned to the message sent from the user of the information processing device itself or the virtual character corresponding to the user of the information processing device itself, a staging image expressing the feeling corresponding to the message.

In addition, one aspect of the present technology is an information processing method including: displaying, on a display unit, both of a first indication of a history of communication between users and a second indication of a history of communication between one of the users and a virtual character configured to respond on behalf of another one of the users, the first and second indications being arranged in an identical chronological order.

Furthermore, one aspect of the present technology is a program for causing a computer to function as a display control unit configured to display, on a display unit, both of a first indication of a history of communication between users and a second indication of a history of communication between one of the users and a virtual character configured to respond on behalf of another one of the users, the first and second indications being arranged in an identical chronological order.

According to one aspect of the present technology, both of the first indication of the history of communication between the users and the second indication of the history of communication between one of the users and the virtual character configured to respond on behalf of another one of the users are, on the display unit, displayed with the first and second indications being arranged in the identical chronological order.

### EFFECTS OF THE INVENTION

According to the present disclosure, information on communication can be processed. In particular, the power of expression in communication can be improved.

### BRIEF DESCRIPTION OF DRAWINGS

Fig. 1 is a diagram for describing an overview of a communication system.
Fig. 2 is a diagram of a main configuration example of the communication system.
Fig. 3 is a block diagram of a main configuration example of a user management server etc.
Fig. 4 is a function block diagram of a function example implemented by each server.
Fig. 5 is a block diagram of a main configuration example of a terminal device.
Fig. 6 is a function block diagram of function examples implemented by the terminal device.
Fig. 7 is a diagram for describing an overview of default setting.
Fig. 8 is a flowchart for describing an example of a flow in each type of processing for default setting.
Fig. 9 is a view for describing a screen example.
Fig. 10 is a view for describing a screen example.
Fig. 11 is a view for describing a screen example.
Fig. 12 is a view for describing a screen example.
Fig. 13 is a view for describing a screen example.
Fig. 14 is a view for describing an example of a forum screen.
Fig. 15 is a view for describing an overview of processing for a forum.
Fig. 16 is a flowchart for describing an example of a flow in processing for the forum screen.
Fig. 17 is a flowchart for describing an example of a flow in processing for the forum screen.
Fig. 18 is a flowchart for describing an example of a flow in processing for the forum screen.
Fig. 19 is a diagram for describing an overview of communication between users.
Fig. 20 is a flowchart for describing an example of a flow in processing for communication between the users.
Fig. 21 is a view for describing a screen example.
Fig. 22 is a view for describing a configuration example of a screen.
Fig. 23 is a view for describing an example of an input screen.
Fig. 24 is view for describing examples of a staging image.
Fig. 25 is a view for describing display examples of the staging image.
Fig. 26 is a diagram for describing an overview of processing for communication with a virtual character.
Fig. 27 is a flowchart for describing an example of a flow in the processing for communication with the virtual character.
Fig. 28 is a flowchart for describing an example of a flow in processing for using a stamp image in communication with the virtual character.
Fig. 29 is a view of an example of a stamp image input state.
Fig. 30 is a table for describing an example of limitations on feeling expressions depending on the number of stamps.
Fig. 31 is a diagram for describing an overview of processing for communication between another user and a virtual character.
Fig. 32 is a flowchart for describing an example of a flow in the processing for communication between another user and the virtual character.
Fig. 33 is a view for describing a screen example.
Fig. 34 is a view for describing screen examples.
Fig. 35 is a view for describing screen examples.
Fig. 36 is a diagram for describing an overview of processing for setting, learning, etc.
Fig. 37 is a flowchart for describing an example of a flow in processing for block mode setting.
Fig. 38 is a flowchart for describing an example of a flow in processing for block mode deactivation.
Fig. 39 is a flowchart for describing an example of a flow in processing for friend deletion.
Fig. 40 is a flowchart for describing an example of a flow in processing for log learning.
Fig. 41 is a view for describing an example of a history display screen.
Fig. 42 is a view for describing an example of the history display screen.
Fig. 43 is a flowchart for describing an example of a flow in processing for history displaying.
Fig. 44 is a view of examples of an icon.

### MODE FOR CARRYING OUT THE INVENTION

Modes (hereinafter referred to as "embodiments") for carrying out the present disclosure will be described below. Note that description will be made in the following order.

### 1. First Embodiment (Communication System)

### <1. First Embodiment>

### <Power of Expression by Communication Tool>

Typically, as in, e.g., the system described in Patent Document 1, various systems and services have been in widespread use as tools for communication among individual users via a network such as the Internet.

However, previous systems and communication methods are not enough for these communication tools, and other methods have been further demanded. For example, it has been demanded for such methods to provide a richer power of expression.

The power of expression in communication influences preference and entertainment in communication. Richer and a wider variety of expression results in a higher degree of enjoyment in user's communication. That is, preference and entertainment in communication are lowered as the power of expression in communication is lowered. This lowers the level of user satisfaction and a user interest. As a result, motivation to utilize the communication tools might be lowered. Moreover, the users might adapt themselves to an existing power of expression over time, leading to a lower level of satisfaction and a lower interest. For these reasons, a greater power of expression has been demanded for the communication tools in association with, e.g., improvement of an information processing technique and communication environment.

### <Overview of Communication System>

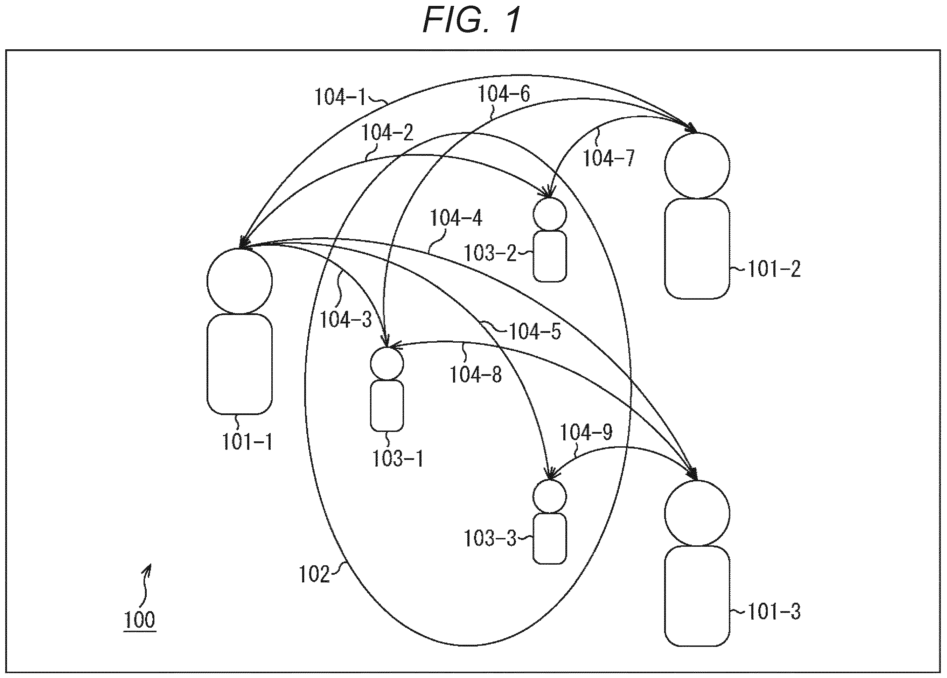

Fig. 1 is a diagram for describing an overview of a communication system as an embodiment of a system realizing communication, the present technology being applied to the communication system.

A communication system 100 illustrated in Fig. 1 is a system realizing communication among users (users 101-1 to 101-3) and communication among each user and virtual characters (virtual characters 103-1 to 103-3) provided in a virtual space 102, for example.

As described later, the virtual space 102 is a virtual space (an unreal space) implemented by a server, an information processing device, or a network, for example. Each of the virtual characters 103-1 to 103-3 is a virtual character (an unreal character) set corresponding to an associated one of the users 101-1 to 101 in the virtual space 102.

When description is made below without the need for distinguishing the users 101-1 to 101-3 from each other, the users 101-1 to 101-3 will be referred to as "users 101." Moreover, when description is made below without the need for distinguishing the virtual characters 103-1 to 103-3 from each other, the virtual characters 103-1 to 103-3 will be referred to as "virtual characters 103."

For example, the user 101-1 can utilize the communication system 100 to communicate (see a double-headed arrow 104-1) with the user 101-2. Moreover, the user 101-1 can utilize the communication system 100 to communicate (see a double-headed arrow 104-2) with the virtual character 103-2 corresponding to the user 101-2 in the virtual space 102, for example. Further, the user 101-1 can utilize the communication system 100 to communicate (see a double-headed arrow 104-3) with the virtual character 103-1 corresponding to the user 101-1 in the virtual space 102, for example.

Similarly, the user 101-1 can utilize the communication system 100 to communicate (see a double-headed arrow 104-4) with the user 101-3. Moreover, the user 101-1 can similarly utilize the communication system 100 to communicate (see a double-headed arrow 104-5) with the virtual character 103-3 corresponding to the user 101-3 in the virtual space 102, for example.

That is, the user 101-1 can utilize the communication system 100 to similarly communicate with each of other users (or the virtual characters corresponding to other users).

Similarly, the user 101-2 can utilize the communication system 100 to communicate (see a double-headed arrow 104-6) with the virtual character 103-1 corresponding to the user 101-1 in the virtual space 102. Moreover, the user 101-2 can utilize the communication system 100 to communicate (see a double-headed arrow 104-7) with the virtual character 103-2 corresponding to the user 101-2 in the virtual space 102, for example.

Similarly, the user 101-3 can utilize the communication system 100 to communicate (see a double-headed arrow 104-8) with the virtual character 103-1 corresponding to the user 101-1 in the virtual space 102. Moreover, the user 101-3 can utilize the communication system 100 to communicate (see a double-headed arrow 104-9) with the virtual character 103-3 corresponding to the user 101-3 in the virtual space 102, for example.

Although not shown in the figure, the user 101-2 (or the virtual character 103-2) and the user 101-3 (or the virtual character 103-3) can communicate with each other.

That is, each user 101 can utilize the communication system 100 to communicate with one or more of other users 101, communicate with one or more virtual characters 103 corresponding to one or more of other users 101, and communicate with the virtual character 103 corresponding to the user 101 oneself, for example.

As described above, not only communication among the users 101 but also communication between the user(s) 101 and the virtual character(s) 103 can be performed. Thus, even when a certain user 101 cannot perform communication, the virtual character 103 corresponding to such a user 101 can perform communication on behalf of the user 101. Thus, each user 101 can perform communication under a wider variety of situations during a wider variety of time periods. That is, convenience of the communication system 100 can be improved. In addition, each virtual character 103 can make a response without a request from the user to which such a virtual character 103 corresponds. Thus, the user 101 does not always completely match (not always identical) with the virtual character 103, as a communication partner, corresponding to such a user 101. That is, there is a high probability that a responding method, i.e., a communication method, varies between the user 101 and the virtual character 103 corresponding to such a user 101. Thus, the virtual characters 103 are provided so that the communication system 100 can realize a wider variety of communication. That is, the power of expression in communication can be improved.

Needless to say, the number of users 101 of the communication system 100 (i.e., the number of virtual characters 103) is optional. Such a number may be two or less, or may be four or more.

Communication contents are optional. Description will be made below, supposing that messages are, as communication, mainly exchanged using text data. Moreover, description will be also made, supposing that other data than text data, such as images and sound, can be optionally exchanged.

### <Description of Communication System>

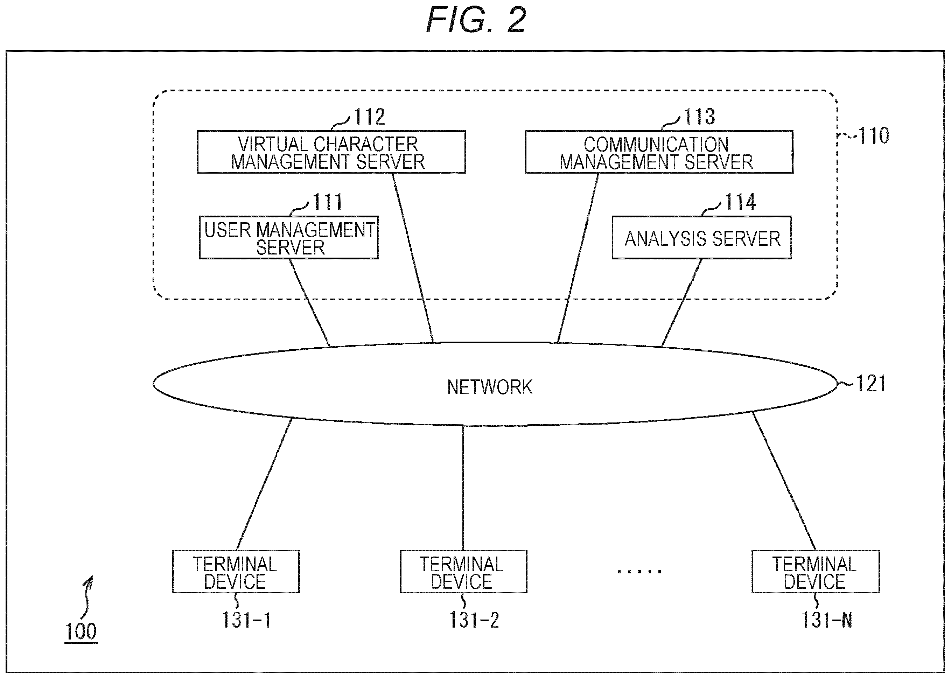

Fig. 2 is a diagram of an example of a main physical configuration of the communication system 100 described with reference to Fig. 1.

As illustrated in Fig. 2, the communication system 100 includes each server such as a user management server 111, a virtual character management server 112, a communication management server 113, and an analysis server 114; a network 121; and terminal devices 131-1 to 131-N ("N" is an optional natural number).

The user management server 111 is configured to provide a service for managing information on the users 101 of the communication system 100. The virtual character management server 112 is configured to provide a service for managing information on the virtual characters 103 set corresponding respectively to the users 101 in the virtual space 102 of the communication system 100. The communication management server 113 is configured to provide a service for managing communication between the user(s) 101 and the virtual character(s) 103 of the communication system 100. The analysis server 114 is configured to provide a service for analyzing the contents of communication between the user(s) 101 and the virtual character(s) 103 of the communication system 100.

Note that the above-described services have been set forth as examples, and any services may be provided as long as these services are for implementing the communication system 100. That is, other services than the above-described service examples may be provided. For example, other servers than the user management server 111 to the analysis server 114 may be provided.

Moreover, a physical configuration of each server is optional. As in the above-described example of Fig. 2, the user management server 111 to the analysis server 114 may be configured as different devices, or other configurations than above may be employed. For example, some or all of the user management server 111 to the analysis server 114 may be configured as a virtual server implemented by a single device (a server 110). Alternatively, the server 110 (the user management server 111 to the analysis server 114) may be implemented as so-called "cloud computing," and the above-described service provided by each server may be provided as a cloud service.

The network 121 is a communication network as a communication medium. The network 121 may be any communication networks, and may be a wire communication network, a wireless communication network, or both. For example, the network 121 may be a wired local area network (LAN), a wireless LAN, a public phone network, a wireless mobile wide area network such as a so-called "3G network" or "4G network," the Internet, or a combination thereof. Moreover, the network 121 may include a single communication network or a plurality of communication networks. In addition, the network 121 may be partially or entirely formed of a communication cable according to predetermined standards, such as a universal serial bus (USB) cable or a high-definition multimedia interface (HDMI (registered trademark)) cable, for example. Further, the network 121 may partially or entirely employ a method according to predetermined standards, such as an ad hoc mode of a wireless LAN according to the Institute of Electrical and Electronic Engineers (IEEE) 802.11, infrared optical communication according to the InfraRed Data Association (IrDA), or Bluetooth (registered trademark). Alternatively, the network 121 may partially or entirely employ an original wireless communication method.

The user management server 111 to the analysis server 114 and the terminal devices 131-1 to 131-N are connected to the network 121. Note that in Fig. 2, connection among these devices and the network 121 is indicated by straight lines, but the user management server 111 to the analysis server 114 and the terminal devices 131-1 to 131-N may be connected to the network 121 via wire communication or wireless communication (via, e.g., a not-shown access point or base station).

The terminal devices 131-1 to 131-N are information processing devices operating as terminal devices of the communication system 100, and are operated by the users 101. When description is made below without the need for distinguishing the terminal devices 131-1 to 131-N from each other, the terminal devices 131-1 to 131-N will be referred to as "terminal devices 131."

Each terminal device 131 may be an optional information processing device as long as such an information processing device is able to communicate with other devices via the network 121 (i.e., has the function of being able to communicate with the users 101 of other devices and the virtual characters 103 corresponding to such users 101). For example, each terminal device 131 may be a mobile (compact) information processing device (so-called "mobile equipment") such as a mobile phone, a smartphone, or a tablet device. Since an information processing device with high portability is, as described above, applicable as the terminal device 131, the users 101 can more freely utilize the communication system 100 at a wider variety of locations during a wider variety of time periods. That is, convenience of the communication system 100 can be improved.

Note that the number of terminal devices 131 included in the communication system 100 is optional. Moreover, plural types of information processing devices, such as a mobile phone and a smartphone, are applicable as the terminal devices 131.

### <Configuration of Server>

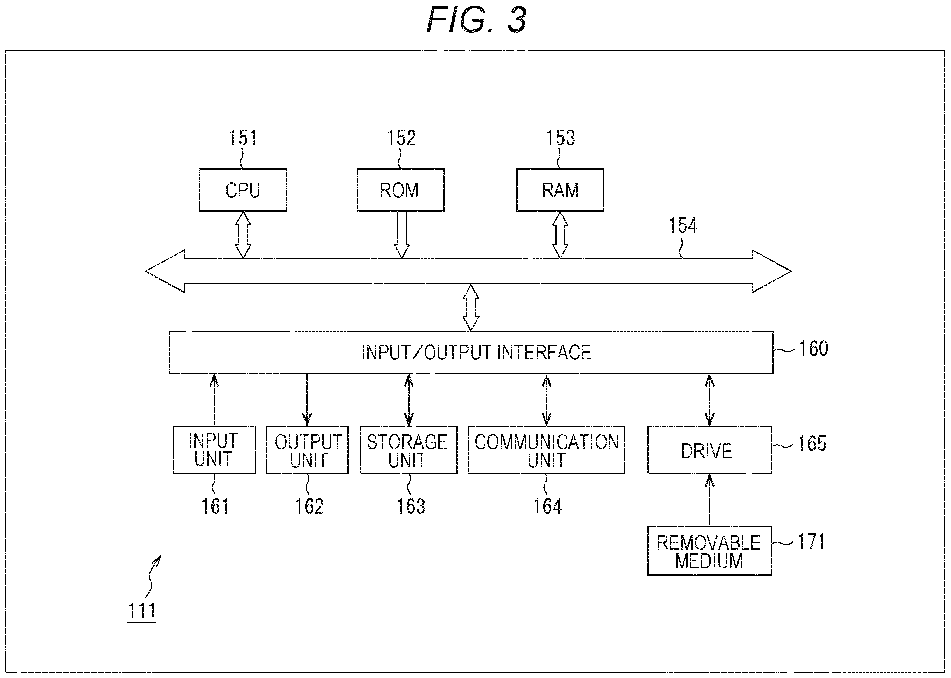

Next, a configuration example of each server will be described. Fig. 3 is a block diagram of a main configuration example of the user management server 111.

As illustrated in Fig. 3, a central processing unit (CPU) 151, a read only memory (ROM) 152, and a random access memory (RAM) 153 are connected together via a bus 154 in the user management server 111.

An input/output interface 160 is also connected to the bus 154. An input unit 161, an output unit 162, a storage unit 163, a communication unit 164, and a drive 165 are connected to the input/output interface 160.

The input unit 161 is an input device configured to receive external information such as user input. For example, the input unit 161 includes an operation button, a touch panel, a camera, a microphone, and an input terminal. Moreover, the input unit 161 may further include various sensors such as an acceleration sensor, an optical sensor, and a temperature sensor.

The output unit 162 is an output device configured to output information such as images and sound. For example, the output unit 162 includes a display, a speaker, and an output terminal.

The storage unit 163 is a hard disk, a RAM disk, or a non-volatile memory, for example. The communication unit 164 is a network interface, for example. For example, the communication unit 164 is connected to the network 121 to communicate with other devices (e.g., the terminal devices 131) and servers connected via the network 121. The drive 165 is configured to drive a removable medium 171 such as a magnetic disk, an optical disk, a magnetic optical disk, or a semiconductor memory.

The CPU 151 is configured to perform various types of processing in such a manner that a program stored in the storage unit 163 is loaded and executed in the RAM 153 via the input/output interface 160 and the bus 154, for example. Moreover, data etc. required for executing various types of processing by the CPU 151 is optionally stored in the RAM 153.

The program to be executed by the CPU 151 can be stored in the removable medium 171 as package media and be provided to the user management server 111, for example. In this case, the program can be installed in the storage unit 163 via the input/output interface 160 in such a manner that the removable medium 171 is attached to the drive 165.

Moreover, the above-described program can be provided to the user management server 111 via a wired or wireless transmission medium such as the LAN, the Internet, or digital satellite broadcasting. In this case, the program can be received by the communication unit 164 via the wired or wireless transmission medium, and then, can be installed in the storage unit 163.

Alternatively, the program can be installed in the ROM 152 or the storage unit 163 in advance.

Note that each configuration of the virtual character management server 112 to the analysis server 114 is similar to that of the user management server 111. That is, description with reference to Fig. 3 is also applicable to description of each of the virtual character management server 112 to the analysis server 114. Moreover, in the case of the server 110, the configuration thereof is similar to that of the user management server 111. That is, description with reference to Fig. 3 is also applicable as description of the server 110.

### <Configuration of Function Blocks of Servers>

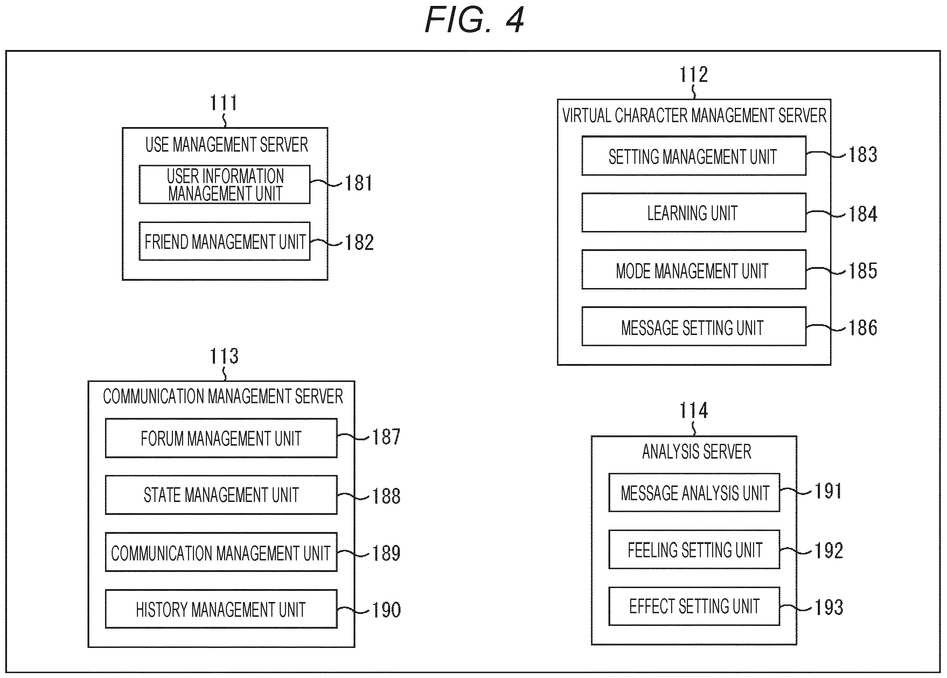

Next, the functions implemented by the user management server 111 to the analysis server 114 will be described. The CPUs 151 of the user management server 111 to the analysis server 114 execute programs to implement various functions. Fig. 4 is a function block diagram of main function examples implemented by each server.

As illustrated in Fig. 4, the user management server 111 implements function blocks such as a user information management unit 181 and a friend management unit 182. The user information management unit 181 is configured to perform processing for managing user information as information on the users 101. The contents of the user information are optional. For example, the user information may include individual information of each user 101, ID and password for logging in the communication system 100, and various types of other setting information.

The friend management unit 182 is configured to perform processing for managing friends as communication partners of each user, the friends being set by each user 101. In the communication system 100, each user 101 can communicate with other users 101 (or the virtual characters 103 corresponding to such users 101) set as friends. In other words, for communication, each user 101 needs to register, in advance, other users 101 as communication partners (or other users 101 corresponding to the virtual characters 103 as communication partners) in the user management server 111 (the friend management unit 182).

The virtual character management server 112 implements function blocks such as a setting management unit 183, a learning unit 184, a mode management unit 185, and a message setting unit 186.

The setting management unit 183 is configured to perform processing for managing settings of the virtual characters 103. The learning unit 184 is configured to perform processing for learning a responding method of the virtual characters 103. The mode management unit 185 is configured to perform processing for managing operation modes of the virtual characters 103. The message setting unit 186 is configured to perform processing for setting messages sent from the virtual characters 103.

The communication management server 113 implements function blocks such as a forum management unit 187, a state management unit 188, a communication management unit 189, and a history management unit 190.

The forum management unit 187 is configured to perform processing for managing a forum. The state management unit 188 is configured to perform processing for managing a communication partner state in the forum. The communication management unit 189 is configured to perform processing for managing communication. The history management unit 190 is configured to perform processing for managing a communication history.

The analysis server 114 implements function blocks such as a message analysis unit 191, a feeling setting unit 192, and an effect setting unit 193.

The message analysis unit 191 is configured to perform processing for analyzing messages. The feeling setting unit 192 is configured to perform processing for setting feeling corresponding to each message. The effect setting unit 193 is configured to perform processing for setting a staging image (a staging effect).

### <Configuration of Terminal Device>

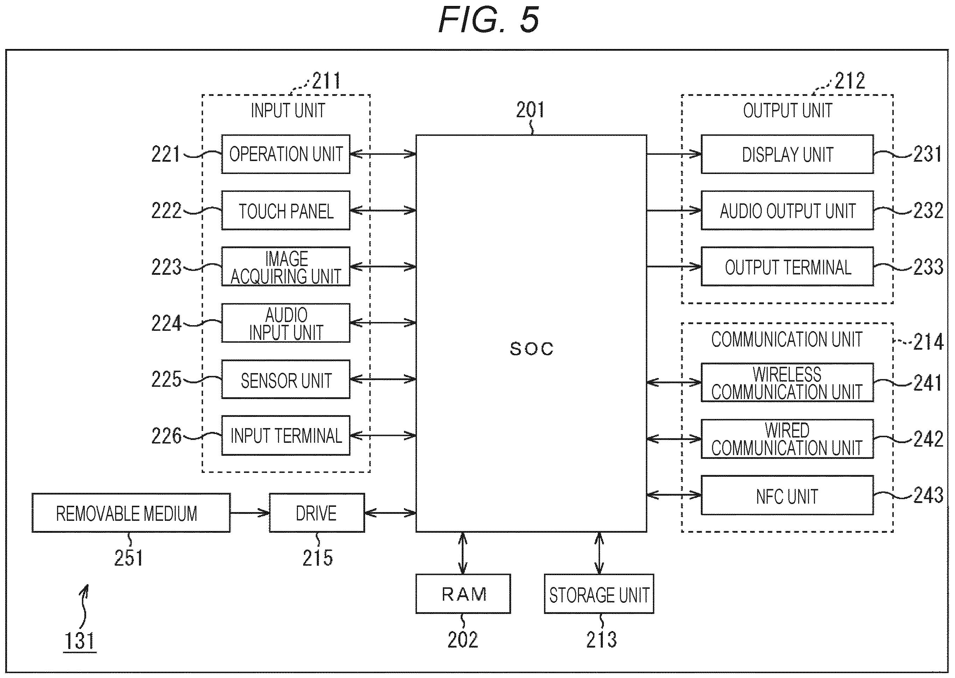

Next, a configuration example of each terminal device 131 will be described. Fig. 5 is a block diagram of a main configuration example of the terminal device 131.

As illustrated in Fig. 5, the terminal device 131 includes a system-on-a-chip (SOC) 201, a random access memory (RAM) 202, an input unit 211, an output unit 212, a storage unit 213, a communication unit 214, and a drive 215.

The SOC 201 is a chip having various functions implemented in the terminal device 131. The SOC 201 loads and executes a program or data in the RAM 202, for example.

The input unit 211 includes various input devices. The input unit 211 includes an operation unit 221, a touch panel 222, an image acquiring unit 223, an audio input unit 224, a sensor unit 225, and an input terminal 226, for example.

The operation unit 221 includes an optional input device to be operated by the user, such as a key, a button, a switch, or a lever. The operation unit 221 is configured to receive user input made to the input device by user operation, and then, supply the SOC 201 etc. with the received user input. The touch panel 222 is configured to receive information (i.e., the user input) indicated by the user operation (e.g., movement and position of a user's finger or a stylus pen) performed on the basis of a graphical user interface (GUI) superimposed on a later-described display unit 231 and displayed on the display unit 231, and then, supply the SOC 201 etc. with the received user input.

The image acquiring unit 223 includes a lens, a diaphragm, an image sensor, etc. The image acquiring unit 223 is configured to acquire an image of an object to supply the SOC 201 etc. with data of the acquired image. The audio input unit 224 includes an audio input device such as a microphone. The audio input unit 224 is configured to receive audio input to supply the SOC 201 etc. with the received audio data. The sensor unit 225 includes various sensors such as an acceleration sensor, an optical sensor, and a temperature sensor. The sensor unit 225 is configured to obtain, by sensing, information corresponding to each sensor to supply the SOC 201 etc. with various types of the obtained sensor information. The input terminal 226 includes an input terminal of an optional signal, such as an analog signal input terminal. The input terminal 226 is configured to supply the SOC 201 etc. with input data.

The output unit 212 includes the display unit 231, an audio output unit 232, and an output terminal 233. The display unit 231 includes an optional display such as a liquid crystal display (LCD) or an organic electroluminescence display (OELD). The display unit 231 is configured to display image information supplied from the SOC 201 etc. The audio output unit 232 is a speaker etc., and is configured to output audio information supplied from the SOC 201 etc. The output terminal 233 includes an output terminal of an optional signal, such as an analog signal output terminal. The output terminal 233 is configured to output information supplied from the SOC 201 etc. to the outside of the terminal device 131.

The storage unit 213 is a hard disk, a RAM disk, a non-volatile memory, etc. The communication unit 214 is a network interface, for example. The communication unit 214 includes a wireless communication unit 241, a wired communication unit 242, and a near field communication (NFC) unit 243, for example. The wireless communication unit 241 includes a wireless communication interface for communication with other devices by wireless communication in accordance with predetermined communication standards. The wired communication unit 242 includes a wired communication interface for communication with other devices by wire communication in accordance with predetermined communication standards. The NFC unit 243 is a near field wireless communication interface for near field wireless communication with other communication devices close to each other. For example, the NFC unit 243 exchanges, by the near field wireless communication, information of the terminal device 131 required for participation in the communication system 100 with other terminal devices 131.

The drive 215 is configured to drive a removable medium 251, such as a magnetic disk, an optical disk, a magnetic optical disk, or a semiconductor memory, to read information stored in the removable medium 251 or write information in the removable medium 251.

Note that each of these processing units operates under the control of the SOC 201.

The SOC 201 is configured to perform various types of processing in such a manner that a program stored in the storage unit 213 is loaded and executed in the RAM 202, for example. Moreover, data required for executing various types of processing by the SOC 201 is optionally stored in the RAM 202.

The program to be executed by the SOC 201 can be saved in the removable medium 251 as package media and be provided to the terminal device 131, for example. In this case, the program can be installed in the storage unit 213 via the SOC 201 in such a manner that the removable medium 251 is attached to the drive 215.

Moreover, such a program can be provided to the terminal device 131 via a wired or wireless transmission medium such as a LAN, the Internet, or digital satellite broadcasting. In this case, the program is received by the communication unit 214 (the wireless communication unit 241 or the wired communication unit 242) via the wired or wireless transmission medium so that the program can be installed in the storage unit 213.

Alternatively, the program can be installed in the ROM of the SOC 201 or the storage unit 213 in advance.

Note that the configuration described above has been set forth as an example, and the terminal device 131 may have other processing units than the processing units described above. Alternatively, some of the processing units described above may be omitted from the terminal device 131.

### <Configuration of Function Blocks of Terminal Device>

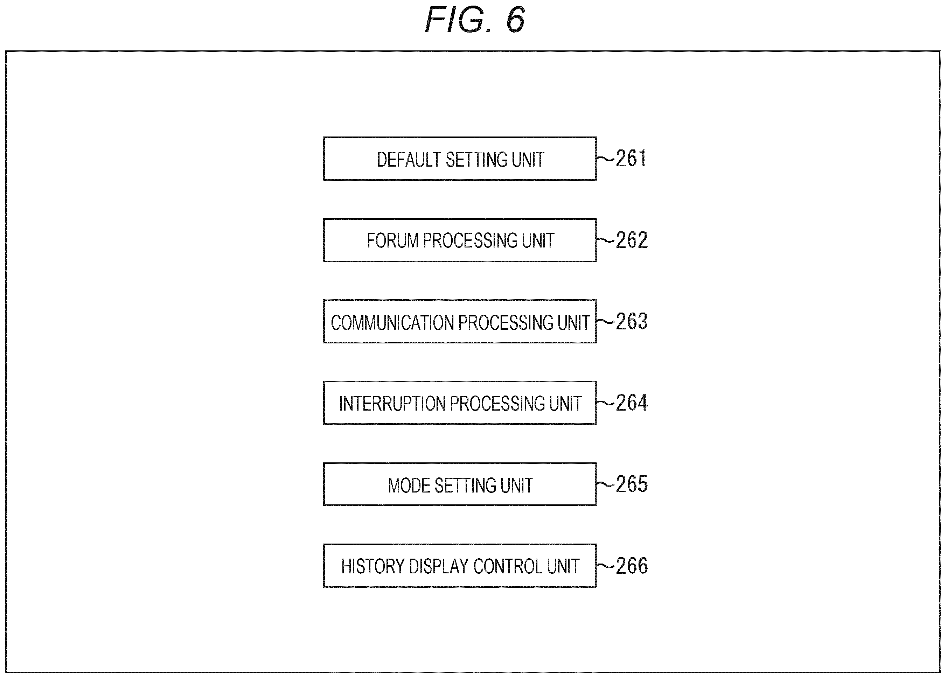

Next, the functions implemented by the terminal device 131 will be described. The SOC 201 of the terminal device 131 executes the program to implement various functions. Fig. 6 is a function block diagram of main function examples implemented by the terminal device 131.

As illustrated in Fig. 6, the terminal device 131 implements function blocks such as a default setting unit 261, a forum processing unit 262, a communication processing unit 263, an interruption processing unit 264, a mode setting unit 265, and a history display control unit 266.

The default setting unit 261 is configured to perform processing for default setting. The forum processing unit 262 is configured to perform processing for the forum. The communication processing unit 263 is configured to perform processing for communication. The interruption processing unit 264 is configured to perform processing for interruption in communication. The mode setting unit 265 is configured to perform processing for mode setting. The history display control unit 266 is configured to perform processing for displaying the communication history.

### <Overview of Default Setting>

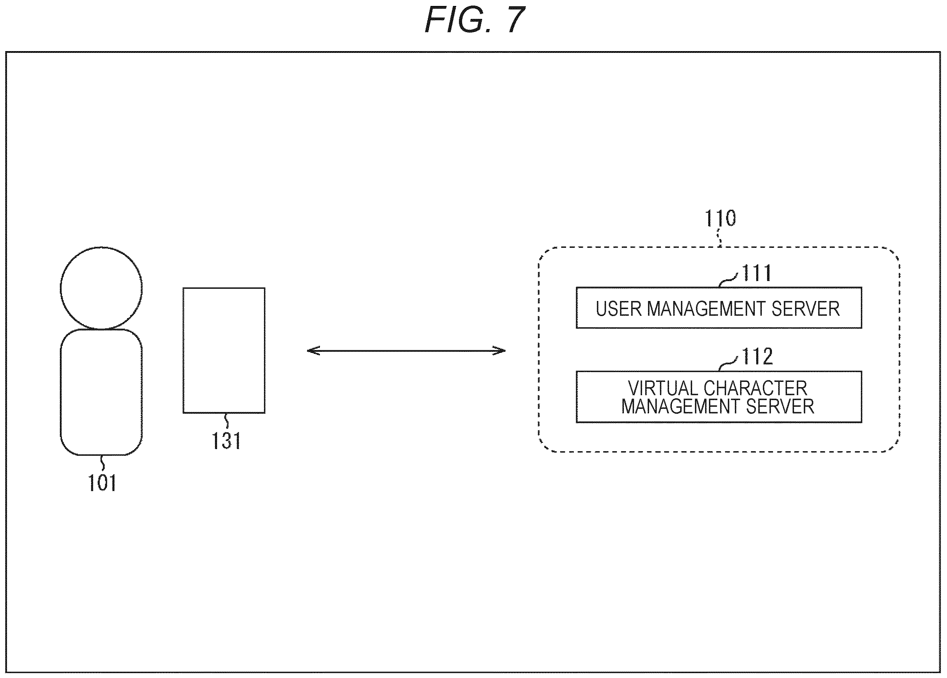

Next, various types of processing performed in the communication system 100 as described above will be described. First, an overview of default setting will be described with reference to Fig. 7. In order to utilize the communication system 100, information (the user information) on the users 101 needs to be registered in the user management server 111. Moreover, in the communication system 100, communication using the virtual characters 103 is also performed as described above, and therefore, the virtual characters also need to be registered in the virtual character management server 112.

Thus, each user 101 operates a corresponding one of the terminal devices 131 to communicate with the user management server 111 and the virtual character management server 112, and then, processing for registering the user information, or the information on settings of the virtual characters 103 is performed as default setting, for example.

### <Flow in Processing for Default Setting>

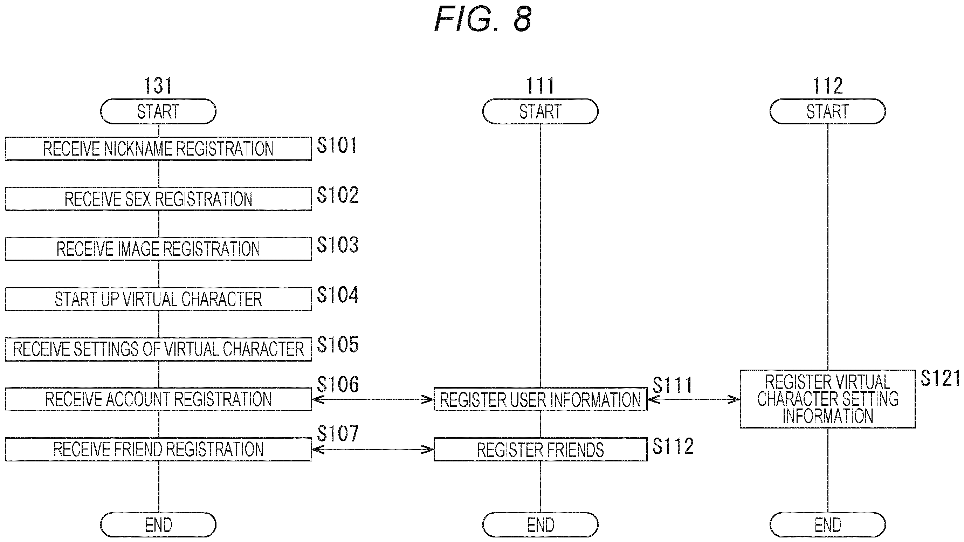

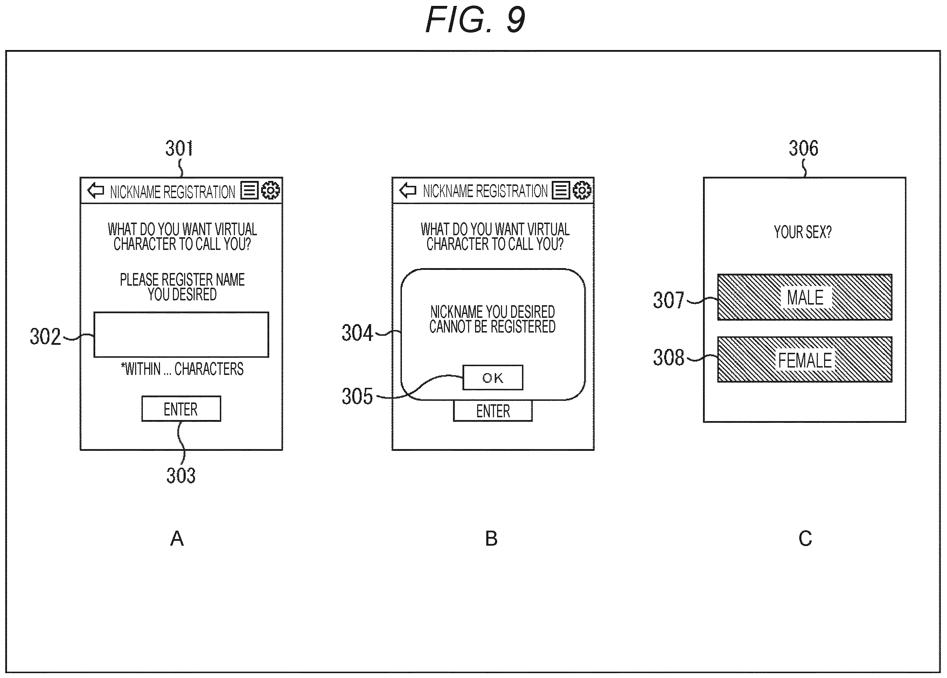

An example of a flow in the processing for default setting will be described with reference to a flowchart of Fig. 8. If necessary, such an example will be described with reference to Figs. 9 to 13. Such processing begins when each user 101 starts an application for communication using the communication system 100 in a corresponding one of the terminal devices 131.

When the processing for default setting begins, the default setting unit 261 of the terminal device 131 receives registration of a nickname at step S101. The default setting unit 261 displays, on the display unit 231, a nickname registration screen 301 as illustrated in A of Fig. 9, for example. As illustrated in A of Fig. 9, the nickname registration screen 301 is provided with a nickname input field 302 and an enter button 303. After the user 101 has input the nickname in the nickname input field 302, when the user 101 operates the enter button 303, the default setting unit 261 receives, as the nickname of the user 101, the nickname input to the nickname input field 302. Such a nickname is used when the virtual character 103 corresponding to the user 101 calls the user 101 in communication with the user 101, for example.

For example, when the input nickname is determined as being inappropriate or the number of characters of the input nickname exceeds a character limit, the default setting unit 261 displays, on the display unit 231, a registration failure notification screen 304 as illustrated in B of Fig. 9. As illustrated in B of Fig. 9, a message notifying failure of registration of the nickname, such as "Nickname you desired cannot be registered, " and an OK button 305 are displayed on the registration failure notification screen 304. After the user 101 has confirmed such registration failure, when the user 101 operates the OK button 305, the registration failure notification screen 304 is turned off, and the display unit 231 returns to a display state of A of Fig. 9. Then, registration of the nickname is received again.

After the nickname has been accepted, the default setting unit 261 receives registration of sex at step S102. The default setting unit 261 displays, on the display unit 231, a sex registration screen 306 as illustrated in C of Fig. 9, for example. As illustrated in C of Fig. 9, the sex registration screen 306 is provided with a male button 307 and a female button 308. When the user 101 oneself is a male, the user 101 operates the male button 307. When the user 101 oneself is a female, the user 101 operates the female button 308. The default setting unit 261 receives, as the sex of the user 101, the sex corresponding to the operated button.

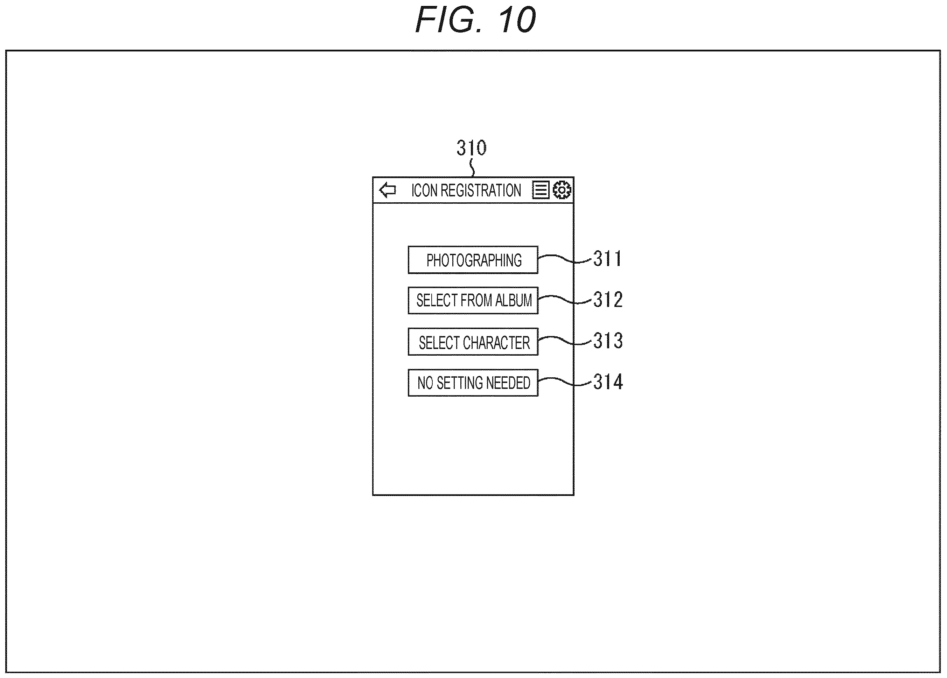

After the selected sex has been accepted, the default setting unit 261 receives registration of an image (an icon) at step S103. The "image (icon) " is an image indicating not only the user 101 or the virtual character 103 corresponding to the user 101 but also feeling of the user 101 or the virtual character 103 corresponding to the user 101 on a dialogue screen displayed on the display unit 231 in communication. The dialogue screen will be described in detail later. The default setting unit 261 displays, on the display unit 231, an icon registration screen 310 as illustrated in Fig. 10, for example.

As illustrated in Fig. 10, the icon registration screen 310 is provided with an image acquiring button 311, an image selection button 312, a character selection button 313, and a setting rejection button 314. The user 101 selects any of these buttons to select the method for obtaining the image (the icon) to be registered.

For example, when the user 101 operates the image acquiring button 311, a newly-acquired image is registered as the image (the icon). That is, in this case, photographing is performed, and the image acquired by such photographing is registered as the image (the icon). Alternatively, when the user 101 operates the image selection button 312, an image having already been registered in an album function (e.g., a previously-acquired image or an image downloaded from the outside (other devices)) is registered as the image (the icon), for example. That is, in this case, the image selected from an image group registered in the album function is registered as the image (the icon).

As another alternative, when the user 101 operates the character selection button 313, a character image prepared in advance in the communication system 100 is registered as the image (the icon), for example. That is, in this case, character selection is performed, and the image of the selected character is registered as the image (the icon) . For example, when the user 101 operates the setting rejection button 314, registration of the image (the icon) is skipped. That is, no image (no icon) is registered at this step. The image (the icon) may be registered at optional timing after completion of default setting.

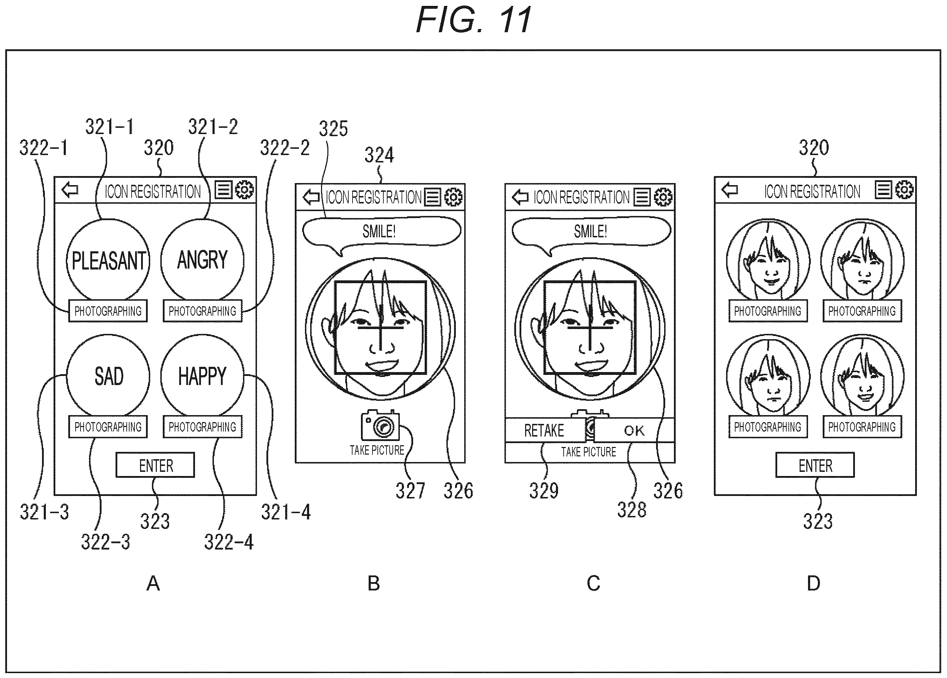

For example, when the image acquiring button 311 is operated, the default setting unit 261 displays, on the display unit 231, an acquired image registration screen 320 as illustrated in A of Fig. 11. As illustrated in A of Fig. 11, a display region (display regions 321-1 to 321-4) where an acquired image to be registered is displayed is provided for each type of feeling (e.g., pleasant, angry, sad, and happy) on the acquired image registration screen 320. When description is made below without the need for distinguishing the display regions 321-1 to 321-4 from each other, the display regions 321-1 to 321-4 will be referred to as "display regions 321. " Before photographing, the display regions 321 may be blank, or a feeling expression (e.g., characters of "pleasant," "angry," "sad," or "happy") may be displayed in each display region 321.

Moreover, an image acquiring button (image acquiring buttons 322-1 to 322-4) is provided for each type of feeling (e.g., pleasant, angry, sad, and happy) on the acquired image registration screen 320. When description is made below without the need for distinguishing the image acquiring buttons 322-1 to 322-4 from each other, the image acquiring buttons 322-1 to 322-4 will be referred to as "image acquiring buttons 322." " Note that a message, a motif, etc. indicating that photographing is performed by operation of the user 101, such as "Photographing" in an example of A of Fig. 11, may be displayed on each image acquiring button 322. This allows the user 101 to more easily grasp meaning of operation of each image acquiring button 322 (i.e., the contents of processing performed in such a manner that the user 101 operates each image acquiring button 322).

When the user 101 operates the image acquiring button 322 for a desired type of feeling, photographing is performed to acquire an image indicating such a type of feeling. For example, a facial image of the user 101 corresponding to the desired type of feeling is acquired.

The default setting unit 261 displays, on the display unit 231, an image acquiring screen 324 as illustrated in B of Fig. 11. As illustrated in B of Fig. 11, the image acquiring screen 324 is provided with a feeling display region 325 where a message etc. indicating corresponding feeling in photographing is displayed, an image display region 326 where a taken image or an acquired image is displayed, and an image acquiring button 327 operated for photographing by the user 101.

In the feeling display region 325, a message etc. for obtaining an expression of the feeling corresponding to the image acquiring button 322 operated by the user 101 on the acquired image registration screen 320 is displayed. In an example of B of Fig. 11, the user 101 operates the image acquiring button 322-1 on the acquired image registration screen 320, and the feeling corresponding to the image acquiring button 322-1 is "pleasant. " Thus, a message etc. requesting a smiling face, such as "Smile!," is displayed in the feeling display region 325.

Before the user 101 operates the image acquiring button 327, an image taken by the image acquiring unit 223 is displayed in the image display region 326. When the user 101 operates the image acquiring button 327, the image taken and displayed in the image display region 326 is saved as an acquired image. Thus, the user 101 can perform photographing while checking the image taken and displayed in the image display region 326. Thus, an acquired image with a desired expression can be more easily obtained.

When the acquired image is obtained, such an acquired image is displayed in the image display region 326 as illustrated in C of Fig. 11. Then, an OK button 328 and a retake button 329 are displayed on the display unit 231 with these buttons being superimposed on the image acquiring screen 324. When the user 101 operates the retake button 329, the display unit 231 returns to a display state of B of Fig. 11, and photographing is performed again. Alternatively, when the user 101 operates the OK button 328, the acquired image is saved as an image registered as an image (an icon) . The default setting unit 261 displays, on the display unit 231, the acquired image registration screen 320 as illustrated in D of Fig. 11. At this point, in the display region 321 of the acquired image registration screen 320 corresponding to the feeling desired by the user 101, the acquired image saved as an image registered as an image (an icon) is displayed. For example, when photographing is performed for the feeling of "pleasant" as described above, such an acquired image is displayed in the display region 321-1.

When photographing is performed for each type of feeling as described above, the acquired image corresponding to each type of feeling is displayed in a corresponding one of the display regions 321 as illustrated in D of Fig. 11. Note that when the user 101 wishes to perform photographing again at this step, the user 101 may operate the image acquiring button 322 corresponding to a desired type of feeling such that photographing is performed again for such a type of feeling. As illustrated in A and D of Fig. 11, the acquired image registration screen 320 is provided with an enter button 323. When the acquired images corresponding respectively to all types of feeling are obtained, the user 101 operates the enter button 323. When the enter button 323 is operated, the acquired image corresponding to each type of feeling is accepted as an image (an icon).

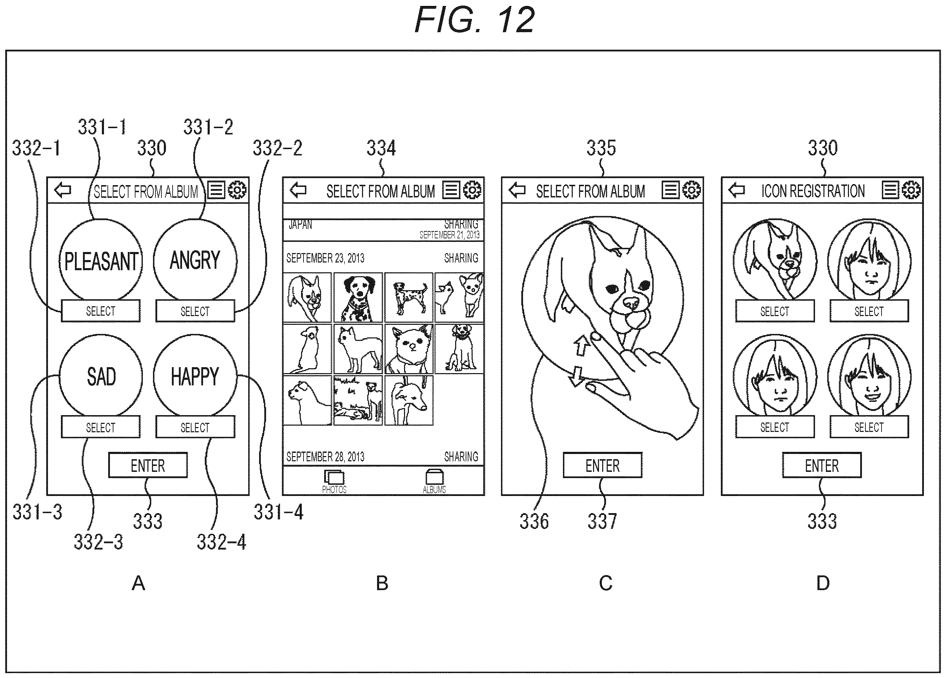

Alternatively, when the image selection button 312 is operated, the default setting unit 261 displays, on the display unit 231, a selected image registration screen 330 as illustrated in A of Fig. 12, for example. As illustrated in A of Fig. 12, a display region (display regions 331-1 to 331-4) where a selected image is displayed is provided for each type of feeling (e.g., pleasant, angry, sad, and happy) on the selected image registration screen 330. When description is made below without the need for distinguishing the display regions 331-1 to 331-4 from each other, the display regions 331-1 to 331-4 will be referred to as "display regions 331." " Before photographing, the display regions 331 may be blank, or a feeling expression (e.g., characters of "pleasant," "angry," "sad," or "happy") may be displayed in each display region 331.

Moreover, a selection button (selection buttons 332-1 to 332-4) is provided for each type of feeling (e.g., pleasant, angry, sad, and happy) on the selected image registration screen 330. When description is made below without the need for distinguishing the selection buttons 332-1 to 332-4 from each other, the selection buttons 332-1 to 332-4 will be referred to as "selection buttons 332." " Note that a message, a motif, etc. indicating that image selection is performed by operation of the user 101, such as "Select" in an example of A of Fig. 12, may be displayed on each selection button 332. This allows the user 101 to more easily grasp meaning of operation of each selection button 332 (i.e., the contents of processing performed in such a manner that the user 101 operates each selection button 332).

When the user 101 operates the selection button 332 corresponding to a desired type of feeling, image selection is performed to obtain an image (e.g., an acquired image) indicating such feeling.

The default setting unit 261 displays, on the display unit 231, an image selection screen 334 as illustrated in B of Fig. 12. As illustrated in B of Fig. 12, a list of images (a list of thumbnail images) registered in an album is displayed on the image selection screen 334. When the user 101 selects a desired image (a desired thumbnail image), the default setting unit 261 displays, on the display unit 231, a selected image display screen 335 as illustrated in C of Fig. 12. The selected image display screen 335 is provided with an image display region 336 and an enter button 337. The image selected by the user 101 on the image selection screen 334 is displayed in the image display region 336. When the user 101 operates the enter button 337, part of the image selected on the image selection screen 334 and displayed within the image display region 336 is trimmed (cut out), and then, is saved as an image registered as an image (an icon).

Note that in the image display region 336, not only the user 101 can zoom in or out the image displayed in the image display region 336, but also can move (shift) a display area. Thus, the user 101 can more suitably register an image according to one's taste.

When the image selected as described above is obtained, the default setting unit 261 displays, on the display unit 231, the selected image registration screen 330 as illustrated in D of Fig. 12. At this point, the selected image is displayed in the display region 331 corresponding to the feeling desired by the user 101 on the selected image registration screen 330. For example, in the case of performing image selection for the feeling of "pleasant" as described above, the selected image is displayed in the display region 331-1.

When image selection as described above is performed for each type of feeling, an acquired image for each type of feeling is displayed in a corresponding one of the display regions 331 as illustrated in D of Fig. 12. Note that when the user 101 wishes to perform image selection again at this step, the user 101 may operate the selection button 332 corresponding to a desired type of feeling to perform image selection for such feeling again. As illustrated in A and D of Fig. 12, the selected image registration screen 330 is provided with an enter button 333. When image selection is performed for all types of feeling, the user 101 operates the enter button 333. When the enter button 333 is operated, the selected image for each type of feeling is accepted as an image (an icon).

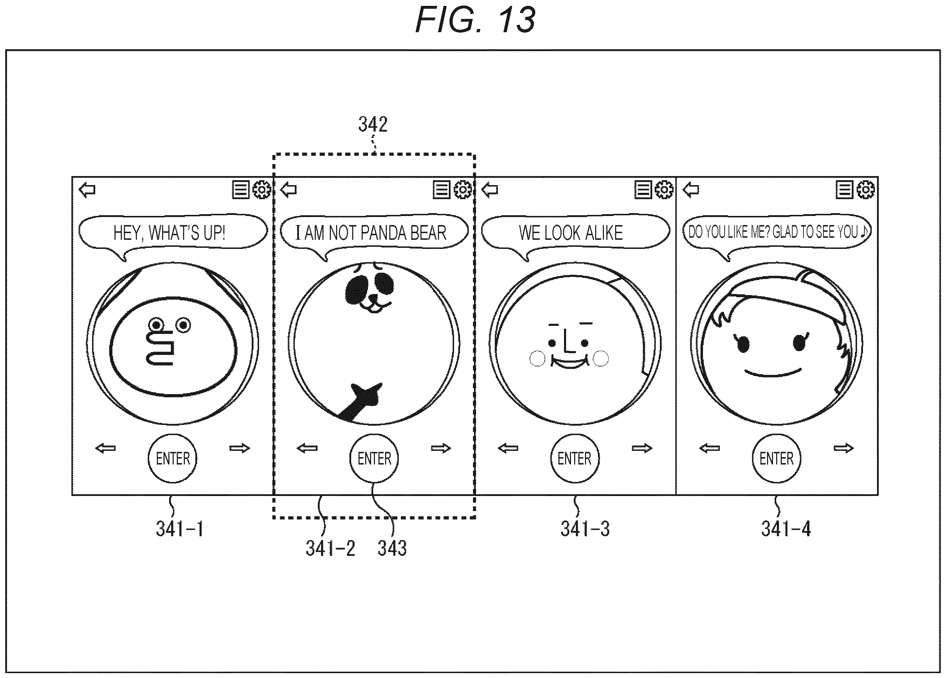

Moreover, when the character selection button 313 is operated, the default setting unit 261 displays, on the display unit 231, a character introduction screen 341 as illustrated in Fig. 13, for example. For example, the character introduction screen 341 may include an introduction screen (character introduction screens 341-1 to 341-4) for introducing each character as illustrated in Fig. 13. At this point, the introduction screen for introducing each character may have a size equal to that of a display region of the display unit 231. That is, the introduction screen for a single character may be displayed in the display region of the display unit 231 indicated by a dashed line 342 of Fig. 13. In this case, the user 101 can scroll right and left to display the introduction screen for each character in the display region of the display unit 231, for example. In the state in which the introduction screen for a desired character is displayed in the display region, when the user 101 operates an enter button 343, such a character is selected, and an image corresponding to each type of feeling of the character is accepted as an image (an icon).

Returning to Fig. 8, when image registration is accepted as described above, the default setting unit 261 starts up a virtual character at step S104. At step S105, the default setting unit 261 receives settings of the virtual character. At this point, the user 101 sets the personality of the virtual character and favorite object and words (keywords) of the virtual character, for example.

The above-described settings are not registered in the server, yet.

At step S106, the default setting unit 261 receives registration of an account such as a user ID and a password. For such an account, existing predetermined service ID and password may be applied. In such account registration processing, the default setting unit 261 supplies the user management server 111 with the user information containing the account, various settings accepted in the above-described processing, etc.

The user information management unit 181 of the user management server 111 attempts to register the supplied user information at step S111. Upon successful registration, the user information management unit 181 supplies the virtual character management server 112 with information on the virtual character settings contained in the user information. The setting management unit 183 of the virtual character management server 112 registers the supplied virtual character setting information at step S121.

Once the virtual character setting information is registered in the virtual character management server 112, the user information management unit 181 of the user management server 111 notifies the terminal device 131 that the user information is successfully registered. When receiving such a notification, the default setting unit 261 of the terminal device 131 completes account registration.

In addition, for communication in the communication system 100, other users as communication partners need to be registered as "friends" in advance.

Thus, at step S107, the default setting unit 261 receives friend registration. When receiving friend registration by operation of the user 101, the default setting unit 261 supplies the user management server 111 with friend information. The friend management unit 182 of the user management server 111 registers and manages such friend information. That is, the friend management unit 182 registers and manages, as friends of the user 101, users specified by the supplied friend information. Upon completion of registration, the friend management unit 182 notifies such completion to the terminal device 131. When receiving such a notification, the default setting unit 261 completes friend registration.

As described above, various types of processing can be performed as default setting.

### <Forum>

Next, the forum will be described. In the terminal device 131, a list of images (icons) of the friends of the user 101 is displayed on a forum screen. On the forum screen, the user 101 selects a friend with which the user 101 communicates.

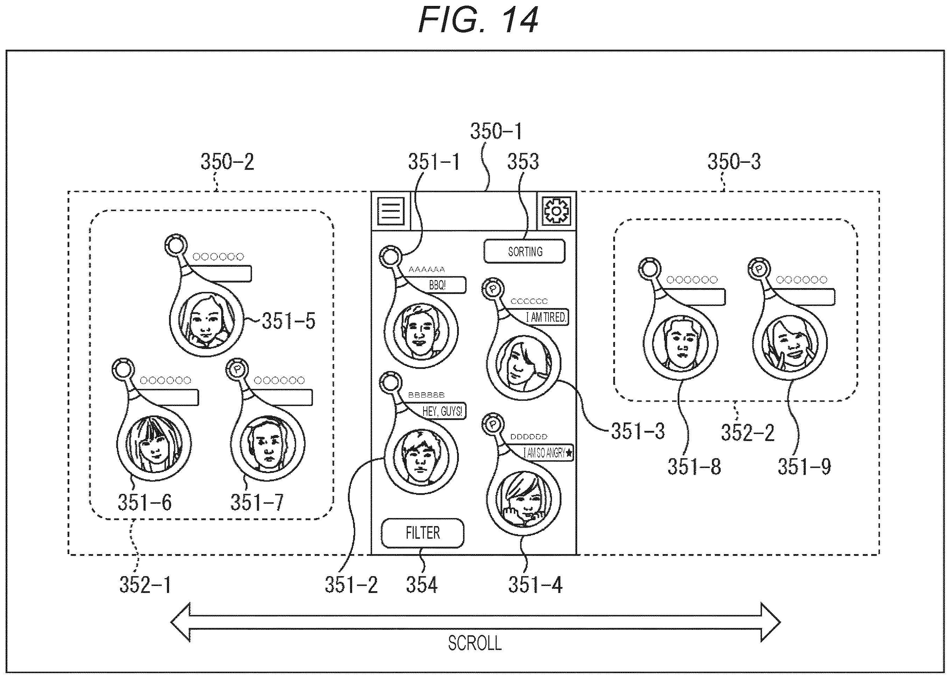

An example of the forum screen will be illustrated in Fig. 14. In the example of Fig. 14, a forum screen 350 has a display region larger than that of the display unit 231, and only part (a forum screen 350-1) of the forum screen 350 is displayed on the display unit 231. That is, forum screens 350-2, 350-3 indicate part of the forum screen 350 which is not displayed on the display unit 231. In other words, the forum screen 350 includes the forum screens 350-1 to 350-3. Note that the forum screens 350-2, 350-3 can be displayed in such a manner that the displayed forum screen 350-1 is scrolled right and left, for example.

On the forum screen 350, images (icons) indicating other users registered as the friends of the user 101 of the terminal device 131 or the virtual characters corresponding to other users are displayed as in images 351-1 to 351-9. The user 101 can select any one of the images (the icons), and can specify, as a communication partner, another user (or the virtual character corresponding to another user) indicated by the selected image (the selected icon). As described above, the communication partner can be specified using the list of the images (the icons), and therefore, the user 101 can more easily identify each user, and can select a desired user as the communication partner.

Note that on the forum screen 350, it may be identified whether the image (the icon) indicates the user 101 or the virtual character 103. For example, a character of "P" may be added to the image (the icon) indicating the virtual character 103, as illustrated in Fig. 14. This (i.e., the presence or absence of the character of "P") allows the user 101 to more easily identify whether the image (the icon) indicates the user 101 or the virtual character 103.

In addition, the position of each image (each icon) on the forum screen 350 is optional. For example, the images (the icons) may be placed (arranged) on the basis of a predetermined condition. Such a condition is optional. For example, the condition may include age, sex, names, the degree of intimacy, and feeling, or may be other conditions. Alternatively, the images (the icons) may be placed on the basis of multiple conditions.

Moreover, characters or an image indicting the condition may be included in, e.g., the background of the forum screen 350. For example, in the case of arranging the images (the icons) according to the feeling of each user (or each virtual character), an image indicating such feeling (directly or indirectly) may be included in the background of the forum screen 350. For example, when the feeling of the users 101 or the virtual characters 103 indicated by the images 351-5 to 351-7 is "pleasant," a background image indicating pleasant may be used for a region 352-1 of the forum screen 350 where these images are arranged. Moreover, when the feeling of the users 101 or the virtual characters 103 indicated by the images 351-8 and 351-9 is "sad," a background image indicating sadness may be used for a region 352-2 of the forum screen 350 where these images are arranged, for example. With this configuration, the user 101 can more easily grasp the feeling of other users or virtual characters.

Further, the forum screen 350 may be provided with a sorting button 353 and a filter button 354. The sorting button 353 is operated by the user 101 to change arrangement (placement) of the images (the icons) . When the user 101 operates the sorting button 353, a condition can be input or selected, and sorting of the images (the icons) can be performed according to the input or selected condition. The filter button 354 is operated by the user 101 to display only a desired image (a desired icon). When the user 101 operates the filter button 354, a condition can be input or selected, and image (icon) selection (narrowing) is performed according to the input or selected condition. Then, only the selected image (the selected icon) is displayed on the forum screen 350.

### <Overview of Processing for Forum>

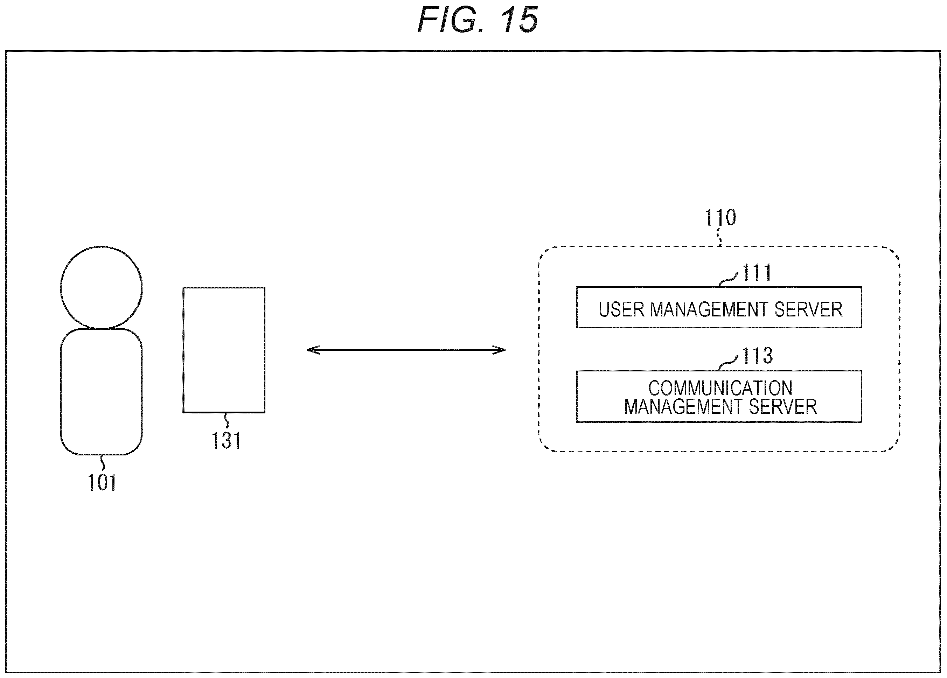

Next, an overview of processing for the forum will be described with reference to Fig. 15. As described above, the user 101 selects the communication partner on the forum screen 350. The processing for the forum, such as displaying of the forum screen 350, sorting or filtering of the images (the icons) on the forum screen 350, and specifying of the communication partner on the forum screen 350, is performed by the terminal device 131, the communication management server 113, the user management server 111, etc., as illustrated in Fig. 15.

### <Flow in Processing for Forum>

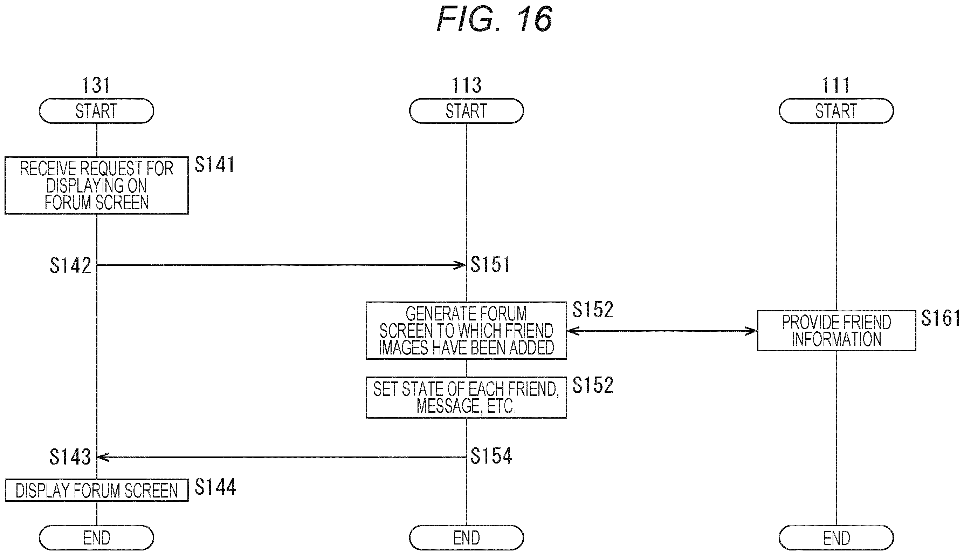

Regarding the processing for the forum, an example of a flow in the processing for displaying on the forum screen will be first described with reference to a flowchart of Fig. 16.

The forum processing unit 262 of the terminal device 131 controls, at step S141, the operation unit 221 etc. to receive a request for displaying of the forum screen 350, for example. When receiving the request for displaying of the forum screen 350, the forum processing unit 262 controls, at step S142, the wireless communication unit 241 or the wired communication unit 242 to transmit such a request to the communication management server 113, for example.

At step S151, the forum management unit 187 of the communication management server 113 controls the communication unit 164 etc. to obtain the request, for example. At step S152, the forum management unit 187 accesses the user management server 111 to obtain the information (the friend information) on the friends of the user of the terminal device 131. At step S161, the friend management unit 182 of the user management server 111 supplies the communication management server 113 with the requested friend information of the user 101. Such friend information contains images (hereinafter also referred to as "friend images") indicating the users 101 as the friends or the virtual characters corresponding to such users 101, for example. The forum management unit 187 extracts the friend images from the supplied friend information, and then, generates the forum screen 350 to which the obtained friend images are added.

At step S153, the forum management unit 187 sets, on the basis of state information of each user 101 managed by the state management unit 188, the state (i.e., whether each image (each icon) indicates the user 101 or the virtual character 103 corresponding to the user 101) of the friend (the user 101) indicated by each image (each icon) added to the forum screen 350. Moreover, the forum management unit 187 sets, on the basis of the friend information and history information managed by the history management unit 190, a message, an image, etc. added to the image (the icon).

When the forum screen 350 is generated as described above, the forum management unit 187 controls, at step S154, the communication unit 164 etc. to supply the terminal device 131 with data of the generated forum screen 350, for example. At step S143, the forum processing unit 262 of the terminal device controls the wireless communication unit 241 or the wired communication unit 242 to obtain the data of the forum screen 350, for example.

At step S144, the forum processing unit 262 displays the supplied forum screen 350 on the display unit 231.

In the above-described manner, the forum processing unit 262 can display, on the display unit 231, the forum screen 350 on which, e.g., the state of each friend is reflected and which includes the image (the icon) of each friend. Thus, the user 101 can more easily select the communication partner.

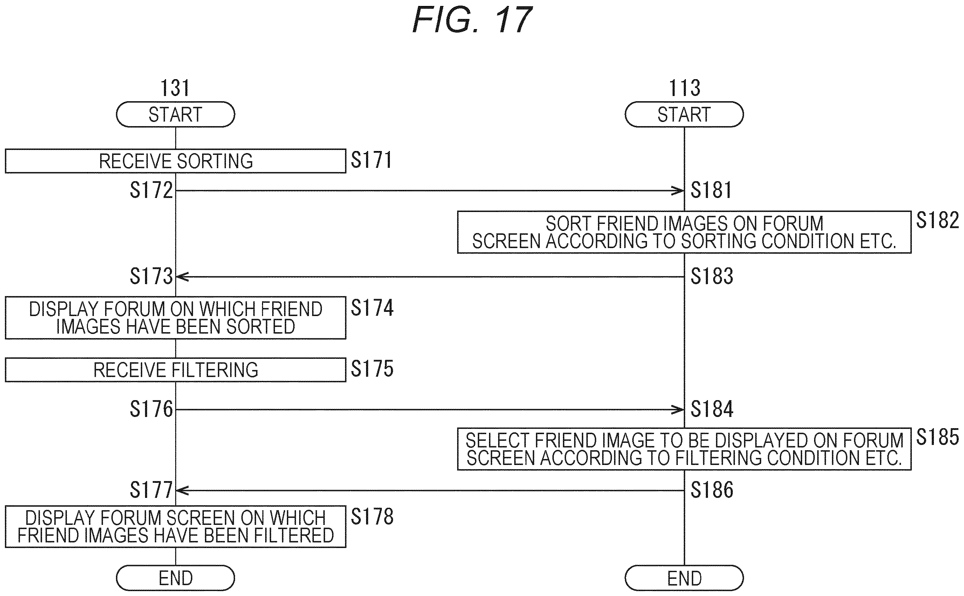

Next, an example of a flow in processing for sorting or filtering the friend images on the forum screen will be described with reference to a flowchart of Fig. 17.

At step S171, the forum processing unit 262 of the terminal device 131 controls the operation unit 221 etc. to receive a request for sorting the friend images (the icons) on the forum screen 350, for example. For example, when receiving the request for sorting the friend images (the icons) by operation of the sorting button 353 on the forum screen 350, the forum processing unit 262 controls, at step S172, the wireless communication unit 241 or the wired communication unit 242 to transmit such a request to the communication management server 113.

The forum management unit 187 of the communication management server 113 obtains the request at step S181. The forum management unit 187 sorts, at step S182, the friend images on the forum screen 350 according to a sorting condition etc. contained in the request. At step S183, the forum management unit 187 supplies the terminal device 131 as a request source with data of the forum screen 350 on which the friend images have been sorted.

At step S173, the forum processing unit 262 of the terminal device 131 receives such data. At step S174, the forum processing unit 262 displays, on the display unit 231, the forum screen 350 on which the friend images have been sorted.

By sorting as described above, the user 101 more easily sort, in an order desired by the user 101, the friend images displayed on the forum screen 350. Such sorting can move the image of the friend to a more noticeable position, the friend being highly likely to be the communication partner desired by the user 101. Thus, the user 101 can more easily search a desired friend to communicate with another user 101 as the desired friend (or the virtual character 103 corresponding to the desired friend (another user 101)).

Moreover, at step S175, the forum processing unit 262 of the terminal device 131 controls the operation unit 221 etc. to receive a request for filtering (selecting an image to be displayed) the friend images (the icons) on the forum screen 350, for example. For example, when receiving the request for filtering the friend images (the icons) by operation of the filter button 354 on the forum screen 350, the forum processing unit 262 controls, at step S176, the wireless communication unit 241 or the wired communication unit 242 to transmit such a request to the communication management server 113, for example.

At step S184, the forum management unit 187 of the communication management server 113 obtains the request. The forum management unit 187 selects, at step S185, the friend image to be displayed on the forum screen 350 according to a filtering condition etc. contained in the request. At step S186, the forum management unit 187 supplies the terminal device 131 as the request source with data of the forum screen 350 on which the friend images have been filtered (i.e., some of the friend images are not displayed).

At step S177, the forum processing unit 262 of the terminal device 131 receives the data. At step S178, the forum processing unit 262 displays, on the display unit 231, the forum screen 350 on which the friend images have been filtered.

By filtering as described above, the user 101 can more easily narrow the friend images displayed on the forum screen 350 according to a condition desired by the user 101. For example, in the case of many friends of the user 101, when the user 101 selects the communication partner, the user 101 needs to select a desired one from many friend images on the forum screen 350, and therefore, there is a probability that a complicated process is required. On the other hand, narrowing is performed as described above according to the condition desired by the user 101, and therefore, the number of friend images displayed on the forum screen 350 can be reduced in a manner desired by the user 101. That is, the friend images displayed on the forum screen 350 can be narrowed such that the image of the friend being highly likely to be the communication partner desired by the user 101 remains. Thus, the user 101 can more easily search a desired friend to communicate with another user 101 as the desired friend (or the virtual character 103 corresponding to the desired friend (another user 101)).

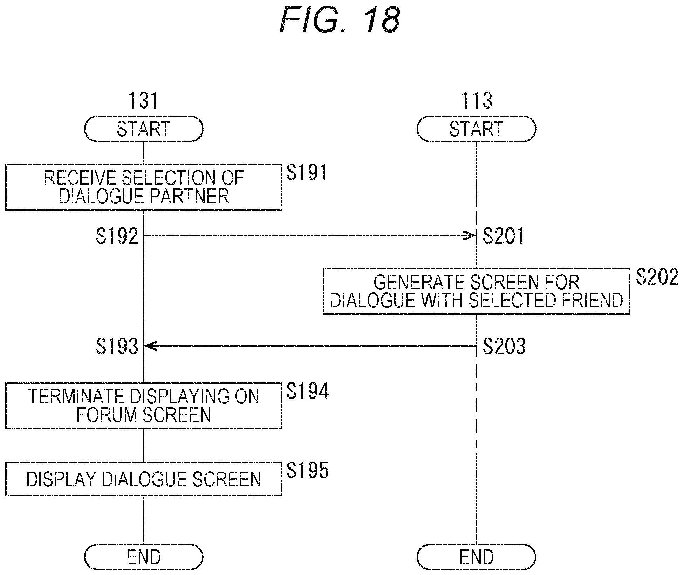

Next, an example of a flow in processing for selecting the communication partner on the forum screen will be described with reference to a flowchart of Fig. 18.

At step S191, the forum processing unit 262 of the terminal device 131 controls the operation unit 221 etc. to receive selection of the friend image (the icon) on the forum screen 350, for example. That is, the forum processing unit 262 receives user's communication partner selection using the friend images (the icons) on the forum screen 350.

When receiving selection of the communication partner, the forum processing unit 262 controls, at step S192, the wireless communication unit 241 or the wired communication unit 242 to transmit the request to the communication management server 113, for example.

The forum management unit 187 of the communication management server 113 obtains the request at step S201. At step S202, the communication management unit 189 of the communication management server 113 generates, according to the request, the dialogue screen as the GUI for communication with the friend selected by the user 101. The dialogue screen will be described in detail later. When the dialogue screen is generated, the communication management unit 189 controls, at step S203, the communication unit 164 etc. to supply the terminal device 131 as the request source with data of the dialogue screen, for example.

At step S193, the communication processing unit 263 of the terminal device 131 controls the wireless communication unit 241 or the wired communication unit 242 to receive the data of the dialogue screen, for example. At step S194, the forum processing unit 262 controls the display unit 231 to terminate displaying of the forum screen 350. At step S195, the communication processing unit 263 displays, on the display unit 231, the dialogue screen obtained at step S193.

By each type of processing as described above, the communication partner can be selected using the forum screen 350, and the user 101 can more easily select the communication partner only by selection of the friend image.

### <Overview of Communication between Users>

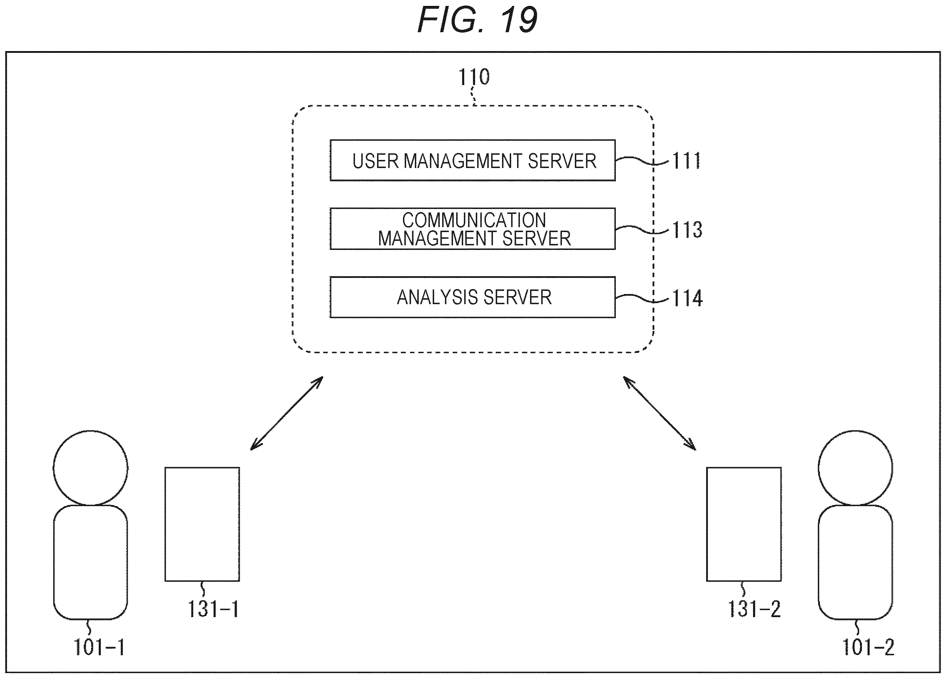

Next, communication between the users 101 will be described. For example, in the case where the user 101-1 and the user 101-2 communicate with each other as indicated by the double-headed arrow 104-1 of Fig. 1, a message of the user 101-1 generated at the terminal device 131-1 is, as illustrated in Fig. 19, transmitted to the terminal device 131-2 of the user 101-2, and is displayed at the terminal device 131-2 of the user 101-2. Conversely, a message of the user 101-2 generated at the terminal device 131-2 is transmitted to the terminal device 131-1 of the user 101-1, and is displayed at the terminal device 131-1 of the user 101-1.

Such exchange of the messages is managed by the communication management server 113. The communication management server 113 uses, e.g., information of the user management server 111 to manage communication as described above.

Moreover, at this point, the communication management server 113 uses the analysis server 114 etc. to analyze the exchanged messages, and then, provides these messages with feeling expressions corresponding respectively to the messages. Thus, at the terminal device 131 on a message reception side, the message and the feeling expression are together displayed. Although the feeling expressions will be described in detail later, the feeling expressions are provided by an expression of a facial image of the user 101 as a message sender and a predetermined staging image (a predetermined staging effect), for example. With this configuration, the power of expression in communication can be improved. Note that the feeling expression may be also displayed on a message transmission side (the details will be described later).

### <Flow in Processing for Communication between Users>

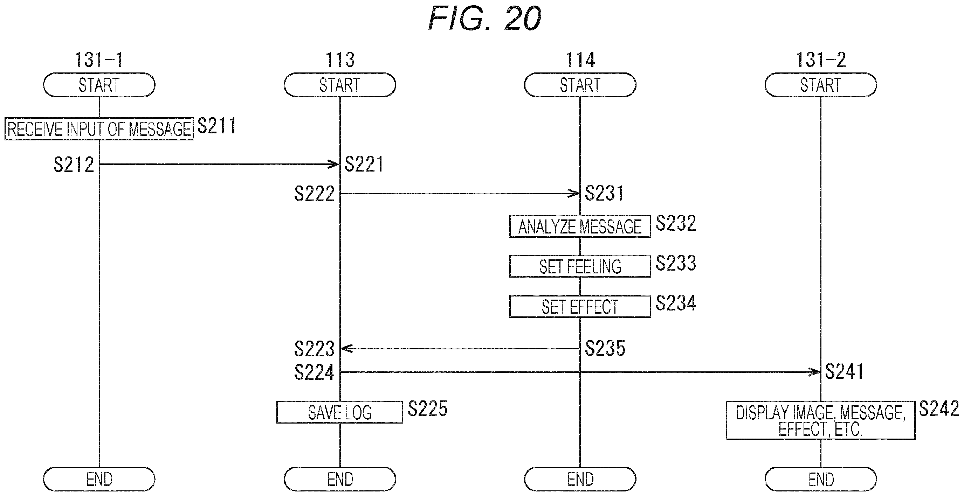

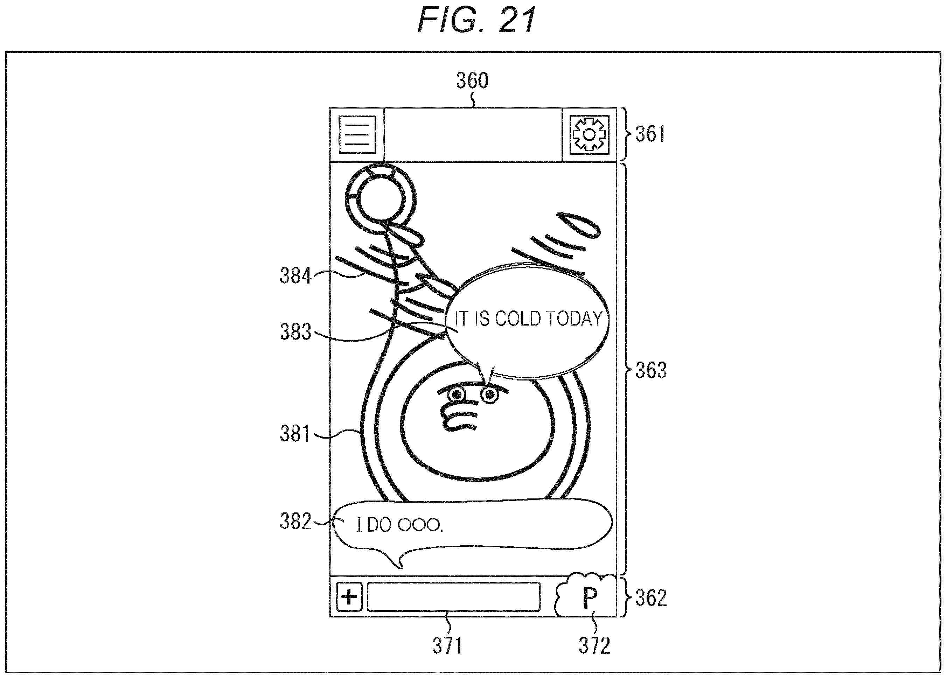

An example of a flow in processing for communication between the users will be described with reference to a flowchart of Fig. 20. If necessary, such an example will be described with reference to Figs. 21 to 25. Note that description will be made supposing that the message sender is the user 101-1 (the terminal device 131-1) and a destination is the user 101-2 (the terminal device 131-2). The users 101 are not particularly distinguished from each other, and the terminal devices 131 are not particularly distinguished from each other. Thus, in the case where a message is transmitted from any one of the users 101 (the terminal devices 131) to another one of the users 101 (the terminal devices 131), a process similar to that described below can be performed (description below is applicable).

At step S211, the communication processing unit 263 of the terminal device 131-1 as the message sender controls the operation unit 221 etc. to receive input of a message. The user 101-1 inputs the message on the dialogue screen displayed on the display unit 231 of the terminal device 131-1.

A dialogue screen 360 as illustrated in Fig. 21 is displayed on the display unit 231 of the terminal device 131 performing communication, for example. The dialogue screen 360 is displayed across the entirety of a display region of the display unit 231. As in the example of Fig. 21, the dialogue screen 360 may include a menu bar 361, an operation bar 362, and a communication display region 363.

Various menus such as settings and an information indication are displayed in the menu bar 361. The user 101 can operate the menu bar 361 (i.e., select a desired menu) to execute various functions. A message input field 371 into which a message to be transmitted is input and a transmission button 372 configured to request transmission of the input message are displayed in the operation bar 362, for example. The user 101 can operate the operation bar 362 (i.e., input the message or operate the transmission button 372) to perform communication (message transmission).

A communication state, i.e., information on messages and images to be exchanged, is displayed in the communication display region 363. The user 101 can view an indication in the communication display region 363 to grasp the state in one's own communication (e.g., the exchanged messages and images).

Then, as illustrated in Fig. 21, a majority of the dialogue screen 360 (i.e., a majority of the display region of the display unit 231) is occupied by the communication display region 363. That is, a wider region is ensured as a region indicating the communication state. Thus, a wider variety of expression is available. That is, the power of expression in communication can be improved.

In a system providing communication between individual users, when each user can utilize, as a terminal device, a mobile information processing device such as a mobile phone, a smartphone, or a tablet device, each user can more freely utilize the system at a wider variety of locations during a wider variety of time periods. Thus, convenience of the system is improved. That is, when the above-described mobile information processing device is applicable as the terminal device 131, convenience of the communication system 100 can be improved.

However, a display unit of such a mobile information processing device is relatively small in a typical case. For this reason, an indication of a communication state such as messages and images tends to be small, and there is a probability of reducing the power of expression in communication. Reduction in the power of expression in communication leads to lower preference and entertainment and to a lower level of user satisfaction and a lower user interest. As a result, there is a probability of lowering intention to utilize a communication tool. For these reasons, the wider region is ensured as the region indicating the communication state as described above, and therefore, reduction in the power of expression in communication can be suppressed.

Moreover, as illustrated in Fig. 21, only the most recent communication state may be displayed in the communication display region 363. That is, a majority of the display region of the display unit 231 may be used to display only the most recent communication state. For example, in the communication display region 363 illustrated in Fig. 21, the following regions are formed: an image display region 381 where an image (an icon) indicating the communication partner (and the partner's feeling); a transmitted message display region 382 where the last message transmitted to the partner is displayed; and a received message display region 383 where the last message received from the partner is displayed. However, e.g., a message history as a list of previously-transmitted/received messages is not displayed.

Typically, in communication, the last transmitted/received message is more important than previously-transmitted/received messages. However, when the message history etc. are displayed, a large portion of the communication display region 363 is occupied for displaying the message history, and for this reason, an indication of the most-important most-recent communication state might be small due to displaying of the message history. That is, there is a probability of reducing the power of expression of the most-important portion in communication.

For these reasons, the configuration of the communication display region 363 may be simplified to the maximum extent so that the most-important most-recent communication state can be displayed in a wider region. With this configuration, the power of expression in each of the image display region 381, the transmitted message display region 382, and the received message display region 383 can be increased. Thus, for the communication system 100, lowering of the level of satisfaction of the user 101 and the interest of the user 101 can be suppressed.

Further, in communication as described above, messages and a feeling expression of the user 101 can be together exchanged. A specific method for making such a feeling expression is optional. For example, the feeling expression may be made using an expression of an image indicating the message sender (the user 101 or the virtual character 103).

For example, an image corresponding to feeling presumed from transmitted/received messages may be selected from the images registered respectively for the types of feeling in default setting as described above, and then, may be displayed in the image display region 381. For example, in the case where the feeling of "pleasant" is presumed from transmitted/received messages (messages displayed in the received message display region 383), one (e.g., an acquired image of the smiling user 101) of the images pre-registered respectively for the types of feeling may be displayed in the image display region 381, the displayed image corresponding to the feeling of "pleasant."

With this configuration, the power of expression in communication can be more increased as compared to the case of simply displaying transmitted/received messages. Note that the above-described image is not necessarily an image directly indicating the feeling of the message sender (the user 101 or the virtual character 103). For example, such an image is not necessarily the facial image of the message sender. Note that the image is preferably an image from which feeling can be easily grasped.

Alternatively, the feeling expression may be made using a staging image (a staging effect) other than the image indicating the message sender, for example. The staging image (the staging effect) is optional. For example, such an image may be a predetermined stamp image indicating feeling. Alternatively, the staging image may be a design (optional visual effects such as a size, a shape, a pattern, and a color) of a display region of a message displayed in the communication display region 363, or a design (optional visual effects such as a font type, a size, a shape, a pattern, and a color) of a message. As another alternative, the staging image may be a staging effect of partially or entirely changing an indication in the communication display region 363.

For example, in the case of the example of Fig. 21, a stamp image 384 of a design indicating wind and rains and corresponding to a message of "It is cold today" in the received message display region 383 is displayed in the received message display region 363. This produces a staging effect of more emphasizing "coldness" as compared to the case of simply displaying the message of "It is cold today." That is, the power of expression in communication can be increased.

Moreover, in the case of the example of Fig. 21, the transmitted message display region 382 and the received message display region 383 are in a shape of a so-called speech balloon, for example. The feeling expression may be made using, e.g., a design of such a speech balloon or a design of a message displayed in the speech balloon. In this case, a design of the transmitted message display region 382 and a design of the message displayed in the transmitted message display region 382 indicate the feeling expression (the feeling expression corresponding to the transmitted message) of the user 101 (or the virtual character 103 corresponding to the user 101) of the terminal device 131. The design of the received message display region 383 and the design of the message displayed in the received message display region 383 indicate the feeling expression (the feeling expression corresponding to the received message) of the user 101 (or the virtual character 103 corresponding to the user 101) as the communication partner. This can more increase the power of expression in communication as compared to the case of simply displaying the transmitted/received messages as text data.

Note that a plurality of staging images (staging effects) may be combined together. For example, plural types of staging images (staging effects) such as a stamp image and a change in a speech balloon design may be combined together.

The staging image (the staging effect) will be described in detail later. Since the feeling expression is made using the stating image (s) (the staging effect(s)) as described above, the power of expression in communication can be more increased as compared to simple communication for transmitting/receiving messages.

Note that the above-described feeling expression may be added after the feeling has been determined on the basis of a message analysis result. Although details will be described later, with this configuration, a unit for detecting the expression of the user, such as a camera, is not necessary, leading to cost reduction. Moreover, no complicated user process for making an expression according to message contents is required, for example.

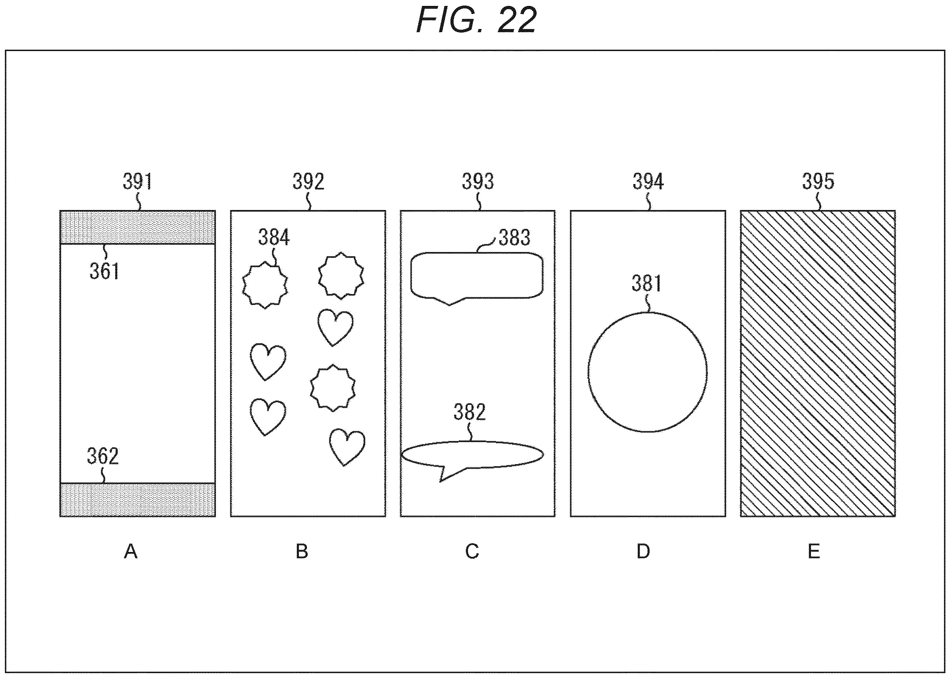

The dialogue screen 360 as described above may have a hierarchy as illustrated in Fig. 22. For example, the dialogue screen 360 includes a first level 391 (A of Fig. 22) having the menu bar 361 and the operation bar 362, a second level 392 (B of Fig. 22) having the stamp images 384, a third level 393 (C of Fig. 22) having the transmitted message display region 382 and the received message display region 383, a fourth level 394 (D of Fig. 22) having the image display region 381, and a fifth level 395 (E of Fig. 22) having the background image. The images of these levels are superimposed on each other to form the dialogue screen 360.

Thus, the layout of the image of one of the levels can be easily made regardless of display regions of the images of other levels. For example, the images of different levels can easily overlap with each other. In the case where the dialogue screen 360 has a single level, component portions of the screen do not overlap with each other, and for this reason, the layout of these portions should be taken into consideration in a comprehensive manner. Thus, there are many layout limitations. Further, in order to obtain a resultant image appearing as if the component portions overlap with each other, such an image needs to be newly generated.

On the other hand, the dialogue screen 360 is hierarchized (multilayered) as described above, and therefore, the layout of the image of each level can be independently controlled. Thus, the degree of freedom in the image layout can be improved. That is, since the dialogue screen 360 is hierarchized as described above, the power of expression in the communication display region 363, i.e., the power of expression in communication, can be easily increased.

Needless to say, the hierarchy illustrated in Fig. 22 is an example, and the dialogue screen 360 may have other hierarchies than above. The image formed at each level is also optional. In addition, not only the overlapping order of the levels but also the number of levels is optional.

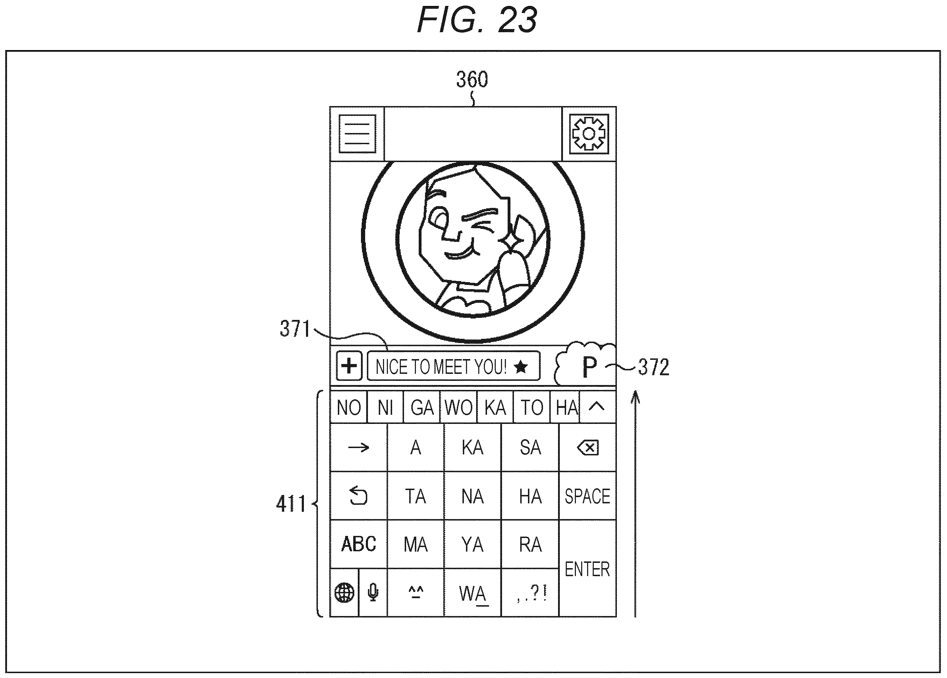

The user inputs a message (a message to be transmitted) on the dialogue screen 360 as described above. For example, when the user selects the message input field 371 of the operation bar 362, a message input screen 411 as illustrated in Fig. 23 is displayed as if the message input screen 411 rises from the lower side of the dialogue screen 360 as viewed in the figure. When the user 101 operates the message input screen 411, a message is, according to such operation, displayed in the message input field 371. After completion of input of the message, when the user 101 operates the transmission button 372, the message input to the message input field 371 is, as a transmission message, transmitted to the terminal device 131-2 operated by the user 101-2 as the communication partner. Then, the message is displayed on the display unit 231.

That is, returning to Fig. 20, when receiving input of the message at step S211, the communication processing unit 263 of the terminal device 131-1 transmits, at step S212, the receivedmessage etc. to the communication management server 113. At step S221, the communication management unit 189 of the communication management server 113 receives the message etc., and then, at step S222, supplies the analysis server 114 with the received message etc.

At step S231, the message analysis unit 191 of the analysis server 114 obtains the message etc., and then, at step S232, analyzes the message. At step S233, the feeling setting unit 192 sets feeling corresponding to the message on the basis of a message analysis result. At step S234, the effect setting unit 193 sets an effect (a staging image) corresponding to the set feeling.

At step S235, the effect setting unit 193 supplies the communication management server 113 with information on the set feeling and the effect. When the communication management unit 189 of the communication management server 113 obtains the information on the feeling and the effect at step S223, an image corresponding to the feeling and indicating the message sender is obtained on the basis of the user information etc. managed by the user information management unit 181 of the user management server 111. Then, the dialogue screen 630 is generated using the transmitted message, the image, the effect, etc.

At step S224, the communication management unit 189 supplies the message reception side terminal device 131-2 with data of the dialogue screen 630 to which the message and the feeling expression have been added as described above. The communication processing unit 263 of the terminal device 131-2 obtains the data of the dialogue screen 630 at step S241. At step S242, the communication processing unit 263 of the terminal device 131-2 displays the dialogue screen 360 on the display unit 231. That is, the image, the message, the effect, etc. set by processing of the communication management server 113 and the analysis server 114 and indicating the message sender are displayed on the dialogue screen 360.

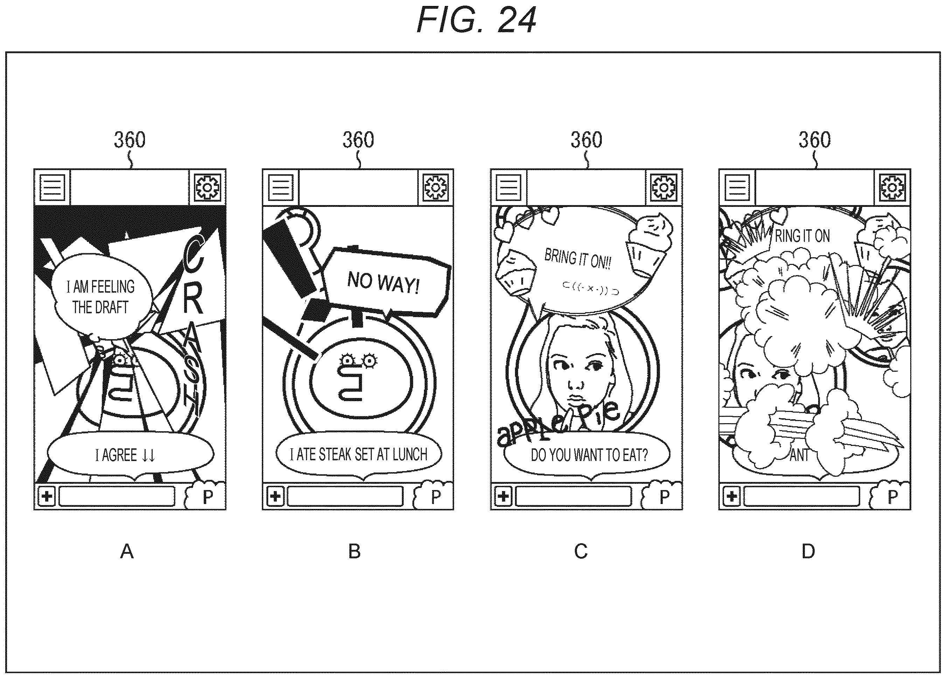

Fig. 24 illustrates examples of the staging image (the staging effect) . In the example of A of Fig. 24, the staging of freezing and cracking up the entirety of an image displayed in the communication display region 363 is, as the staging image (the staging effect), made to get the punch line to a joke of "I am feeling the draft" as a received message (i.e., to emphasize that the received message is a joke).

Moreover, in the example of B of Fig. 24, a stamp image of an exclamation mark is displayed in the communication display region 363, and the design of the received message display region 383 and the design of the message displayed in the received message display region 383 are changed to those emphasizing the feeling of surprise.

Further, in the example of C of Fig. 24, stamp images associated with desserts such as cupcakes, forks, and spoons are displayed according to a message regarding eating in the communication display region 363.

In addition, in the example of D of Fig. 24, a stamp image of explosion is, for a received message of "Bring it on!, " displayed across the entirety of the communication display region 363 (i.e., superimposed on the image display region 381, the transmitted message display region 382, the received message display region 383, etc.).

As in the above-described examples, limitations on the staging image (the staging effect) are reduced as much as possible, leading to a greater power of expression. For example, it is preferred that the staging image (the staging effect) can be displayed at an optional position of the display region. For example, it is preferred that the staging image (the staging effect) can be displayed across the entirety of the display region (a wider region). Moreover, it is preferred that the staging image (the staging effect) can be displayed with such an image being superimposed on other messages or images at an optional level, for example. For example, the staging image (the staging effect) may be displayed on the near side with respect to a message or an image indicating user's feeling, or may be displayed on the far side with respect to the message or the image indicating the user's feeling. As described above, the degree of freedom in displaying of the staging image (the staging effect) is improved, and therefore, the power of expression in communication can be increased.

Needless to say, the staging image (the staging effect) is optional, and may be other examples than each example of Fig. 24. For example, sound may be output in association with an image.

Note that the staging image (the staging effect) may be displayed not only on the message reception side but also on the message transmission side. In this case, when the staging image (the staging effect) is displayed on the message transmission side in a similar manner to the message reception side, there is a probability that it is difficult for the user 101 to recognize whether the staging image (the staging effect) is for a transmitted message or a received message. For this reason, the method for displaying the staging image (the staging effect) may be different between the case of displaying the staging image on the message reception side and the case of displaying the staging image on the message transmission side (i.e., the staging images (the staging effects) on the message reception side and the message transmission side are asymmetric to each other).

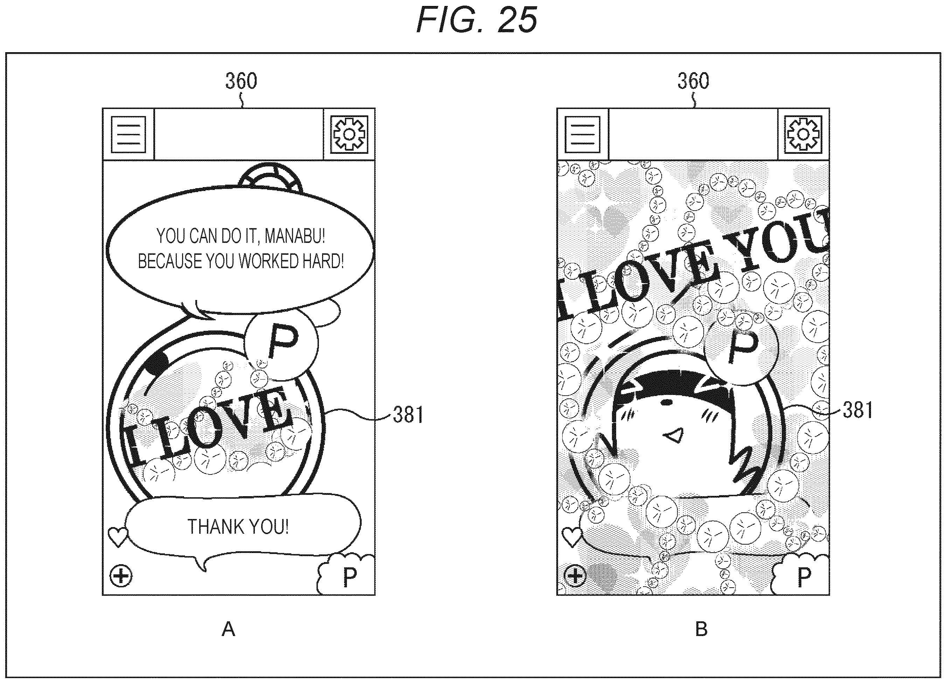

For example, even in the case where the staging image (the staging effect) is, as illustrated in B of Fig. 25, displayed across the entirety of the communication display region 363 on the message-reception-side dialogue screen 360, the staging image (the staging effect) may be displayed only in the image display region 381 on the message-transmission-side dialogue screen 360 as illustrated in A of Fig. 25.

With this configuration, the user 101-1 on the message transmission side can easily understand that the staging image (the staging effect) is for the communication partner (the user 101-2). Moreover, the displayed staging image (the displayed staging effect) allows the user 101-1 on the message transmission side to grasp the type of staging image (staging effect) performed on the message reception side according to the message transmitted by the user 101-1 oneself. That is, this can improve the power of expression in communication.

Returning to Fig. 20, at step S225, the history management unit 190 of the communication management server 113 saves, as a log, the messages transferred as described above and the feeling expression added to each message, and manages the messages and the feeling expressions. A save location for such a log may be the storage unit 163 of the communication management server 113 or not-shown other data servers, for example.

By each type of processing as described above, communication between the users can be realized, and the power of expression in such communication can be improved.

### <Overview of Communication between User and Virtual Character>

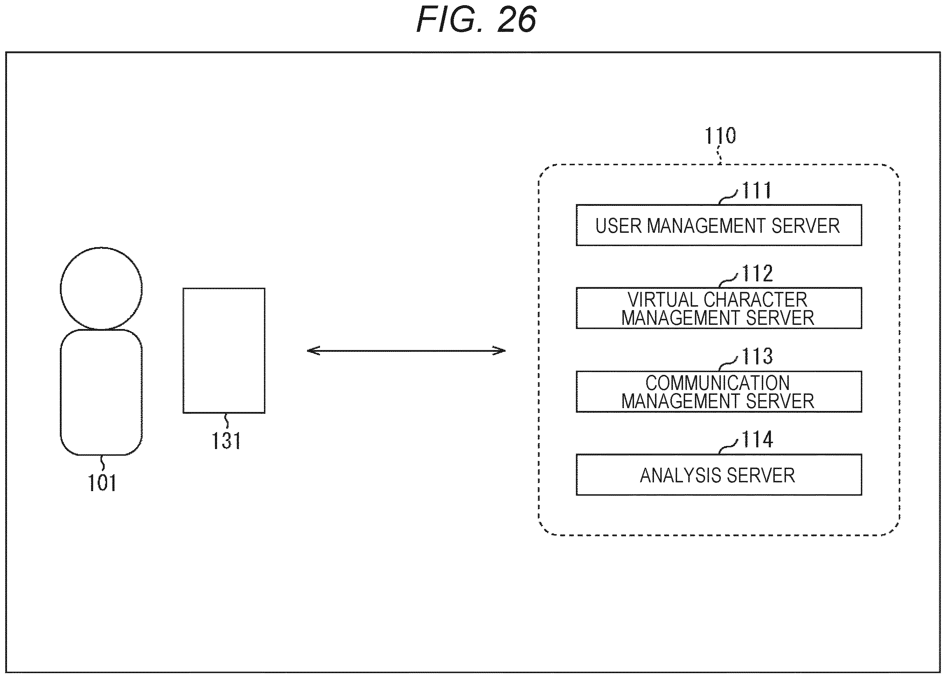

Next, communication between the user 101 and the virtual character 103 will be described. First, communication between the user 101 and the virtual character 103 corresponding to another user 101 will be described (e.g., the double-headed arrow 104-2 in Fig. 1). In this case, a message of the virtual character is generated by the virtual space 102, i.e., the server 110 etc. That is, a message of the user 101 generated at the terminal device 131 is supplied to the server 110 as illustrated in Fig. 26. Servers of the server 110 cooperate to generate a response message of the virtual character 103 for the message of the user 101 and a feeling expression according to the response message. The response message and the feeling expression are transmitted to the terminal devices 131 as a message source, and are displayed on the display unit 231.

That is, the communication management server 113 uses, e.g., information of the user management server 111 to manage such communication. Moreover, the communication management server 113 uses the virtual character management server 112 to generate the message of the virtual characters 103. Further, the communication management server 113 uses the analysis server 114 to generate and add the feeling expression according to the message of the virtual character 103.

That is, even in the case of communication with the virtual character 103, not only the message but also the feeling expression of the virtual character 103 is displayed on the display unit 231 of the terminal device 131. For example, in the method for acquiring a facial image of the user in message transmission to use such an image as a feeling expression, it is difficult to express the feeling of the virtual character 103. However, in the case of the communication system 100, the feeling expression is generated on the basis of transmitted/received messages as described above. Thus, the feeling of the virtual character 103 can be expressed in a similar manner to the case of the user 101. That is, the power of expression in communication can be improved.

### <Flow in Processing for Communication between User and Virtual Character>

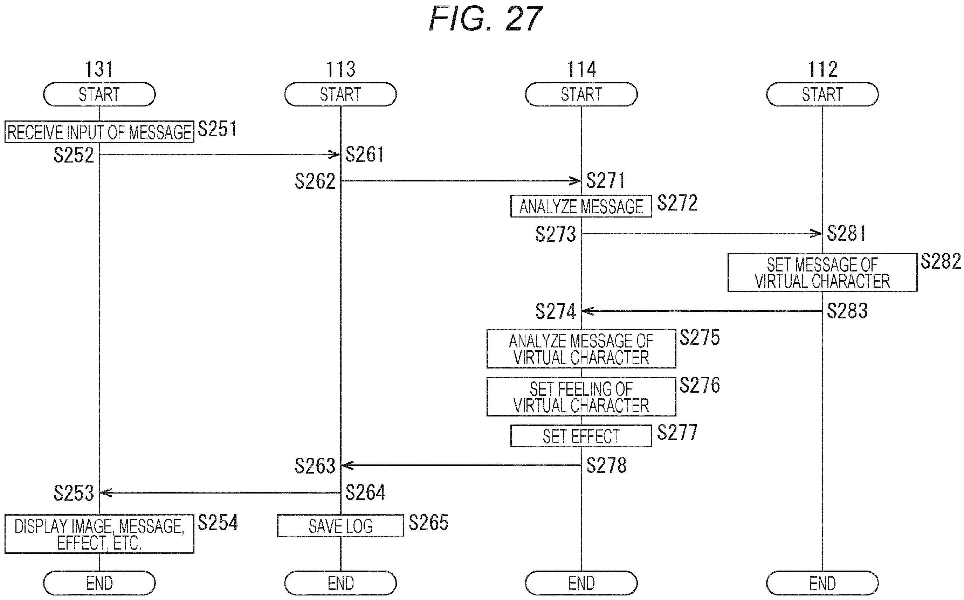

An example of a flow in processing for communication between the user and the virtual character will be described with reference to a flowchart of Fig. 27.

At step S251, the communication processing unit 263 of the terminal device 131 as the message source controls the operation unit 221 etc. to receive input of a message, for example. The user 101 inputs the message on the dialogue screen 360 displayed on the display unit 231 of the terminal device 131.

When receiving input of the message at step S251, the communication processing unit 263 of the terminal device 131 transmits, at step S252, the received message etc. to the communication management server 113. At step S261, the communication management unit 189 of the communication management server 113 receives the message etc., and at step S262, supplies the analysis server 114 with the received message etc.

At step S271, the message analysis unit 191 of the analysis server 114 obtains the message etc., and at step S272, analyzes the message. At step S273, the message analysis unit 191 of the analysis server 114 supplies the virtual character management server 112 with the message and an analysis result thereof.

At step S281, the message setting unit 186 of the virtual character management server 112 obtains the message and the analysis result thereof. At step S282, the message setting unit 186 sets a message of the virtual character 103 as a response message on the basis of the message, the message analysis result, and the setting information of the virtual character 103 managed by the setting management unit 183. At step S283, the message setting unit 186 supplies the analysis server 114 with the set message of the virtual character 103.

At step S274, the message analysis unit 191 of the analysis server 114 analyzes the message of the virtual character 103. At step S275, the feeling setting unit 192 sets the feeling of the virtual character 103 on the basis of a message analysis result. At step S277, the effect setting unit 193 sets an effect (a staging image) corresponding to the set feeling.

At step S278, the effect setting unit 193 supplies the communication management server 113 with information on the set feeling and effect. At step S263, when obtaining the information on the feeling and the effect, the communication management unit 189 of the communication management server 113 obtains an image indicating the virtual character 103 according to the feeling on the basis of, e.g., the user information managed by the user information management unit 181 of the user management server 111, and uses the message and image of the virtual character 103, the effect, etc. to generate the dialogue screen 630.

At step S264, the communication management unit 189 supplies the terminal device 131 as the message source with data of the dialogue screen 630 to which the message and the feeling expression have been added as described above. At step S253, the communication processing unit 263 of the terminal device 131 obtains the data of the dialogue screen 630. At step S254, the communication processing unit 263 of the terminal device 131 displays the dialogue screen 360 on the display unit 231. That is, the image indicating the virtual character 103 (the feeling of the virtual character 103), the message of the virtual character 103, the effect indicating the feeling of the virtual character 103, etc. are displayed on the dialogue screen 360, the displayed image, message, effect, etc. being set by processing of the communication management server 113 and the analysis server 114.

At step S265, the history management unit 190 of the communication management server 113 saves, as a log, the messages transferred as described above and the feeling expression added to each message, and manages the messages and the feeling expressions. A save location for such a log may be the storage unit 163 of the communication management server 113 or not-shown other data servers, for example.

By each type of processing as described above, communication between the user and the virtual character can be realized, and the power of expression in such communication can be improved.

### <Other Types of Communication>

Note that in communication between the user 101 and the virtual character 103 as described above, data exchanged as communication by the user 101 is optional, and is not limited to message data. For example, such data may be data of an image with a predetermined motif, such as a stamp image.

Moreover, not only when data (e.g., a message or a stamp image) is transmitted from the virtual character 103, but also when the virtual character 103 receives data, the feeling of the virtual character 103 may be expressed. For example, in reception of a particular pre-set message or data of an image with a particular design, the feeling of the virtual character 103 may be expressed in the terminal device 131 as a data source.

Further, predetermined data may be transmitted to the virtual character 103 so that the ability to express the feeling of the virtual character 103 can be enhanced.

### <Flow in Processing for Other Types of Communication with Virtual Character>

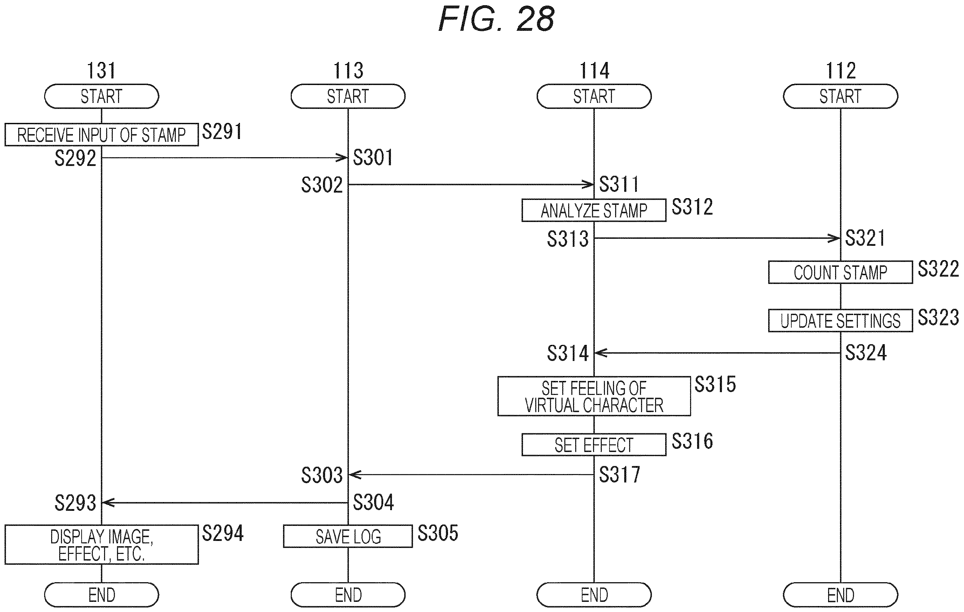

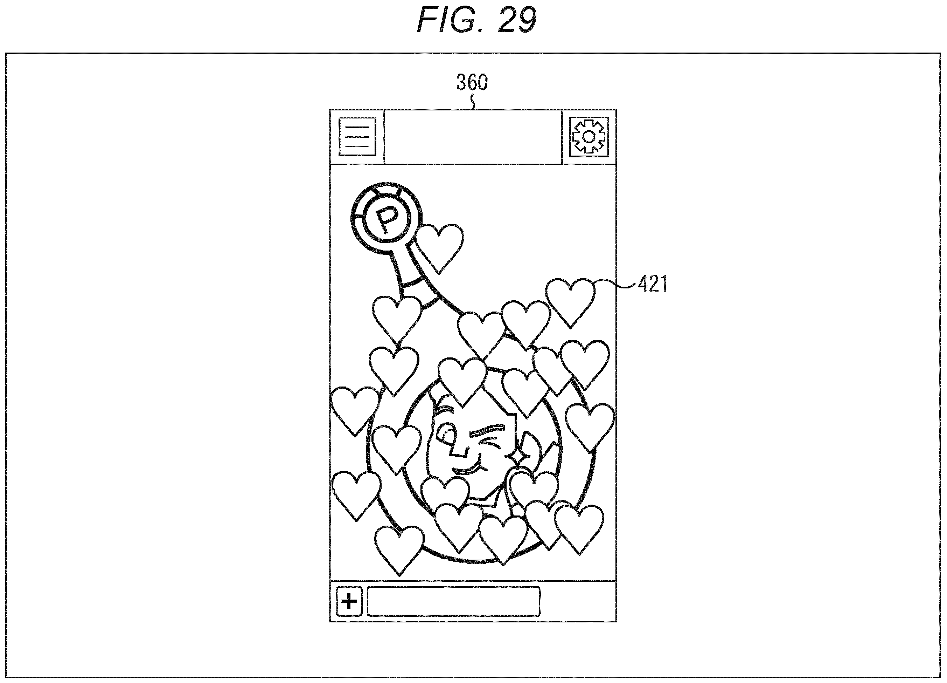

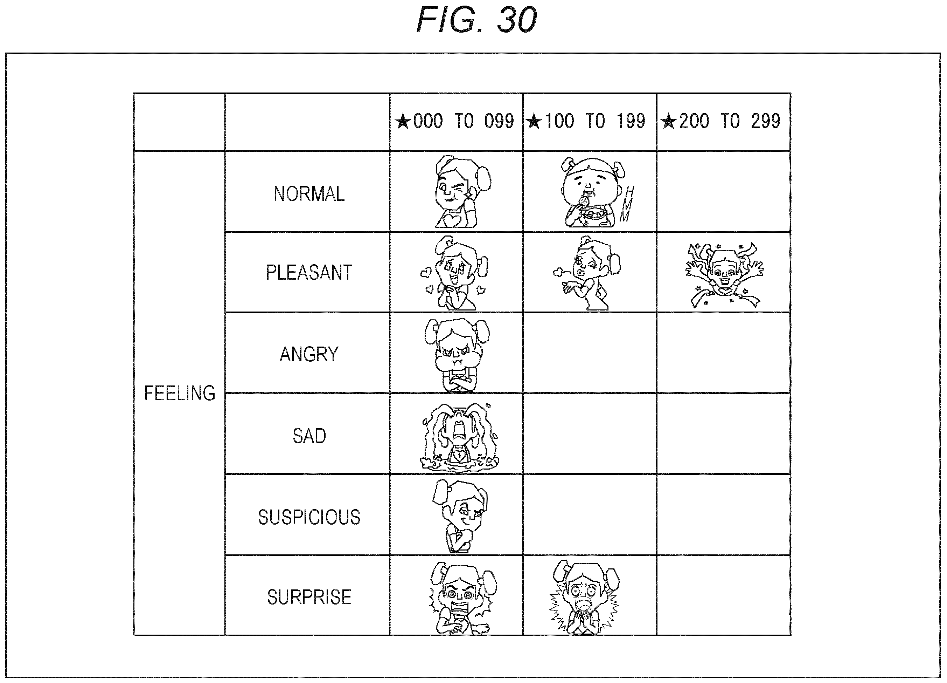

An example of a flow in processing for other types of communication with the virtual character will be described with reference to a flowchart of Fig. 28. If necessary, such an example will be described with reference to Figs. 29 and 30. Note that instead of a message, data of a stamp image is transmitted/received as communication.

At step S291, the communication processing unit 263 of the terminal device 131 as a stamp image source controls the operation unit 221 etc. to receive input of a message, for example. The user 101 inputs the message on the dialogue screen 360 displayed on the display unit 231 of the terminal device 131.

For example, as illustrated in Fig. 29, the user 101 performs a predetermined operation for inputting stamp images, and taps the dialogue screen 360 to input the stamp images to the tapped positions. In the example of Fig. 29, heart-shaped stamp images 421 input by the user are displayed on the dialogue screen 360. The position of each stamp image 421 may be any position in the communication display region 363.

When stamp images having a predetermined shape (e.g., a heart shape) are input as described above, the feeling of the virtual character 103 on a reception side of data of each stamp image is expressed on the dialogue screen 360 of the terminal device 131. That is, in this case, no response using data such as a message or a stamp image is made, but response using a feeling expression is made. For example, when the heart-shaped stamp images 421 are input (i.e., transmitted to the virtual character 103) as illustrated in Fig. 29, an expression of an image indicating the virtual character 103 displayed in the image display region 381 may be changed to an expression (e.g., a smiling face) indicating "pleasant."

Moreover, depending on the number of input stamp images 421, the ability to express the feeling of the virtual character 103 may be improved. For example, as illustrated in Fig. 30, the types of expression of images indicating the types of feeling of the virtual character 103 may increase depending on the number of stamp images 421 input as described above. That is, more stamp images 421 result in a more improved power of expression in communication.

Returning to Fig. 28, when receiving input of the stamp images at step S291, the communication processing unit 263 of the terminal device 131 transmits, at step S292, the received stamp images etc. to the communication management server 113. At step S301, the communication management unit 189 of the communication management server 113 receives the stamp images etc., and at step S302, supplies the analysis server 114 with the received stamp images etc.

At step S311, the message analysis unit 191 of the analysis server 114 obtains the stamp images etc., and at step S312, analyzes the stamp images. That is, it is determined whether or not each stamp image is a predetermined stamp image 421 set in advance. At step S313, the message analysis unit 191 of the analysis server 114 supplies the virtual character management server 112 with the stamp images and an analysis result thereof.

At step S321, the setting management unit 183 of the virtual character management server 112 obtains the supplied stamp images and analysis result thereof. When each supplied stamp image is the predetermined stamp image 421 set in advance, the setting management unit 183 counts, at step S322, the number of obtained stamp images 421. At step S323, the setting management unit 183 updates settings of the virtual character 103 according to a counting result (i.e., the number of obtained stamp images 421). For example, as illustrated in Fig. 30, an image (an expression) used as an image indicating each type of feeling is updated (more stamp images result in more images available).

At step S324, the setting management unit 183 supplies the analysis server 114 with information such as the stamp image counting result and the updated settings. At step S314, the feeling setting unit 192 of the analysis server 114 sets the feeling of the virtual character 103 on the basis of the information such as the stamp image counting result and the updated settings. At step S316, the effect setting unit 193 sets an effect (a staging image) corresponding to the set feeling.

At step S317, the effect setting unit 193 supplies the communication management server 113 with information on the set feeling and effect. At step S303, when obtaining the information on the feeling and the effect, the communication management unit 189 of the communication management server 113 obtains, on the basis of, e.g., the user information managed by the user information management unit 181 of the user management server 111, an image indicating the virtual character 103 according to the feeling, and uses such image, effect, etc. to generate the dialogue screen 630.

At step S304, the communication management unit 189 supplies, as described above, the terminal device 131 as the stamp image source with data of the dialogue screen 630 to which the message and the feeling expression have been added. At step S293, the communication processing unit 263 of the terminal device 131 obtains the data of the dialogue screen 630. At step S294, the communication processing unit 263 of the terminal device 131 displays the dialogue screen 360 on the display unit 231. That is, the image indicating the virtual character 103 (the feeling of the virtual character 103), the effect indicating the feeling of the virtual character 103, etc. are displayed on the dialogue screen 360, the displayed image, effect, etc. being set by processing of the communication management server 113 and the analysis server 114.

At step S305, the history management unit 190 of the communication management server 113 saves, as a log, the stamp images transferred as described above and the feeling expression added to each stamp image, and manages the stamp images and the feeling expressions. A save location for such a log may be the storage unit 163 of the communication management server 113 or not-shown other data servers, for example.

By each type of processing as described above, a wider variety of communication between the user and the virtual character can be realized, and the power of expression in such communication can be improved.

Note that communication between the user 101 and the virtual character 103 corresponding to another user has been described above, but communication between the user 101 and the virtual character 103 corresponding to such a user 101 can be also processed in a similar manner to the case of communication between the user 101 and the virtual character 103 corresponding to another user as described above. That is, description made above is applicable to communication between the user 101 and the virtual character 103 corresponding to such a user 101.

### <Overview of Processing for Communication between Another User and Virtual Character>

Note that during communication between another user and the virtual character 103 corresponding to the user 101, information on the contents of such communication may be displayed on the display unit 231 of the terminal device 131 of the user 101.

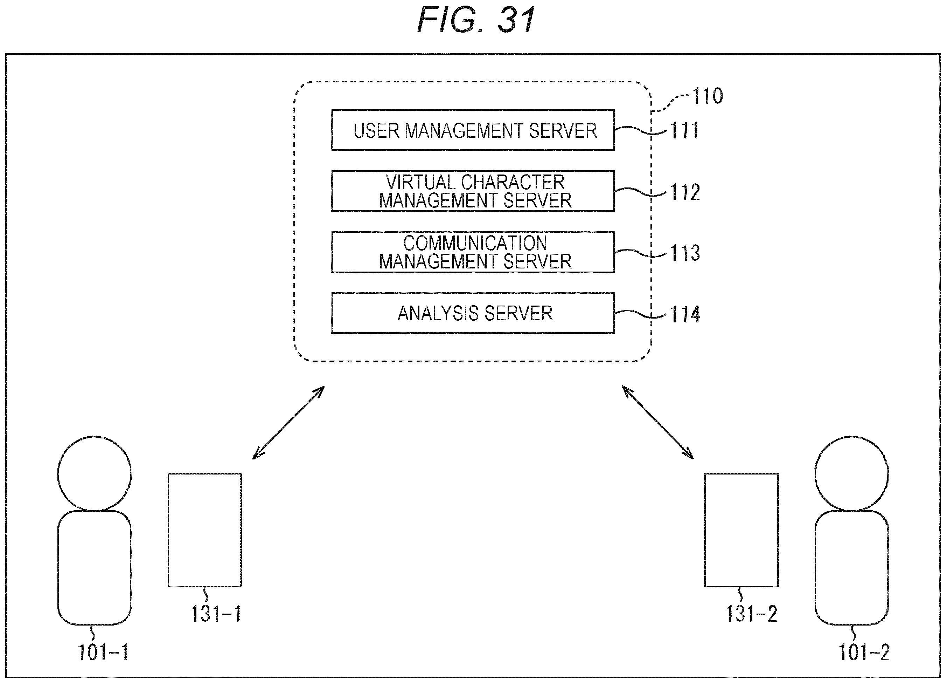

For example, as illustrated in Fig. 31, the user 101-2, as another user, may operate the terminal device 131-2 to communicate with the server 110, and during communication with the virtual character 103-1 corresponding to the user 101-1, information on the contents of such communication may be supplied from the server 110 to the terminal device 131-1, and may be displayed at the terminal device 131-1.

The "image indicating the contents of communication (between another user and the virtual character 103 corresponding to the user 101) may be any types of images. For example, such an image may be entire communication (e.g., exchanged messages or feeling expressions) between another user and the virtual character 103 corresponding to the user 101; an abstract (a summary) of some of the exchanged messages or the feeling expressions; or other types of image or sound than the exchanged messages or the feeling expressions, the image or sound specifically or abstractly indicating the communication state.

Moreover, in the middle of communication between another user and the virtual character 103 corresponding to the user 101, the user 101 may participate in such communication (i.e., may switch positions with the virtual character 103). In this case, during communication between another user and the virtual character 103 corresponding to the user 101, an image for accepting participation in the middle of communication may be displayed on the display unit 231 of the terminal device 131 of the user 101.

For example, as illustrated in Fig. 31, while the user 101-2 operates the terminal device 131-2 to communicate with the server 110 to communicate with the virtual character 103-1 of the user 101-1 as another user, the user 101 may operate the terminal device 131-1 to access the server 110, and in this manner, may participate in communication in the middle thereof. When the user 101-1 has participated in communication in the middle thereof, the state as in the example of Fig. 19 is brought about, and communication between the users is performed.

### <Flow in Processing for Communication between User and Virtual Character of Another User>

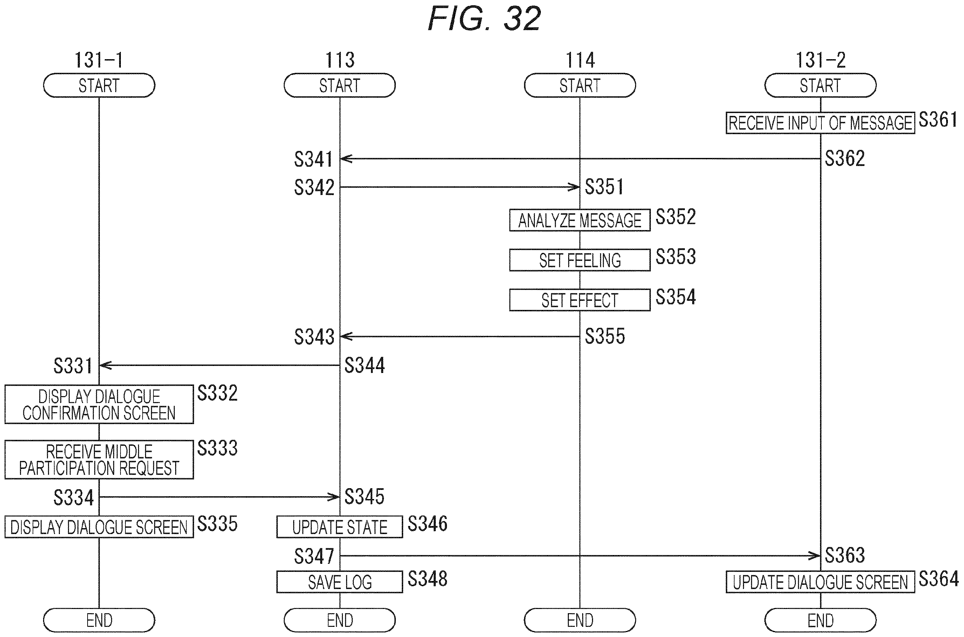

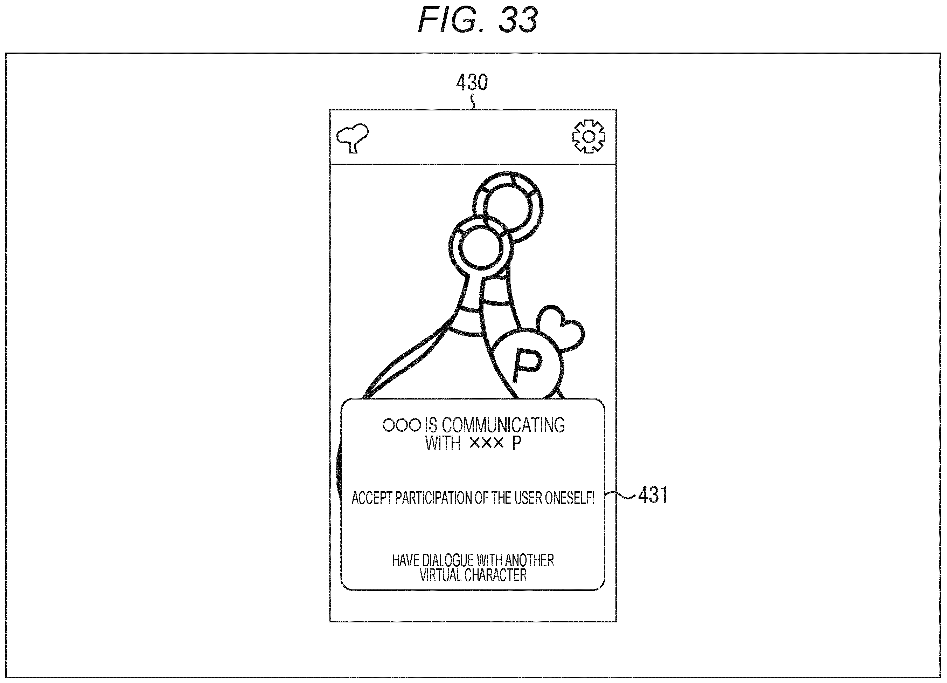

An example of a flow in processing for communication between the user and the virtual character corresponding to another user will be described with reference to a flowchart of Fig. 32. If necessary, such an example will be described with reference to Figs. 33 to 35.

At step S361, the communication processing unit 263 of the terminal device 131-2 as the message source controls the operation unit 221 etc. to receive input of a message. The user 101-2 inputs the message on the dialogue screen 360 displayed on the display unit 231 of the terminal device 131-2.

When receiving input of the message at step S251, the communication processing unit 263 of the terminal device 131-2 transmits, at step S362, the received message etc. to the communication management server 113. At step S341, the communication management unit 189 of the communication management server 113 receives the message etc., and at step S342, supplies the analysis server 114 with the received message etc.

At step S351, the message analysis unit 191 of the analysis server 114 obtains the message etc., and at step S352, analyzes the message. At step S353, the feeling setting unit 192 of the analysis server 114 sets the feeling of the virtual character 103. At step S354, the effect setting unit 193 sets an effect (a staging image) corresponding to the set feeling.

Note that in the case where the response message of the virtual character 103 is generated as in the example of Fig. 27, the virtual character management server 112 generates the response message in a manner similar to that of the case of Fig. 27, and the analysis server 114 sets the feeling and the effect (the staging image).

At step S354, the effect setting unit 193 supplies the communication management server 113 with information on the set feeling and effect. At step S343, when obtaining the information on the feeling and the effect, the communication management unit 189 of the communication management server 113 obtains, on the basis of, e.g., the user information managed by the user information management unit 181 of the user management server 111, an image indicating the virtual character 103 according to the feeling, and uses the message, image, effect, etc. of the virtual character 103 to generate a dialogue confirmation screen.

Note that in this case, the dialogue screen is supplied to the terminal device 131-2 as described with reference to Fig. 27 etc., and such description will not be repeated.

At step S344, the communication management unit 189 supplies the virtual character side terminal device 131-1 with data of the dialogue confirmation screen. At step S331, the interruption processing unit 264 of the terminal device 131-1 obtains the data of the dialogue confirmation screen. At step S332, the communication processing unit 263 of the terminal device 131-1 displays the dialogue confirmation screen on the display unit 231.

Fig. 33 is a view of an example of the dialogue confirmation screen. As illustrated in Fig. 33, an image indicating that the user oneself and the virtual character 103 corresponding to another user are communicating with each other is displayed on a dialogue confirmation screen 430, and a middle participation screen 431 to be operated for middle participation by the user 101 is also displayed on the dialogue confirmation screen 430. On the middle participation screen 431, an indication of having communication between the user oneself and the virtual character 103 corresponding to another user, such as "... is communicating with ... P," is displayed. When the user 101 taps a link of "Accept participation of the user oneself" on the middle participation screen 431, the communication partner of the user 101-2 changes from the virtual character 103-1 to the user 101-1, and communication between the users begins.

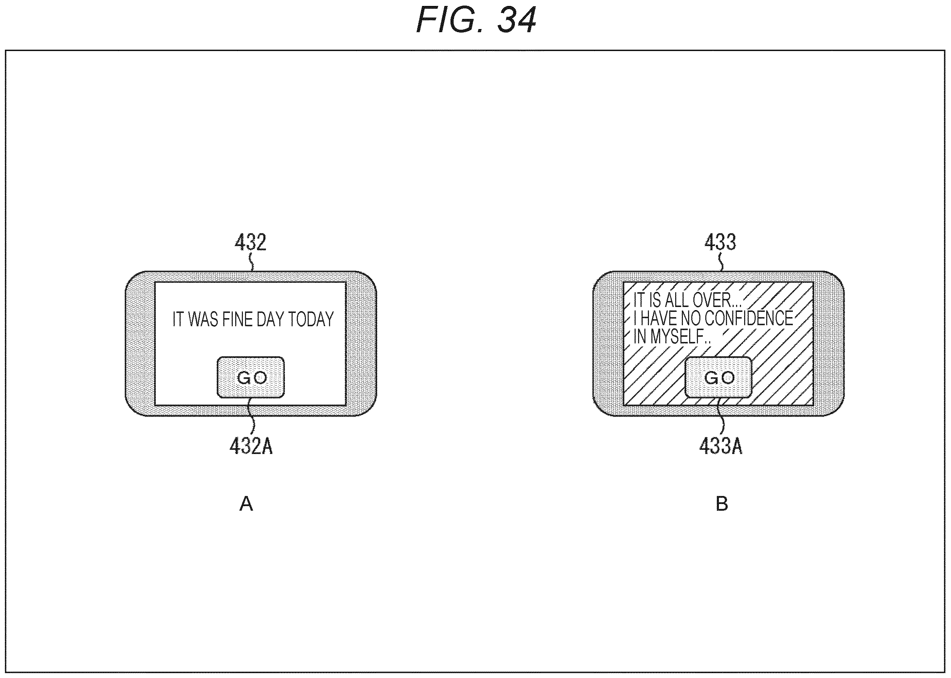

Alternatively, as in a dialogue confirmation screen 432 illustrated in A of Fig. 34, an exchanged message may be displayed. The dialogue confirmation screen 432 is provided with a GO button 432A. When the user 101 operates the GO button 432A, the communication partner of the user 101-2 changes from the virtual character 103-1 to the user 101-1, and then, communication between the users begins.

Alternatively, as in a dialogue confirmation screen 433 illustrated in B of Fig. 34, an indication of an exchanged message may change according to an analysis result of the exchanged message. For example, when a message of "It is all over. I have no confidence in myself" is displayed to indicate a predetermined type of feeling as illustrated in Fig. 34, the color or pattern of the dialogue confirmation screen 433 may change (in the case of an example illustrated in B of Fig. 34, changes to a shaded pattern). The dialogue confirmation screen 433 is provided with a GO button 433A. When the user 101 operates the GO button 433A, the communication partner of the user 101-2 changes from the virtual character 103-1 to the user 101-1, and then, communication between the users begins. As described above, an indication of prompting the user 101 to participate in communication in the middle thereof may be displayed according to situation.

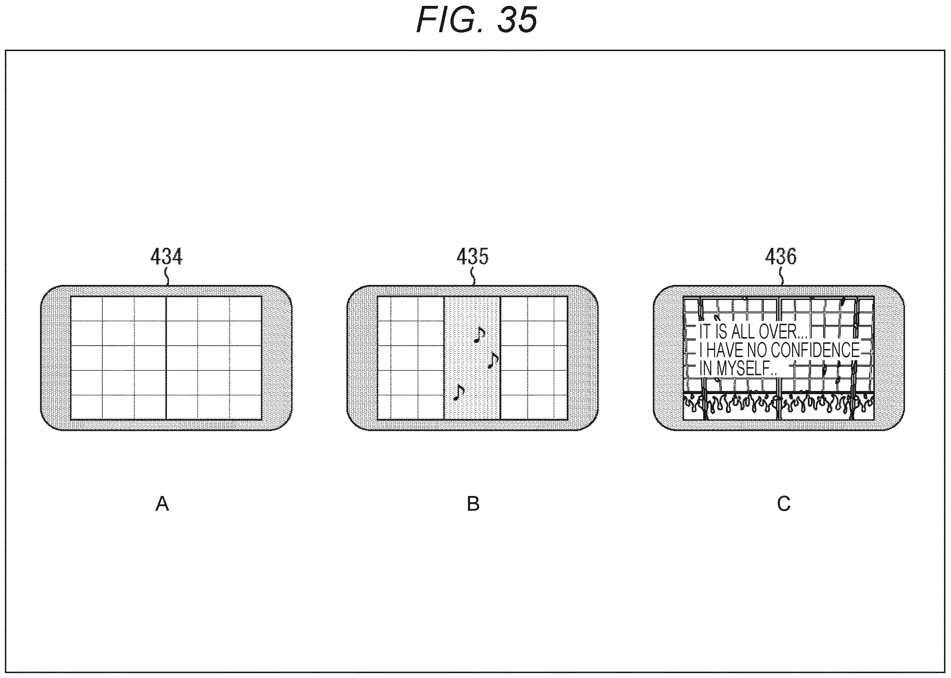

As another alternative, a dialogue confirmation screen 434 as illustrated in A of Fig. 35 may be employed. A motif of a sliding door as illustrated in A of Fig. 35 is normally displayed on the dialogue confirmation screen 434. This state indicates that nothing significant happens in communication between the user oneself and the virtual character corresponding to another user. When the user 101 operates, in this state, as if the user 101 opens the sliding door, the communication partner of the user 101-2 changes from the virtual character 103-1 to the user 101-1, and then, communication between the users begins (i.e., the user 101 participates in communication in the middle thereof).

Moreover, for example, in communication between the user oneself and the virtual character corresponding to another user, when a good thing which makes the user 101 to wish to participate in communication in the middle thereof happens, the sliding door halfway opens on the dialogue confirmation screen 434 as illustrated in B of Fig. 35, and a motif indicating happiness, such as note marks behind the sliding door, appears. When the user 101 operates, in this state, as if the user 101 opens the sliding door, the communication partner of the user 101-2 changes from the virtual character 103-1 to the user 101-1, and then, communication between the users begins (i.e., the user 101 participates in communication in the middle thereof).

Further, for example, in communication between the user oneself and the virtual character corresponding to another user, when a situation making the user 101 to inevitably participate in communication in the middle thereof happens, an image of a burning sliding door is displayed on the dialogue confirmation screen 434 as illustrated in C of Fig. 35. When the user 101 operates, in this state, as if the user 101 opens the sliding door, the communication partner of the user 101-2 changes from the virtual character 103-1 to the user 101-1, and then, communication between the users begins (i.e., the user 101 participates in communication in the middle thereof). As described above, an indication of prompting the user 101 to participate in communication in the middle thereof may be displayed according to situation.

Needless to say, other examples than above may be employed.

Returning to Fig. 32, the interruption processing unit 264 receives, at step S333, input of a middle participation request made by the user 101 etc. on the dialogue confirmation screen as described above. When receiving the middle participation request, the interruption processing unit 264 supplies the communication management server 113 with the received middle participation request at step S334.

At step S346, the state management unit 188 of the communication management server 113 updates the state of each of the user 101-1 and the virtual character 103-1. That is, the user 101-1 becomes the communication partner.

At step S347, the communication management unit 189 of the communication management server 113 generates a dialogue screen indicating that the user 101-1 is the communication partner, and then, supplies the terminal device 131-2 with the dialogue screen.

At step S363, the communication processing unit 263 of the terminal device 131-2 obtains the dialogue screen, and at step S364, displays the dialogue screen on the display unit 231 (i.e., updates the dialogue screen).

Moreover, at step S348, the history management unit 190 of the communication management server 113 saves, as a log, the transferred messages as described above and the feeling expression provided to each message, and manages the messages and the feeling expressions. A save location for such a log may be the storage unit 163 of the communication management server 113 or not-shown other data servers, for example.

By each type of processing as described above, communication between the user and the virtual character can be realized, and the power of expression in such communication can be improved.

### <Overview of Block Mode>

In communication using the communication system 100 as described above, a mode for changing a response method may be provided. For example, in order to communication with a certain user, such a user needs, as described above, to be registered as a friend in advance. In other words, in order to reject communication with a certain user, such a user may be removed from friends. Note that such processing resets a relationship set so far, and a message history etc. are discarded from the system. In the case of communicating with such a user again, the user needs to be registered as a friend again.

In the case where communication can be rejected only by the above-described method, there is a probability of causing disadvantages in temporary rejection of communication, for example.

For these reasons, a block mode different from a normal state in a response method may be provided. Only communication by the virtual character 103 can be performed in the block mode, supposing that the state in which communication can be made not only by the user 101 but also by the virtual character 103 is a normal mode. Moreover, in the block mode, the virtual character 103 sends back a response message different from that in the normal mode.

With the block mode, the user 101 can perform communication according to a wider variety of situation. That is, the power of expression in communication can be increased.

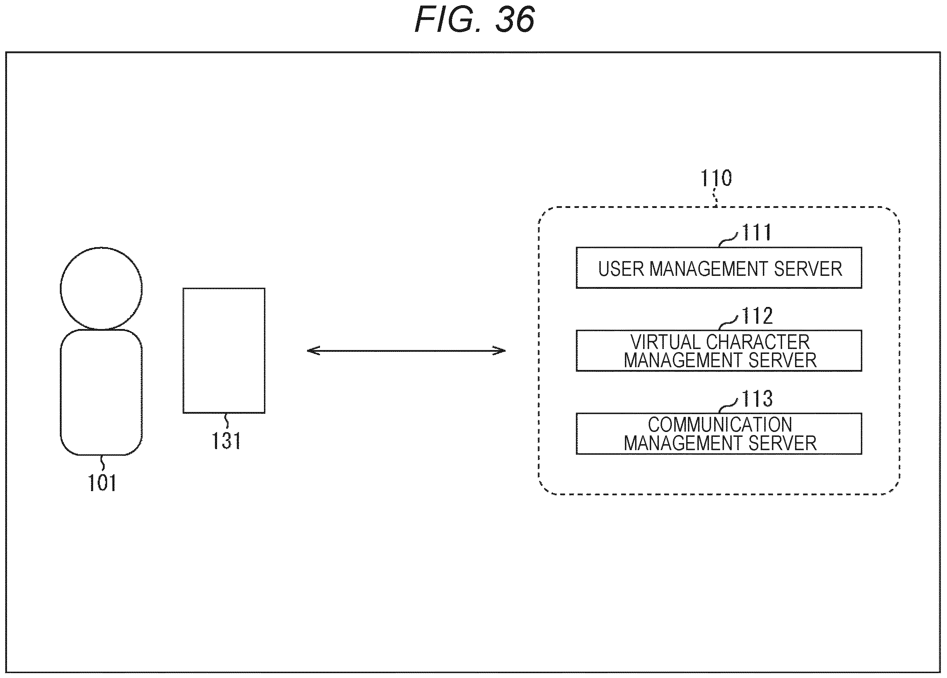

As illustrated in Fig. 36, the block mode can be activated/deactivated in such a manner that the user 101 operates the terminal device 131 to exchange information with the user management server 111, the virtual character management server 112, the communication management server 113, etc.

### <Flow in Processing for Activating Block Mode>

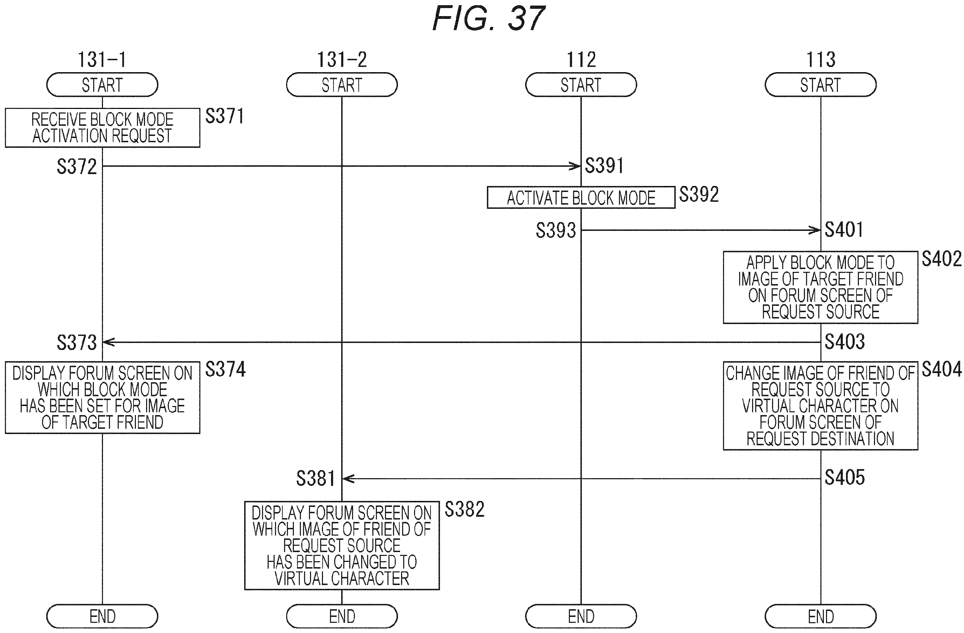

An example of a flow in processing for activating the block mode will be described with reference to a flowchart of Fig. 37.

At step S371, the mode setting unit 265 of the terminal device 131-1 receives a block mode activation request. For example, when receiving the block mode activation request input by the user 101-1 and targeted for the user 101-2, the mode setting unit 265 transmits, at step S372, the received block mode activation request to the virtual character management server 112.

At step S391, the mode management unit 185 of the virtual character management server 112 receives the block mode activation request. At step S392, according to the request, the mode management unit 185 sets the mode, targeted for the user 101-2, of the virtual character 103-1 corresponding to the user 101-1 to the block mode.

At step S393, the mode management unit 185 supplies the communication management server 113 with the block mode activation request.

At step S401, the forum management unit 187 of the communication management server 113 obtains the block mode activation request. At step S402, the forum management unit 187 applies, on the forum screen of the user 101-1 as the request source, the block mode to an image of a friend (the user 101-2) targeted for the block mode. At step S403, the forum management unit 187 transmits the updated forum screen to the terminal device 131-1.

At step S373, the forum processing unit 262 of the terminal device 131-1 receives the updated forum screen, and at step S374, displays the updated forum screen on the display unit 231. That is, the forum screen on which the image of the friend targeted for the block mode has changed to a block mode image is displayed on the display unit 231 of the terminal device 131-1. In this manner, on the forum screen, the user 101-1 having activated the block mode can easily grasp for which friend the block mode has been activated.

Moreover, at step S404, the forum management unit 187 of the communication management server 113 changes an image of a friend (the user 101-1) as the request source to the virtual character 103 on the forum screen of the user 101-2 as a request destination. At step S405, the forum management unit 187 transmits the updated forum screen to the terminal device 131-2.

At step S381, the forum processing unit 262 of the terminal device 131-2 receives the updated forum screen, and at step S382, displays the updated forum screen on the display unit 231. That is, the forum screen on which the image of the friend as the request source of the block mode has changed to the virtual character is displayed on the display unit 231 of the terminal device 131-2.

When the block mode is activated as described above, the user 101-2 (the terminal device 131-2) cannot communicate with the user 101-1 having activated the block mode for the user 101-2 (i.e., can only communicate with the virtual character 103-1). Moreover, in the block mode, the virtual character 103-1 sends back a response different from that in the normal mode. For example, the virtual character 103-1 may send back, regardless of a message from the user 101-2, a predetermined message set in advance.

Note that in this case, the user 101-2 can communicate not only with other users having not activated the block mode for the user 101-2, but also with the virtual characters corresponding to these users (i.e., can remain in the normal mode). Similarly, the user 101-1 can communicate not only with other users than the user 101-2 for which the block mode have been activated, but also with the virtual characters corresponding to these users (i.e., can remain in the normal mode).

From a viewpoint of the user 101-2, it may or may not determine, in this state, whether or not the user 101-1 (the virtual character 103-1) has activated the block mode for the user 101-2.

### <Flow in Processing for Deactivating Block Mode>

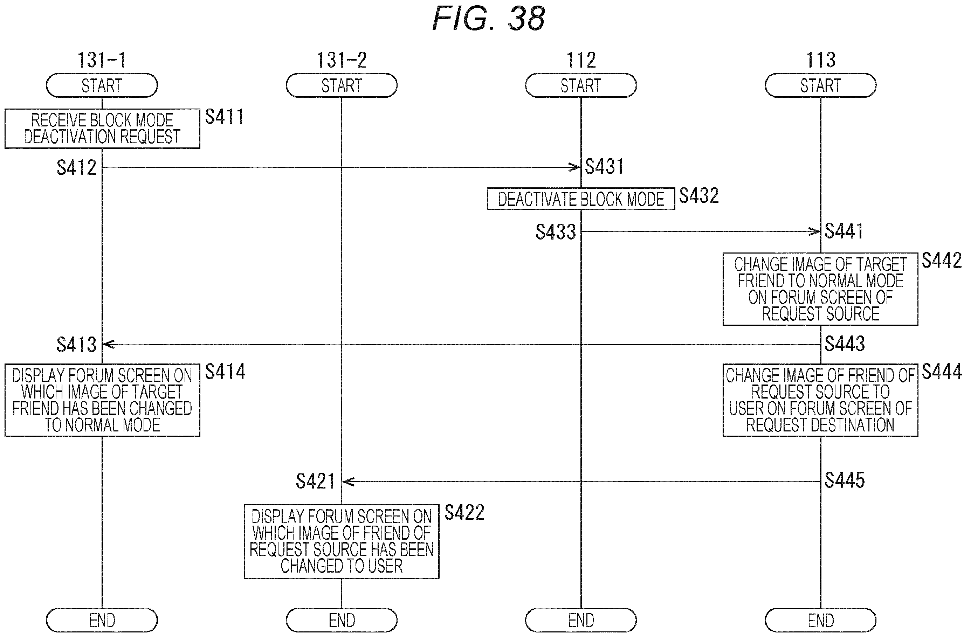

An example of a flow in processing for deactivating the block mode will be described with reference to a flowchart of Fig. 38. Suppose that the virtual character 103-1 corresponding to the user 101-1 activates the block mode for the user 101-2.

At step S411, the mode setting unit 265 of the terminal device 131-1 receives a block mode deactivation request. For example, when receiving the block mode deactivation request input by the user 101-1 and targeted for the user 101-2, the mode setting unit 265 transmits, at step S372, the received block mode deactivation request to the virtual character management server 112.

At step S431, the mode management unit 185 of the virtual character management server 112 receives the block mode deactivation request. At step S432, the block mode activated for the user 101-2 by the virtual character 103-1 corresponding to the user 101-1 is deactivated according to the request.

At step S433, the mode management unit 185 supplies the communication management server 113 with the block mode deactivation request.

At step S441, the forum management unit 187 of the communication management server 113 obtains the block mode deactivation request, and at step S442, the image of the friend (the user 101-2) targeted for the block mode is changed to that in the normal mode on the forum screen of the user 101-1 as the request source. At step S443, the forum management unit 187 transmits the updated forum screen to the terminal device 131-1.

At step S413, the forum processing unit 262 of the terminal device 131-1 receives the updated forum screen, and at step S414, displays the updated forum screen on the display unit 231. That is, the forum screen on which the image of the friend targeted for the block mode is changed to that in the normal mode is displayed on the display unit 231 of the terminal device 131-1. Thus, the user 101-1 having deactivated the block mode can more easily grasp deactivation of the block mode on the forum screen.

Moreover, at step S444, the forum management unit 187 of the communication management server 113 changes the image of the friend (the user 101-1) as the request source to the image of the user 101 on the forum screen of the user 101-2 as the request destination. At step S445, the forum management unit 187 transmits the updated forum screen to the terminal device 131-2.

At step S421, the forum processing unit 262 of the terminal device 131-2 receives the updated forum screen, and at step S382, displays the updated forum screen on the display unit 231. That is, the forum screen on which the image of the friend as the request source of the block mode has been changed back to the image of the user 101 is displayed on the display unit 231 of the terminal device 131-2.

After the block mode has been deactivated as described above, the user 101-2 (the terminal device 131-2) can communicate not only with the user 101-1, but also with the virtual character 103-1 (i.e., can turn to the normal mode) . Moreover, the virtual character 103-1 can make a response as in the normal mode.

Note that it has been described above that the image of the friend having deactivated the block mode on the forum screen is the user 101, but may remain in the virtual character 103 (also in the normal mode).

### <Flow in Processing for Deleting Friend>

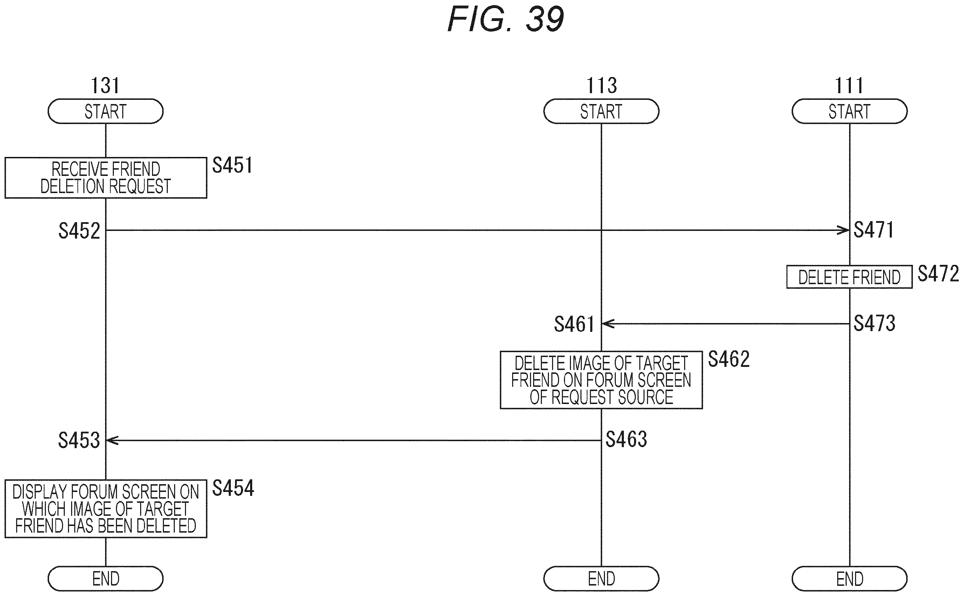

An example of a flow in processing not for the block mode but for deleting a desired user from the friends will be described with reference to a flowchart of Fig. 39.

At step S451, the mode setting unit 265 of the terminal device 131 receives a friend deletion request. For example, when receiving the friend deletion request input by the user 101-1 and targeted for another predetermined user, the mode setting unit 265 transmits, at step S452, the received friend deletion request to the user management server 111.

At step S471, the user information management unit 181 of the user management server 111 receives the friend deletion request, and at step S472, deletes the selected user from the friends of the user 101 according to the request. Then, at step S473, the user information management unit 181 notifies the communication management server 113 of deletion of the friend.

At step S461, the forum management unit 187 of the communication management server 113 obtains such a notification, and at step S462, deletes an image of the friend targeted for the processing on the forum screen of the user 101 as the request source. At step S463, the forum management unit 187 transmits the updated forum screen to the terminal device 131.

At step S453, the forum processing unit 262 of the terminal device 131 receives the updated forum screen, and at step S454, displays the updated forum screen on the display unit 231. That is, the forum screen on which the image of the friend targeted for the processing is deleted is displayed on the display unit 231 of the terminal device 131.

By each type of processing as described above, a block mode as an operation mode different not only from the normal mode but also from deletion of the friend can be realized.

### <Flow in Learning Processing>

Note that the virtual character 103 may learn a response method on the basis of a response method by the user 101 to which such a virtual character 103 corresponds. With this configuration, the virtual character 103 can achieve a response method close to the response method by the user 101, leading to more unique response. That is, the power of expression in communication can be improved.

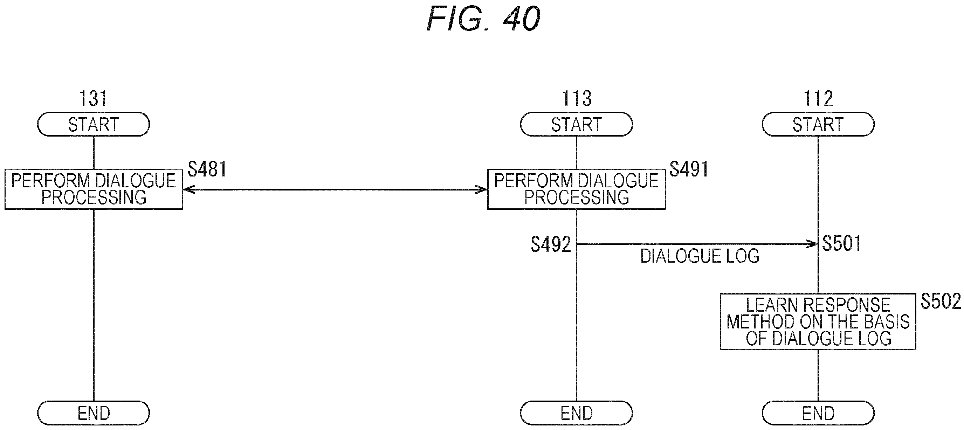

An example of a flow in processing for learning response by the virtual character 103 will be described with reference to a flowchart of Fig. 40.

Suppose that the communication processing unit 263 of the terminal device 131 performs processing for a dialogue (e.g., exchange of messages) at step S481, and the communication management unit 189 etc. of the communication management server 113 perform the processing for the dialogue at step S491. In such exchange of the messages, the history management unit 190 of the communication management server 113 supplies, at step S492, the virtual character management server 112 with a dialogue log (a log of the exchanged messages).

At step S501, the learning unit 184 of the virtual character management server 112 obtains the dialogue log, and at step S502, learns the response method on the basis of the obtained dialogue log.

Specifically, exchange of messages performed by the user 101 may be stored, and when such a pattern is applicable, a response may be made using such messages, for example. Alternatively, pattern analysis may be performed. As another alternative, weighting may be performed on the basis of, e.g., the frequency of use of a response message by the user 101, thereby detecting the most suitable response message.

### <Displaying of History>

It has been described above that no message history is basically displayed on the dialogue screen 360. Needless to say, the message history may be displayed. In this case, the message history may be displayed on a screen different from the dialogue screen 360. With this configuration, the above-described features of the dialogue screen 360 can be maintained while the message history can be displayed. That is, the power of expression in communication can be also increased in this case.

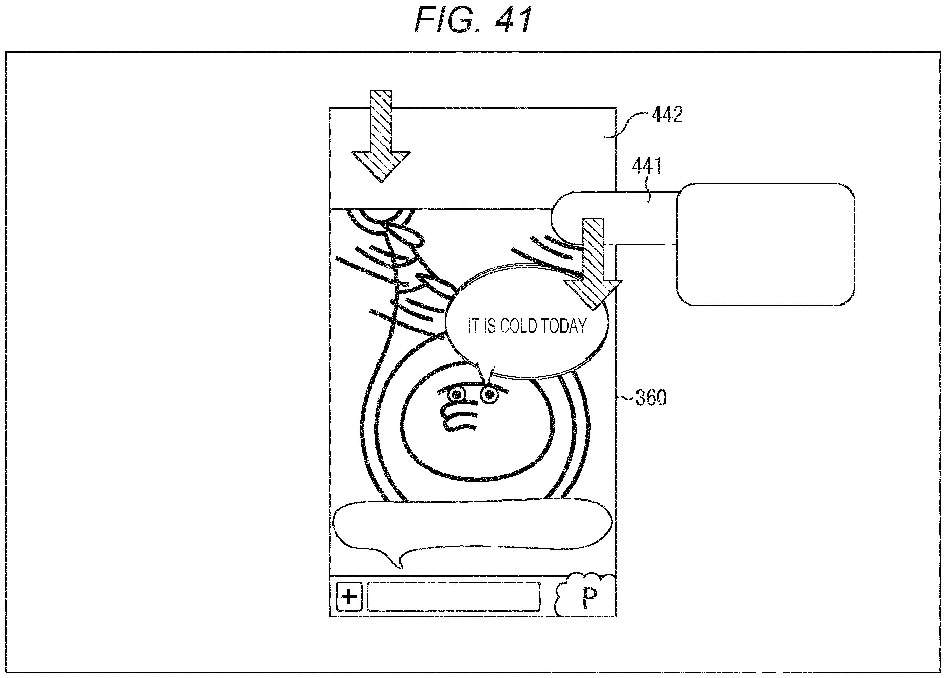

For example, as illustrated in Fig. 41, when the user 101 downwardly slides a finger 441 on the dialogue screen 360, a message history display screen 442 for displaying the message history may be displayed from the upper side of the dialogue screen 360 with the message history display screen 442 being superimposed on the dialogue screen 360.

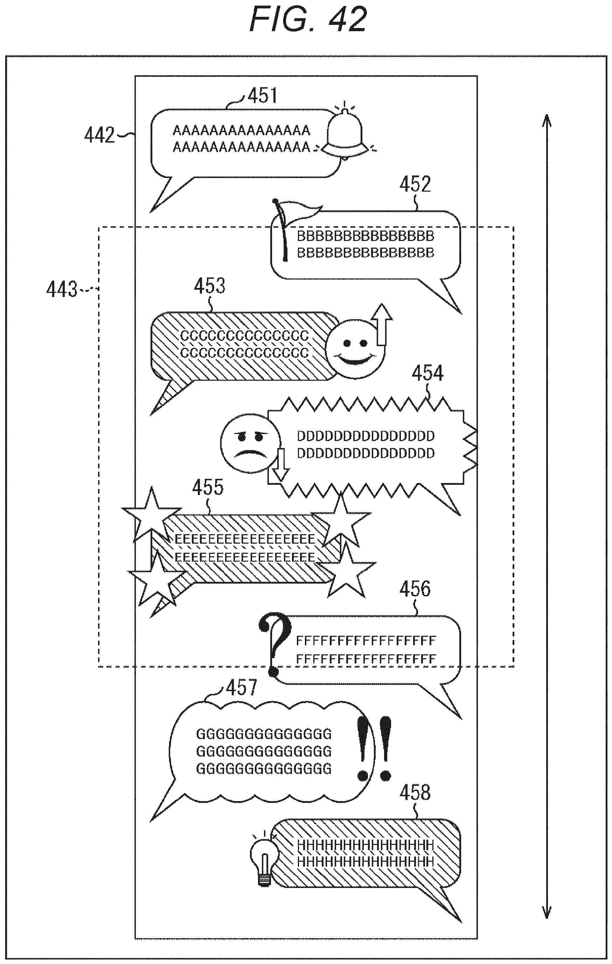

A display example of the message history display screen 442 is illustrated in Fig. 42. As illustrated in Fig. 42, the message history display screen 442 may be a larger screen than the display region of the display unit 231. In the case of the example of Fig. 42, a region surrounded by a dashed frame 443 indicates the display region of the display unit 231. In this case, the user 101 slides the message history display screen 442 up and down so that the entire message history can be displayed on the display unit 231.

As described above, in communication using the communication system 100, communication between the user 101 and the virtual character 103 can be performed in addition to communication between the users 101. The user 101 and the virtual character 103 correspond to each other, and are not completely unrelated to each other. Thus, when these types of communication are displayed as different histories, such displayed histories might confuse the user 101.

For example, a communicating person can be, in the middle of communication, changed from the user 101 to the virtual character 103 or from the virtual character 103 to the user 101. However, when a history of communication between the users 101 and a history of communication between the user 101 and the virtual character 103 are separately displayed, association between dialogues is indefinite, and value as a history might be lowered.

For this reason, as in the example illustrated in Fig. 42, both of a first indication of the history of communication between the users and a second indication of the history of communication between the user and the virtual character being able to respond on behalf of the user may be displayed on the display unit 231 with these indications being arranged in the identical chronological order.

In the example illustrated in Fig. 42, messages of the user 101 and messages of the virtual character 103 are displayed and arranged in a certain chronological order (e.g., arranged from top to bottom).

With this configuration, regardless of whether the communicating person is the user 101 or the virtual character 103, the user 101 or the virtual character 103 can refer to the history displayed in the certain chronological order, and therefore, such a message history is easily viewable. Thus, communication using the user 101 and the virtual character 103 can be realized without lowering visibility of the message history, leading to a wider variety of communication. That is, the power of expression in communication can be improved. Note that the history of the messages has been described above, but the message history may contain other types of information than the messages. That is, the message history may be a communication history.

Note that the above-described history of communication between the users may contain a history of communication between a first user as a predetermined user and other user than the first user. Moreover, the above-described history of communication between the virtual character and the user may contain a history of communication between the first user and a virtual character corresponding to the other user or a history of communication between a virtual character corresponding to the first user and the other user.

The first indication described above may contain text information indicating a message sent from the first user to the other user or a message sent from the other user to the first user. Moreover, the second indication described above may contain text information indicating a message sent from the first user to the virtual character corresponding to the other user or a message sent from the virtual character corresponding to the other user to the first user; or text information indicating a message sent from the virtual character corresponding to the first user to the other user or a message sent from the other user to the virtual character corresponding to the first user.

That is, the message history of communication in any of the above-described patterns can be similarly displayed.

The above-described history of communication may further contain a third indication expressing feeling assigned when each message is exchanged. Moreover, a feeling expression assigned when the message is exchanged may be displayed on the display unit 231.

In the example of Fig. 42, messages and a feeling expression assigned to each message are displayed together. With this configuration, the contents of the message history can be more instinctively grasped. Thus, a wider variety of communication can be performed without lowering visibility of the message history.

Moreover, the feeling expression may contain an expression of a facial image of the user or the virtual character as the message sender. Further, the messages and the facial image, expressing the feeling corresponding to each message, of the user or the virtual character as the message sender may be displayed together on the display unit 231.

For example, in the case of Fig. 42, facial images of the users 101 (or the virtual characters 103) are, as feeling expressions, added respectively to a message 453 and a message 454. With this configuration, the feeling corresponding to each message can be more instinctively grasped. Thus, a wider variety of communication can be performed without lowering visibility of the message history.

Moreover, the feeling expression may contain a staging image indicating the feeling corresponding to each message. Further, the messages and the staging image indicating the feeling corresponding to each message may be displayed together on the display unit 231.

For example, in the case of Fig. 42, a question mark is added to a message 456, and an exclamation mark is added to a message 457. As described above, the feeling expression is not limited to a facial image.

In addition, the feeling expression may contain a speech balloon in a shape indicating the feeling corresponding to each message. Moreover, the messages and the speech balloon in the shape indicating the feeling corresponding to each message may be displayed together on the display unit 231.

In the case of the example of Fig. 42, the messages 451 to 458 are displayed respectively in speech balloons with various types of design. The feeling may be expressed using these speech balloon designs (optional visual effects such as a size, a shape, a pattern, and a color). Note that the feeling may be expressed using not only the speech balloons but also a design (optional visual effects such as a font type, a size, a shape, a pattern, and a color) of each message itself.

Further, the feeling expression may be based on information obtained by sensing of the first user or the other user as the message sender in message exchange.

For example, an image of the user 101 may be acquired by the image acquiring unit 223 of the terminal device 131 in message reception, and the feeling may be expressed on the basis of such an acquired image. Alternatively, the pulse, brain waves, sweating, etc. of the user 101 may be sensed by the sensor unit 225 of the terminal device 131 in message reception, and the feeling may be expressed on the basis of information (vital sensing information) obtained by sensing, for example. Note that in these cases, the method for expressing the feeling is optional. For example, an image of the face of the user 101 may be acquired by the image acquiring unit 223 of the terminal device 131 in message reception, and the feeling may be expressed using such an acquired image (i.e., the facial image of the user 101 in message reception).

The message sent from the first user to the other user or to the virtual character corresponding to the other user and the message sent from the virtual character corresponding to the first user to the other user may be displayed on the display unit 231 with these messages being distinguishable from each other. Moreover, the message sent from the other user to the first user or to the virtual character corresponding to the first user and the message sent from the virtual character corresponding to the other user to the first user may be displayed on the display unit 231 with these messages being distinguishable from each other.

In the case of the example of Fig. 42, the color (the pattern) of each speech balloon is changed so that these messages are distinguishable from each other. For example, the messages 451, 457 displayed respectively in white speech balloons on the left side of the message history display screen 442 are the messages sent from the first user to the other user or the virtual character corresponding to the other user. Moreover, the messages 453, 455 displayed respectively in shaded speech balloons on the left side of the message history display screen 442 are the messages sent from the virtual character corresponding to the first user to the other user. Further, the messages 452, 454, 456 displayed respectively in white speech balloons on the right side of the message history display screen 442 are the messages sent from the other user to the first user or the virtual character corresponding to the first user. In addition, the message 458 displayed in a shaded speech balloon on the right side of the message history display screen 442 is the message sent form the virtual character corresponding to the other user to the first user.

With this configuration, these messages are more easily distinguishable from each other. Thus, a wider variety of communication can be performed without lowering visibility of the message history.

Note that a request receiving unit configured to receive a request for sorting messages may be further provided. Alternatively, when the message sorting request is received by the request receiving unit, each message may be sorted according to a message sorting condition received by the request receiving unit, and may be displayed on the display unit 231.

For example, the operation unit 221, the touch panel 222, etc. may be provided as the request receiving unit. Moreover, message sorting is performed according to a condition desired by the user 101 etc. so that the history can be displayed in a form easily viewable by the user 101. Thus, a wider variety of communication can be performed without lowering visibility of the message history.

In addition, a request receiving unit configured to receive a request for selecting a message may be further provided. Alternatively, when the message selection request is received by the request receiving unit, the message may be selected according to a message selection condition received by the request receiving unit, and the selected message may be displayed on the display unit 231.

For example, the operation unit 221, the touch panel 222, etc. may be provided as the request receiving unit. Moreover, message selection is performed according to a condition desired by the user 101 etc. so that displaying of an unnecessary history for the user 101 can be reduced and that the history can be displayed in a more-easily viewable form. Thus, a wider variety of communication can be performed without lowering visibility of the message history.

Specific contents of the conditions in sorting and selection are optional. For example, the message sender or receiver such as the user 101 or the virtual character 103 may be set as a condition. Moreover, e.g., feeling corresponding to each message (i.e., a feeling expression) may be set as a condition.

A communication processing unit may be further provided, which is configured to exchange messages by communication with other information processing device via the communication unit to realize communication between a user of a certain information processing device itself and a user of other information processing device, communication between the user of the certain information processing device itself and a virtual character corresponding to the user of the other information processing device, and communication between a virtual character corresponding to the user of the certain information processing device itself and the user of the other information processing device. Alternatively, both of the following indications may be displayed on the display unit 231 with these indications being arranged in the identical chronological order: a first indication of a history of communication between the user of the certain information processing device itself and the user of the other information processing device by the communication processing unit; and a second indication of a history of communication between the user of the certain information processing device itself and the virtual character corresponding to the user of the other information processing device or a history of communication between the virtual character corresponding to the user of the certain information processing device itself and the user of the other information processing device by the communication processing unit.

That is, the message history display screen 442 as illustrated in, e.g., Fig. 42 may be generated at the terminal device 131.

Alternatively, in the state in which a communication screen as a screen for communication is displayed on the display unit 231, communication may be made while the history display screen different from the communication screen is displayed on the display unit 231. On such a history display screen, both of the first and second indications as described above may be displayed in the identical chronological order.

That is, as in the example of Fig. 42, the communication history may be displayed on the message history display screen 442 different from the dialogue screen 360 as the communication screen.

Moreover, the following may be displayed on the communication screen: a facial image of the user of the other information processing device or the virtual character corresponding to the user of the other information processing device as the communication partner; a single message sent from the user of the other information processing device or the virtual character corresponding to the user of the other information processing device; and a single message sent to the user of the other information processing device or the virtual character corresponding to the user of the other information processing device.

That is, the communication screen may be implemented as the dialogue screen 360 with the configuration described with reference to Fig. 21. With such a dialogue screen 360, the power of expression in communication can be increased.

Further, on the communication screen, a feeling expression assigned to a message displayed on the communication screen may be displayed. As described with reference to Fig. 21, the feeling expression may be displayed on the dialogue screen 360 in addition to the message. With such a feeling expression, the power of expression in communication can be increased.

Alternatively, on the communication screen, a facial image of the user of the other information processing device or the virtual character corresponding to the user of the other information processing device may be displayed as the feeling expression assigned to the message sent from the user of the other information processing device or the virtual character corresponding to the user of the other information processing device, the facial image expressing the feeling corresponding to the message.

As described with reference to Fig. 21, the image corresponding to the feeling presumed from each transmitted/received message may be selected from the images corresponding respectively to the feeling types registered in default setting, and may be displayed in the image display region 381 of the dialogue screen 360.

Moreover, a staging image indicating the feeling corresponding to each message may be, at an optional position on the communication screen, displayed as the feeling expression assigned to the message sent from the user of the other information processing device or the virtual character corresponding to the user of the other information processing device.

Such a staging image (such a staging effect) is optional. For example, the staging image may be a predetermined stamp image indicating feeling, a design (optional visual effects such as a size, a shape, a pattern, and a color) of a display region of each message displayed in the communication display region 363, or a design (optional visual effects such as a font type, a size, a shape, a pattern, and a color) of each message. Alternatively, the staging image may be a staging effect of partially or entirely changing an indication in the communication display region 363.

Moreover, in a region of the communication screen where the facial image of the user of the other information processing device or the virtual character corresponding to the user of the other information processing device is displayed, the staging image expressing the feeling corresponding to the message may be displayed as the feeling expression assigned to the message sent from the user of the certain information processing device itself or the virtual character corresponding to the user of the certain information processing device itself.

For example, on the message reception side dialogue screen 360, the staging image (the staging effect) displayed across the entirety of the communication display region 363 as in B of Fig. 25 may be displayed only in the image display region 381 on the message transmission side dialogue screen 360 as in A of Fig. 25. With this configuration, the power of expression in communication can be improved.

Note that the display unit 231 may be further provided.

### <Flow in Processing for Displaying History>

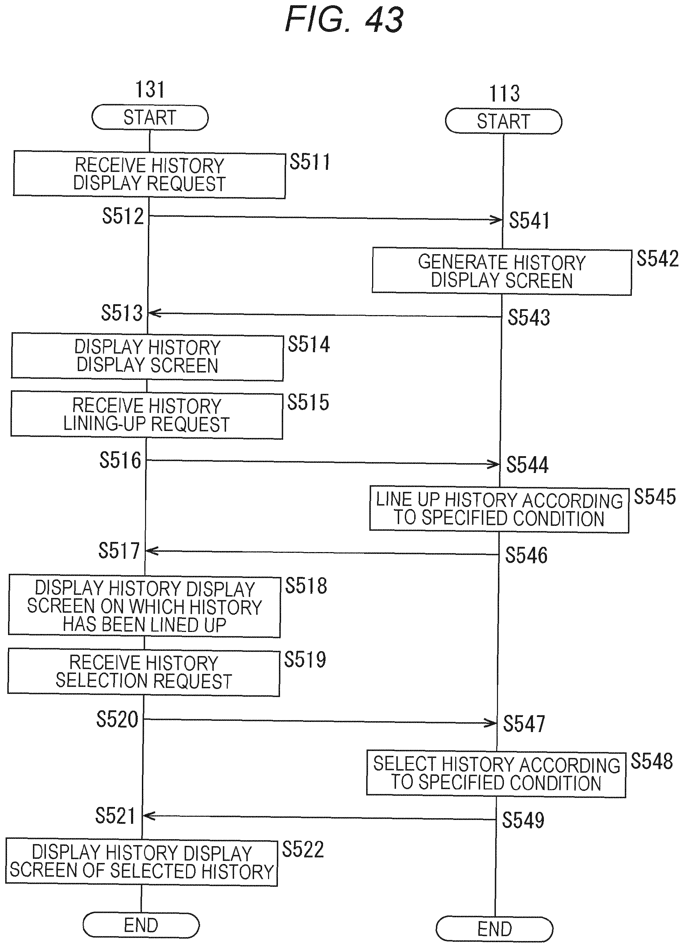

Next, an example of a flow in processing for displaying the history as described above will be described with reference to a flowchart of Fig. 43.

For example, the history display control unit 266 of the terminal device 131 controls, at step S511, the operation unit 221, the touch panel 222, etc. to receive input of a history display request. For example, when receiving input of the history display request made by the user 101 etc. for requesting displaying of the message history, the history display control unit 266 transmits, at step S512, the received history display request to the communication management server 113.

At step S541, the history management unit 190 of the communication management server 113 receives the history display request. At step S542, the history management unit 190 generates a history display screen (e.g., the message history display screen 442 illustrated in Fig. 42) according to the request. At step S543, the history management unit 190 transmits the generated history display screen to the terminal device 131.

At step S513, the history display control unit 266 of the terminal device 131 receives the history display screen. At step S514, the history display control unit 266 displays the history display screen on the display unit 231.

The history display screen is displayed as described above.

Moreover, in the case of sorting the message history, the history display control unit 266 of the terminal device 131 controls, at step S515, the operation unit 221, the touch panel 222, etc. to receive a history lining-up request for requesting sorting of the history. For example, when receiving input of the history lining-up request made by the user 101 etc., the history display control unit 266 transmits, at step S516, the received history lining-up request to the communication management server 113.

At step S544, the history management unit 190 of the communication management server 113 receives the history lining-up request. At step S545, the history management unit 190 lines up the history on the history display screen according to a condition specified by the history lining-up request. At step S546, the history management unit 190 transmits, to the terminal device 131, the history display screen on which the history has been sorted.

At step S517, the history display control unit 266 of the terminal device 131 receives the history display screen. At step S518, the history display control unit 266 displays, on the display unit 231, the history display screen on which the history has been lined up.

In the above-described manner, sorting of the history is performed on the history display screen.

In addition, in the case of narrowing the message history to be displayed, the history display control unit 266 of the terminal device 131 controls, at step S519, the operation unit 221, the touch panel 222, etc. to receive a history selection request for requesting selection of the history to be displayed. For example, when receiving input of the history selection request made by the user 101 etc., the history display control unit 266 transmits, at step S520, the received history selection request to the communication management server 113.

At step S547, the history management unit 190 of the communication management server 113 receives the history selection request. At step S548, the history management unit 190 selects the history to be displayed on the history display screen according to a condition specified by the history selection request. At step S549, the history management unit 190 transmits, to the terminal device 131, the history display screen on which the history has been selected.

At step S521, the history display control unit 266 of the terminal device 131 receives the history display screen. At step S522, the history display control unit 266 displays, on the display unit 231, the history display screen on which the history has been selected.

In the above-described manner, selection of the history is performed on the history display screen.

By each type of processing as described above, not only the history of the user 101 but also the history of the virtual character 103 can be displayed with favorable visibility, and a wider variety of expression in communication can be realized while lowering of visibility of the history is suppressed. That is, the power of expression in communication can be increased.

### <Software>

The above-described series of processing can be implemented by hardware, or can be implemented by software. In the case of executing the above-described series of processing by the software, a program forming the software is installed from a network or a recording medium.

As illustrated in, e.g., Figs. 3 and 5, the recording medium is, separately from a device main body, provided in the form of the removable mediums 171, 251 distributed to deliver the program to the user and configured to record the program. The removable mediums 171, 251 include a magnetic disk (including a flexible disk) or an optical disk (including a CD-ROM and a DVD). Further, the removable mediums 171, 251 include a magnetic optical disk (including a Mini Disc (MD)), a semiconductor memory, etc.

In this case, in the user management server 111 to the analysis server 114 (or the server 110), the removable medium 171 is attached to the drive 165 so that the program can be installed in the storage unit 163, for example. Moreover, in the terminal device 131, the removable medium 251 is attached to the drive 215 so that the program can be installed in the storage unit 213, for example.

Further, the program may be provided through a wired or wireless transmission medium such as a local area network, the Internet, and digital satellite broadcasting. In this case, in the user management server 111 to the analysis server 114 (or the server 110), the program can be received by the communication unit 164, and can be installed in the storage unit 163, for example. Moreover, in the terminal device 131, the program can be received by the communication unit 214, and can be installed in the storage unit 213, for example.

In addition, the program can be installed in a storage unit, a ROM, etc. in advance. For example, in the case of the user management server 111 to the analysis server 114 (or the server 110), the program can be installed in the storage unit 163, the ROM 152, etc. in advance. Moreover, in the case of the terminal device 131, the program can be installed in the storage unit 213, the ROM of the SOC 201, etc. in advance, for example.

In the case of executing the above-described series of processing by the software, the program forming the software may be, to the user 101, provided as an application for providing a function on the user interface of the communication system 100, a function on communication, etc., for example. In this case, when the user 101 executes the program, i.e., when the user 101 starts up the application, the function of default setting, the function of displaying various screens such as the forum screen 350 and the dialogue screen 360, and the function of transmitting/receiving messages and feeling expressions as described above are, for example, provided to the user 101. That is, the user 101 can utilize the communication system 100 to communicate with other users.

The method for starting up the application is optional. A predetermined command may be input at a predetermined command line interface (CLI), a predetermined icon may be operated (e.g., tapped) at a predetermined graphical user interface (GUI), or other methods may be employed.

In the case of starting up the application by operation of the icon, an icon with a predetermined design is, in advance, displayed within the display region of the display unit 231 of the terminal device 131, for example. In the case where the user 101 utilizes the communication system 100, such an icon may be operated.

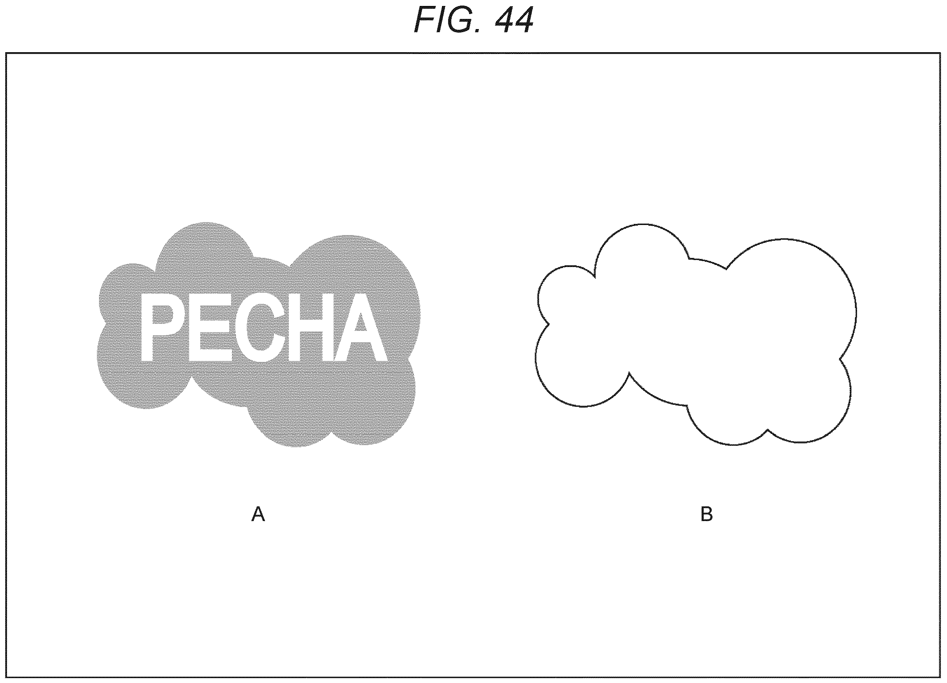

The design of such an icon is optional. For example, such a design may be a design as illustrated in A of Fig. 44. In A of Fig. 44, an icon includes a gray cloud-shaped design and white characters of "Pecha" (chitter-chatter) in the cloud-shaped design, but is not limited to this example. For example, the gray portion may be in red. That is, this icon may include a red cloud-shaped design and white characters of "Pecha" (chitter-chatter) in the cloud-shaped design. Moreover, the characters may be other characters than "Pecha" (chitter-chatter), and may be in other colors than white.

Alternatively, as illustrated in B of Fig. 44, the icon may include only an outer frame (a line indicating an outer shape) of the cloud-shaped design of the example in A of Fig. 44, for example. The color of the outer frame (the line indicating the outer shape) is optional. For example, the color of the outer frame may be black or other colors. Moreover, the color of the inside of the outer frame is also optional. For example, the color of the inside of the outer frame may be white, other colors, or transparent.

Further, the icon with the design as illustrated in A or B of Fig. 44 may be used on the above-described various screens, for example. For example, such an icon may be used as the design of the transmission button 372 (Fig. 21) of the dialogue screen 360. Needless to say, such a design of the icon may be used not only for other portions of the dialogue screen 360, but also for an optional portion of other screens than the dialogue screen 360. As described above, the design of the icon is used on the screen displayed as the user interface of the started application, and therefore, the user 101 can more easily grasp that the started application corresponds to the icon operated by the user 101.

Note that a program to be executed by a computer may be a program for performing processing in the chronological order as described in the present specification, or a program for performing processing in parallel or for performing processing at timing required in response to invoking, for example.

Moreover, in the present specification, the step for describing the program recorded in the recording medium includes the processing performed in the chronological order as described in the present specification. Moreover, the processing is not necessarily performed in the chronological order, and needless to say, may include processing performed in parallel or separately.

In addition, each processing step described above can be executed at each device described above or other optional devices than the devices described above. In this case, the device executing the processing may have the above-described functions (e.g., the function blocks) required for executing the processing. Moreover, information required for the processing may be transmitted to such a device, if necessary.

Further, in the present specification, the system means an assembly of a plurality of components (devices, modules (parts), etc.) regardless of whether or not all of the components are in the same housing. Thus, not only a plurality of devices housed respectively in separate housings and connected together via a network but also a single device configured such that a plurality of modules are housed in a single housing is regarded as a system.

In addition, the configuration described above as a single device (or a single processing unit) may be divided into a plurality of devices (or a plurality of processing units). Conversely, the configuration described above as a plurality of devices (or a plurality of processing units) may be combined into a single device (or a single processing unit). Needless to say, other configurations than the configuration described above may be added to the configuration of each device (or each processing unit) . Moreover, as long as the substantially same configuration and operation of the system can be provided as a whole, part of a configuration of a certain device (or a certain processing unit) may be included in a configuration of other device (or other processing unit).

Although the preferable embodiment of the present disclosure has been described above in detail with reference to the attached drawings, the technical scope of the present disclosure is not limited to such an example. It is obvious that those having ordinary skill in the art of the present disclosure can arrive at various changes or modifications within the scope of the technical idea described in the claims. Needless to say, it is appreciated that these changes or modifications fall within the technical scope of the present disclosure.

For example, the present technology can employ a cloud computing configuration for providing shared and cooperative processing of a single function via a network by a plurality of devices.

Moreover, each step described with reference to the above-described flowcharts can be executed by a single device, or can be shared and executed by a plurality of devices.

In addition, in the case where a single step includes plural types of processing, such plural types of processing at the single step can be executed by a single device, or can be shared and executed by a plurality of devices.

Further, the present technology is not limited to above, and can be implemented as any configurations provided to the device or the devices forming the system as described above (i.e., implemented as a configuration of part of the device), such as a processor as a system large scale integration (LSI), a module using a plurality of processors etc., a unit using a plurality of modules etc., and a set configured such that other functions are further added to the unit.

Note that the present technology can employ the following configurations:
(1) An information processing device including:
   a display control unit configured to display, on a display unit, both of a first indication of a history of communication between users and a second indication of a history of communication between one of the users and a virtual character configured to respond on behalf of another one of the users, the first and second indications being arranged in an identical chronological order.
(2) The information processing device according to (1), wherein
   the history of communication between the users includes a history of communication between a first user as a predetermined user and other user than the first user, and
   the history of communication between the one of the users and the virtual character includes a history of communication between the first user and a virtual character corresponding to the other user, or a history of communication between a virtual character corresponding to the first user and the other user.
(3) The information processing device according to (2), wherein
   the first indication includes text information indicating a message sent from the first user to the other user or a message sent from the other user to the first user, and
   the second indication includes
   text information indicating a message sent from the first user to the virtual character corresponding to the other user or a message sent from the virtual character corresponding to the other user to the first user, or
   text information indicating a message sent from the virtual character corresponding to the first user to the other user or a message sent from the other user to the virtual character corresponding to the first user.
(4) The information processing device according to (3), wherein
   each communication history further includes a third indication expressing a feeling assigned in exchange of each message, and
   the display control unit displays, on the display unit, each message and a feeling expression assigned in exchange of each message.
(5) The information processing device according to (4), wherein
   the feeling expression includes an expression of a facial image of a user or a virtual character as a message sender, and
   the display control unit displays, on the display unit, each message and the facial image of the user or the virtual character as the message sender, the facial image expressing the feeling corresponding to each message.
(6) The information processing device according to (4) or (5), wherein
   the feeling expression includes a staging image expressing the feeling corresponding to each message, and
   the display control unit displays, on the display unit, each message and the staging image expressing the feeling corresponding to each message.
(7) The information processing device according to any one of (4) to (6), wherein
   the feeling expression includes a speech balloon in a shape expressing the feeling corresponding to each message, and
   the display control unit displays, on the display unit, each message and the speech balloon in the shape expressing the feeling corresponding to each message.
(8) The information processing device according to any one of (4) to (7), wherein
   the feeling expression is based on information obtained by sensing of the first user or the other user as a message sender in exchange of each message.
(9) The information processing device according to any one of (3) to (8), wherein
   the display control unit
   displays, on the display unit, the message sent from the first user to the other user or the virtual character corresponding to the other user and the message sent from the virtual character corresponding to the first user to the other user such that these messages are distinguishable from each other, and
   displays, on the display unit, the message sent from the other user to the first user or the virtual character corresponding to the first user and the message sent from the virtual character corresponding to the other user to the first user such that these messages are distinguishable from each other.
(10) The information processing device according to any one of (3) to (9), further including:
   a request receiving unit configured to receive a request for sorting each message,
   wherein when the request receiving unit receives the request for sorting each message, the display control unit sorts each message according to a message sorting condition received by the request receiving unit, and displays each message on the display unit.
(11) The information processing device according to any one of (3) to (10), further including:
   a request receiving unit configured to receive a request for selecting one of the messages,
   wherein when the request receiving unit receives the request for selecting the one of the messages, the display control unit selects the one of the messages according to a message selection condition received by the request receiving unit, and displays the selected message on the display unit.
(12) The information processing device according to any one of (3) to (11), further including:
   a communication processing unit configured to exchange each message by communication with other information processing device via a communication unit to realize
      communication between a user of the information processing device itself and a user of the other information processing device,
      communication between the user of the information processing device itself and a virtual character corresponding to the user of the other information processing device, and
      communication between a virtual character corresponding to the user of the information processing device itself and the user of the other information processing device,
   wherein the display control unit displays, on the display unit, both of
      the first indication of a history of communication between the user of the information processing device itself and the user of the other information processing device by the communication processing unit, and
      the second indication of a history of communication between the user of the information processing device itself and the virtual character corresponding to the user of the other information processing device or a history of communication between the virtual character corresponding to the user of the information processing device itself and the user of the other information processing device by the communication processing unit, the first and second indications being arranged in the identical chronological order.
(13) The information processing device according to (12), wherein
   the communication processing unit realizes the communication in a state in which a communication screen as a screen for the communication is displayed on the display unit, and
   the display control unit displays, on the display unit, a history display screen different from the communication screen, and displays both of the first and second indications on the history display screen with the first and second indications being arranged in the identical chronological order.
(14) The information processing device according to (13), wherein
   the communication processing unit displays, on the communication screen,
   a facial image of the user of the other information processing device or the virtual character corresponding to the user of the other information processing device as a communication partner,
   a single message sent from the user of the other information processing device or the virtual character corresponding to the user of the other information processing device, and
   a single message sent to the user of the other information processing device or the virtual character corresponding to the user of the other information processing device.
(15) The information processing device according to (14), wherein
   the communication processing unit further displays, on the communication screen, a feeling expression assigned to each message displayed on the communication screen.
(16) The information processing device according to (15), wherein
   on the communication screen, the communication processing unit displays, as the feeling expression assigned to the message sent from the user of the other information processing device or the virtual character corresponding to the user of the other information processing device, a facial image of the user of the other information processing device or the virtual character corresponding to the user of the other information processing device, the facial image expressing the feeling corresponding to the message.
(17) The information processing device according to (15) or (16), wherein
   at an optional position on the communication screen, the communication processing unit displays, as the feeling expression assigned to the message sent from the user of the other information processing device or the virtual character corresponding to the user of the other information processing device, a staging image expressing the feeling corresponding to the message.
(18) The information processing device according to any one of (15) to (17), wherein
   in a region of the communication screen where the facial image of the user of the other information processing device or the virtual character corresponding to the user of the other information processing device is displayed, the communication processing unit displays, as the feeling expression assigned to the message sent from the user of the information processing device itself or the virtual character corresponding to the user of the information processing device itself, a staging image expressing the feeling corresponding to the message.
(19) The information processing device according to any one of (1) to (18), further including the display unit.
(20) An information processing method including:
   displaying, on a display unit, both of a first indication of a history of communication between users and a second indication of a history of communication between one of the users and a virtual character configured to respond on behalf of another one of the users, the first and second indications being arranged in an identical chronological order.
(21) A program for causing a computer to function as a display control unit configured to display, on a display unit, both of a first indication of a history of communication between users and a second indication of a history of communication between one of the users and a virtual character configured to respond on behalf of another one of the users, the first and second indications being arranged in an identical chronological order.

### REFERENCE SIGNS LIST

- 100: Communication system
- 101: User
- 102: Virtual space
- 103: Virtual character
- 110: Server
- 111: User management server
- 112: Virtual character management server
- 113: Communication management server
- 114: Analysis server
- 121: Network
- 131: Terminal device
- 151: CPU
- 181: User information management unit
- 182: Friend management unit
- 183: Setting management unit
- 184: Learning unit
- 185: Mode management unit
- 186: Message setting unit
- 187: Forum management unit
- 188: State management unit
- 189: Communication management unit
- 190: History management unit
- 191: Message analysis unit
- 192: Feeling setting unit
- 193: Effect setting unit
- 201: SOC
- 261: Default setting unit
- 262: Forum processing unit
- 263: Communication processing unit
- 264: Interruption processing unit
- 265: Mode setting unit
- 266: History display control unit

## Claims

1. An information processing device comprising:
a display control unit configured to display, on a display unit, both of a first indication of a history of communication between users and a second indication of a history of communication between one of the users and a virtual character configured to respond on behalf of another one of the users, the first and second indications being arranged in an identical chronological order.

2. The information processing device according to claim 1, wherein
the history of communication between the users includes a history of communication between a first user as a predetermined user and other user than the first user, and
the history of communication between the one of the users and the virtual character includes a history of communication between the first user and a virtual character corresponding to the other user, or a history of communication between a virtual character corresponding to the first user and the other user.

3. The information processing device according to claim 2, wherein
the first indication includes text information indicating a message sent from the first user to the other user or a message sent from the other user to the first user, and
the second indication includes
text information indicating a message sent from the first user to the virtual character corresponding to the other user or a message sent from the virtual character corresponding to the other user to the first user, or
text information indicating a message sent from the virtual character corresponding to the first user to the other user or a message sent from the other user to the virtual character corresponding to the first user.

4. The information processing device according to claim 3, wherein
each communication history further includes a third indication expressing a feeling assigned in exchange of each message, and
the display control unit displays, on the display unit, each message and the feeling expression assigned in exchange of each message.

5. The information processing device according to claim 4, wherein
the feeling expression includes an expression of a facial image of a user or a virtual character as a message sender, and
the display control unit displays, on the display unit, each message and the facial image of the user or the virtual character as the message sender, the facial image expressing the feeling corresponding to each message.

6. The information processing device according to claim 4, wherein
the feeling expression includes a staging image expressing the feeling corresponding to each message, and
the display control unit displays, on the display unit, each message and the staging image expressing the feeling corresponding to each message.

7. The information processing device according to claim 4, wherein
the feeling expression includes a speech balloon in a shape expressing the feeling corresponding to each message, and
the display control unit displays, on the display unit, each message and the speech balloon in the shape expressing the feeling corresponding to each message.

8. The information processing device according to claim 4, wherein
the feeling expression is based on information obtained by sensing of the first user or the other user as a message sender in exchange of each message.

9. The information processing device according to claim 3, wherein
the display control unit
displays, on the display unit, the message sent from the first user to the other user or the virtual character corresponding to the other user and the message sent from the virtual character corresponding to the first user to the other user such that these messages are distinguishable from each other, and
displays, on the display unit, the message sent from the other user to the first user or the virtual character corresponding to the first user and the message sent from the virtual character corresponding to the other user to the first user such that these messages are distinguishable from each other.

10. The information processing device according to claim 3, further comprising:
a request receiving unit configured to receive a request for sorting each message,
wherein when the request receiving unit receives the request for sorting each message, the display control unit sorts each message according to a message sorting condition received by the request receiving unit, and displays each message on the display unit.

11. The information processing device according to claim 3, further comprising:
a request receiving unit configured to receive a request for selecting one of the messages,
wherein when the request receiving unit receives the request for selecting the one of the messages, the display control unit selects the one of the messages according to a message selection condition received by the request receiving unit, and displays the selected message on the display unit.

12. The information processing device according to claim 3, further comprising:
a communication processing unit configured to exchange each message by communication with other information processing device via a communication unit to realize
communication between a user of the information processing device itself and a user of the other information processing device,
communication between the user of the information processing device itself and a virtual character corresponding to the user of the other information processing device, and
communication between a virtual character corresponding to the user of the information processing device itself and the user of the other information processing device,
wherein the display control unit displays, on the display unit, both of
the first indication of a history of communication between the user of the information processing device itself and the user of the other information processing device by the communication processing unit, and
the second indication of a history of communication between the user of the information processing device itself and the virtual character corresponding to the user of the other information processing device or a history of communication between the virtual character corresponding to the user of the information processing device itself and the user of the other information processing device by the communication processing unit, the first and second indications being arranged in the identical chronological order.

13. The information processing device according to claim 12, wherein
the communication processing unit realizes the communication in a state in which a communication screen as a screen for the communication is displayed on the display unit, and
the display control unit displays, on the display unit, a history display screen different from the communication screen, and displays both of the first and second indications on the history display screen with the first and second indications being arranged in the identical chronological order.

14. The information processing device according to claim 13, wherein
the communication processing unit displays, on the communication screen,
a facial image of the user of the other information processing device or the virtual character corresponding to the user of the other information processing device as a communication partner,
a single message sent from the user of the other information processing device or the virtual character corresponding to the user of the other information processing device, and
a single message sent to the user of the other information processing device or the virtual character corresponding to the user of the other information processing device.

15. The information processing device according to claim 14, wherein
the communication processing unit further displays, on the communication screen, a feeling expression assigned to each message displayed on the communication screen.

16. The information processing device according to claim 15, wherein
on the communication screen, the communication processing unit displays, as the feeling expression assigned to the message sent from the user of the other information processing device or the virtual character corresponding to the user of the other information processing device, a facial image of the user of the other information processing device or the virtual character corresponding to the user of the other information processing device, the facial image expressing the feeling corresponding to the message.

17. The information processing device according to claim 15, wherein
at an optional position on the communication screen, the communication processing unit displays, as the feeling expression assigned to the message sent from the user of the other information processing device or the virtual character corresponding to the user of the other information processing device, a staging image expressing the feeling corresponding to the message.

18. The information processing device according to claim 15, wherein
in a region of the communication screen where the facial image of the user of the other information processing device or the virtual character corresponding to the user of the other information processing device is displayed, the communication processing unit displays, as the feeling expression assigned to the message sent from the user of the information processing device itself or the virtual character corresponding to the user of the information processing device itself, a staging image expressing the feeling corresponding to the message.

19. An information processing method comprising:
displaying, on a display unit, both of a first indication of a history of communication between users and a second indication of a history of communication between one of the users and a virtual character configured to respond on behalf of another one of the users, the first and second indications being arranged in an identical chronological order.

20. A program for causing a computer to function as a display control unit configured to display, on a display unit, both of a first indication of a history of communication between users and a second indication of a history of communication between one of the users and a virtual character configured to respond on behalf of another one of the users, the first and second indications being arranged in an identical chronological order.
